# EUROPEAN PATENT APPLICATION

(11) **EP 0 825 751 A2**
(43) Date of publication of application: **25.02.1998**
(21) Application number: 97113972.0
(22) Date of filing: 13.08.1997
(51) Int. Cl.: H04M 1/72, H04M 1/57, H04M 1/66

(54) **Control of a telecommunication receiving terminal by a transmitting terminal before the receiver terminal goes off the hook**

(30) Priority: 19.08.1996 JP 217331/96; 20.09.1996 JP 250198/96; 14.02.1997 JP 47143/97; 10.03.1997 JP 55183/97; 11.03.1997 JP 56111/97; 17.03.1997 JP 62729/97
(71) Applicant: CASIO COMPUTER CO., LTD., Shinjuku-ku, Tokyo 163-02 (JP)
(72) Inventor: Nakamura, Kouji, c/o Casio Computer Co., Ltd., 3-chome, Hamura-shi, Tokyo (JP); Ishida, Shinjiro, c/o Casio Computer Co., Ltd., 3-chome, Hamura-shi, Tokyo (JP); Hirose, Kazuo, c/o Casio Computer Co., Ltd., 3-chome, Hamura-shi, Tokyo (JP); Furuta, Shinichi, c/o Casio Computer Co., Ltd., 3-chome, Hamura-shi, Tokyo (JP); Nojima, Osamu, c/o Casio Computer Co., Ltd., 3-chome, Hamura-shi, Tokyo (JP); Hidaka, Shinji, c/o Casio Computer Co., Ltd., 3-chome, Hamura-shi, Tokyo (JP); Kuriyama, Yuji, c/o Casio Computer Co., Ltd., 3-chome, Hamura-shi, Tokyo (JP); Negishi, Hiroaki, c/o Casio Computer Co., Ltd., 3-chome, Hamura-shi, Tokyo (JP); Nozaki, Masataka, c/o Casio Computer Co., Ltd., 3-chome, Hamura-shi, Tokyo (JP); Murakami, Minoru, c/o Casio Computer Co., Ltd., 3-chome, Hamura-shi, Tokyo (JP)
(74) Representative: Grünecker, Kinkeldey, Stockmair & Schwanhäusser Anwaltssozietät

(57) **Abstract**

A sender portable terminal (14) sends an initial call signal to a receiver portable terminal (14). The initial call signal includes a control information which includes a predetermined processing signal added to a receiver subaddress, and predetermined data added to a sender subaddress. Thus, the sent predetermined data controls the receiver portable terminal (14) on the basis of the control information sent along with the predetermined data from the sender portable terminal (14).

## Description

The present invention relates to communication system and communication terminals typified, for example, by portable PHS (Personal Handyphone Systems) employed in Japan, and communicating systems via which the communication terminals communicate with each other.

Recently, portable communication terminals are put to practical use as communication systems. PHS (Personal Handyphone System) employed in Japan is available as one of the communication systems. In such PHS, one PHS terminal is connected to another PHS terminal via their respective base stations connected to the communication network,. Such base stations include public base stations, and personal base stations which are connected to subscriber lines. Thus, one PHS terminal can communicated with another PHS terminal outdoors via their respective personal base stations or indoors via their respective personal base stations. In addition, if one and another PHS terminal having a system code of the same personal base station are close to each other (for example, in a range of about 100-200 meters), they can directly make peer-to-peer communication with each other like transceivers without using their base stations as intermediaries. When a terminal calls another terminal, a sender terminal sends a call setup message to another terminal. In a call setup message is included a sender address (a caller ID), a sender subaddress, a receiver address (a dialed telephone number) and a receiver subaddress. A sender subaddress identifies a sub-address of a sender address and a receiver subaddress identifies a sub-address of a receiver address. A address and a subaddress are prepared as information items used in call control so as to provide a convenient service in which the receiver can recognize who is the sender before the receiver goes off the hook by knowing the subaddress of the sender's terminal and displaying information (sender telephone number/name) on the sender terminal at the receiver terminal.

The conventional sender PHS terminal is such that it informs the receiver terminal of character information such as the sender's telephone number/name before the receiver terminal goes off the hook, and the sender terminal cannot yet control the receiver terminal before same goes off the hook.

It is therefore a first object of the present invention to provide a communication terminal and system which the sender terminal is capable of controlling the receiver terminal.

A second object of the present invention is to provide a communication system and a communication terminal which is capable of calling a particular communication terminal even when its extension number is unknown.

A third object of the present invention is to provide a communication system and communication terminals in which the communication terminals are capable of representing their intentions between them before telephonic communication starts.

A fourth object of the present invention is to provide a communication terminal which is capable of expressing the degree of urgency of a sent business matter and a sender's feeling depending on a sounding status of a ring tone.

A fifth object of the present invention is to provide a communication system and a digital communication terminal which are capable of realizing a message reporting function and a sender number reporting function even between different communication systems.

A sixth object of the present invention is to provide a communication terminal, system and method by which the user is able to know a communication charge which will cost if telephonic communication is made before the telephonic communication is made.
FIG. 1 outlines the structure of a communication system applied to a first embodiment of the present invention;
FIG. 2 outlines the structure of a portable terminal used in the communication system applied to the first embodiment;
FIG. 3 is a flow chart of a method of entraining data and control information on a sender subaddress and receiver subaddress in the first embodiment;
FIG. 4 is a flow chart of an incoming initial call signal receiving process performed in a receiver portable terminal in the first embodiment;
FIG. 5 is a flow chart of a part of the receiving process to be continued;
FIG. 6 is a flow chart of transceiver information recording performed in the first embodiment;
FIG. 7 is a flow chart of retrieval of a received call history by checking in the first embodiment;
FIG. 8 illustrates one example of telephone directory data used in a second embodiment of the present invention;
FIG. 9 illustrates a table which contains answer message numbers and answer message contents in correspondence relationship, to be used in the second embodiment;
FIG. 10 is a flow chart of control of an answertelephone function in the second embodiment;
FIG. 11 is a flow chart of an initial call signal sending process performed by a sender in a third embodiment of the present invention;
FIG. 12 is a flow chart of an initial call signal receiving process performed in the receiver in the third embodiment;
FIG. 13 illustrates a call setup message, a call (or alerting) message and a response message;
FIG. 14 is a block diagram of a communication system as a fourth embodiment of the invention;
FIG. 15 is a block diagram of a personal base station of the fourth embodiment;
FIG. 16 illustrates portable terminal information stored in the base station of the fourth embodiment;
FIG. 17 illustrates telephone number information stored in a sender portable terminal PS:
FIG. 18 is a flow chart of the operations of a sender terminal PS or another telephone in the communication system of the fourth embodiment;
FIG. 19 is a flow chart of the operation of a receiver base station 3;
FIG. 20 illustrates a sending/receiving operation of the communication system of the fourth embodiment;
FIG. 21 illustrates portable terminal information and answer message information stored in a base station of a fifth embodiment of the present invention;
FIG. 22 illustrates recorded information (containing a message) stored in the personal base station of the fifth embodiment;
FIG. 23 is a flow chart of the operation of the base station set in the communication system answertelephone of the fifth embodiment;
FIG. 24 is a flow chart of the operation of the base station performed when the recorded message is reproduced;
FIG. 25 is a block diagram of a radio communication system which a sixth embodiment of the present invention is applied;
FIG. 26 is a block diagram of portable terminal 14;
FIG. 27 is a flow chart of the operation of the sixth embodiment;
FIG. 28 is a flow chart of the operation of a modification of the sixth embodiment;
FIG. 29 illustrates the structure of musical note data which involves a seventh embodiment of the present invention;
FIG. 30 illustrates an arrangement of a musical note database;
FIG. 31 is a flow chart of an initial call signal sending process performed in the seventh embodiment;
FIG. 32 is a flow chart of a initial call signal receiving process performed in the seventh embodiment and corresponding to the initial call signal sending process;
FIG. 33 is a block diagram of a portable terminal which is a digital communication terminal as an eighth embodiment of the present invention;
FIG. 34 is a flow chart of the operation of the digital communication terminal performed when an initial call signal sending operation is performed;
FIG. 35 is a flow chart of to be continued to FIG. 34;
FIG. 36 is a flow chart of the operation of the digital communication terminal performed when a call signal corresponding to the initial call signal is received;
FIG. 37 is a flow chart to be continued to the flow chart of FIG. 36;
FIG. 38 is a block diagram of a communication system of a ninth embodiment of the present invention;

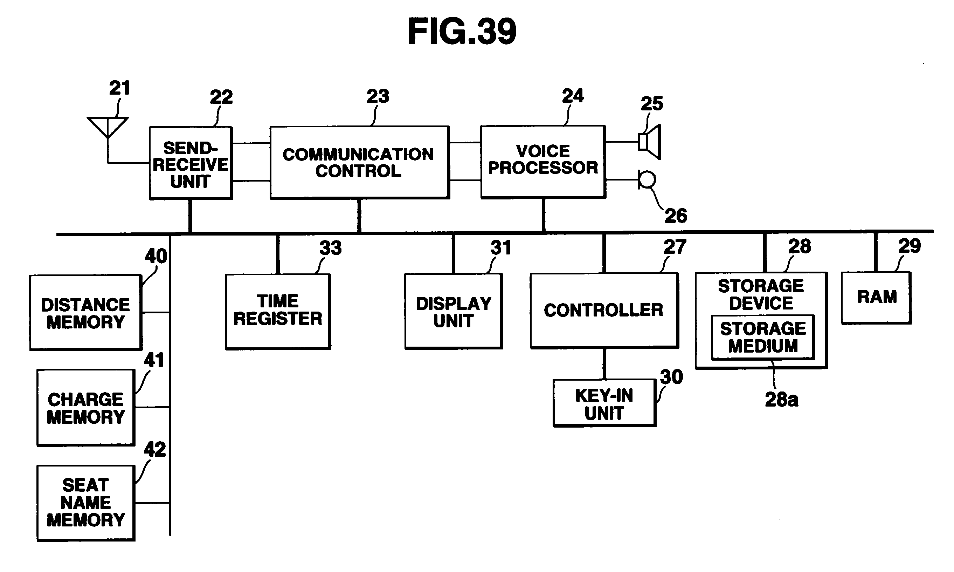

FIG. 39 is a block diagram of a portable terminal of the ninth embodiment;
FIGS. 40A-40D are a plan view, a left side view, a front view, and a right side view, respectively;
FIG. 41 illustrates a data arrangement of distance information stored in a distance memory 40;
FIG. 42 illustrates distances, additional charges per minute, and corresponding basic charges stored in a charge memory 41;
FIG. 43 illustrates a data arrangement of seat name information stored in a seat name memory 42;
FIG. 44 is a flow chart of a first operation of a portable terminal;
FIG. 45 is a flow chart of a second operation of the portable terminal;
FIG. 46 is a block diagram of a communication system of a tenth embodiment of the present invention;
FIG. 47 illustrates a data arrangement of a database provided in a network control station;
FIG.48 illustrates call control messages;
FIG. 49 is a flow chart of a first operation of a portable terminal of the tenth embodiment;
FIG. 50 is a flow chart of a second operation of the portable terminal of the tenth embodiment;
FIG. 51 illustrates an arrangement of CS-IDs as positional information for portable terminals controlled by a public base station 13;
FIG. 52 is a block diagram of a communication system of an eleventh embodiment of the present invention;
FIG. 53 illustrates the arrangement of a database 310 controlled by a network control station 1;
FIG. 54 is a flow chart of the operations of a sender portable terminal PS1 and the public base station 13;
FIG. 55 is a flow chart of the operation of the network control station;
FIG. 56 illustrates the whole operation of the communication system;
FIG. 57 is a block diagram of a communication system as a twelfth embodiment of the present invention;
FIG. 58 illustrates the details of contract information stored in portable terminals PS1 and PS2;
FIG. 59 illustrates the details of contract information stored in the network control station 1;
FIG. 60 is a flow chart of the operations of the sender terminal PS1 and the public base station 13;
FIG. 61 is a flow chart of the operation of the network control station 1;
FIG. 62 illustrates the operation of the communication system in communication; and
FIG. 63 illustrates the operation of the communication system performed when contract information is stored/renewed.

Generally, when a telephonic communication is made via base stations and a communication network between a sender and a receiver PHS terminal, the sender terminal starts a call signal sending process, which substantially includes the following steps:
1. When a user of the sender PHS terminal dials a receiver telephone number and depresses a call key, the sender terminal sends the base station therefor a link channel establishing request which requests allocation of a communication channel to the sender terminal, using a control channel used at that time by the sender terminal;
2. When the sender terminal and the base station shift to the communication channel, the sender terminal sends a call setup message via the base station therefor to the network;
3. Thereafter, the sender terminal and the base station communicate a radio control signal and a movement management signal therefor between the sender and the base station therefor;
4. In the meanwhile, when the sender terminal receives a call (or alerting) message, which indicates that the network is now calling the receiver terminal via the base station therefor, from the network via the base station in the meantime, the sender terminal then receives a ring back tone from the network; and
5. When the receiver terminal goes off the hook and the sender terminal receives an acknowledge message from the network, telephonic communication starts between the sender and receiver terminals.

On the other hand, the receiver terminal starts a call signal receiving process in response to an incoming call message due to the call signal sending process (more particularly, the link channel establishing request) from the sender terminal. The call signal receiving process substantially includes the following steps:
1. When the receiver receives the incoming call message from the network via the base station therefor, using a control channel used at present, the receiver requests the base station therefor to allocate a communication channel to the receiver terminal;
2. When the receiver terminal and the base station therefor shift to the communication channel, the receiver terminal answers the incoming call message;
3. In response to this answering operation of the receiver terminal, the receiver terminal receives a call setup message from the network via the base station therefor;
4. Thereafter, the receiver terminal and the base station communicate a radio control signal and a movement control signal therebetween; and
5. The receiver terminal then operate a ringer, sends a call (alerting) message to the base station, goes off the hook to send a response message to the base station therefor, and then shifts to telephonic communication.

The inventive process is performed between the transmission/receipt of the call setup message and the transmission/receipt of the call (alerting) message in the signal transmission and receipt starting processes.

The expression "an initial call signal sending process" used in the description of embodiments of the present invention corresponds to the item 1. of the call signal sending process described above.

The embodiments of the present invention will be described next with reference to the accompanying drawings.

The above-mentioned first object is achieved by first-third ones of the embodiments.

### (First Embodiment)

The present embodiment will be described, using Personal Handyphone system (PHS) and PHS terminals employed in Japan.

### 1-1) Structure:

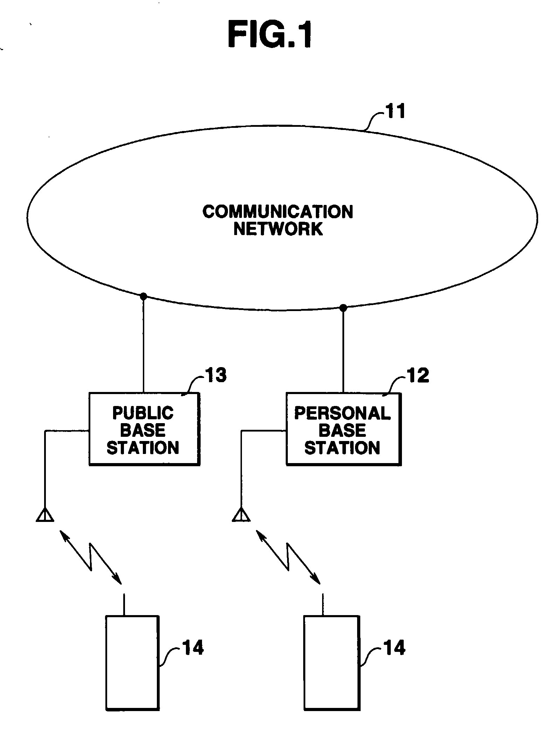

FIG. 1 outlines a radio communication system to which the present invention is applied. In FIG. 1, reference numeral 11 denotes a communication network to which a personal base station 12 provided in a home area and a public base station 13 provided in a public area are connected. Portable PHS terminals (refer to as portable terminal) 14 are connected by radio to both the base stations (although not shown in FIG. 1, there are many personal base stations 12 and public base stations 13 and corresponding portable terminals 14).

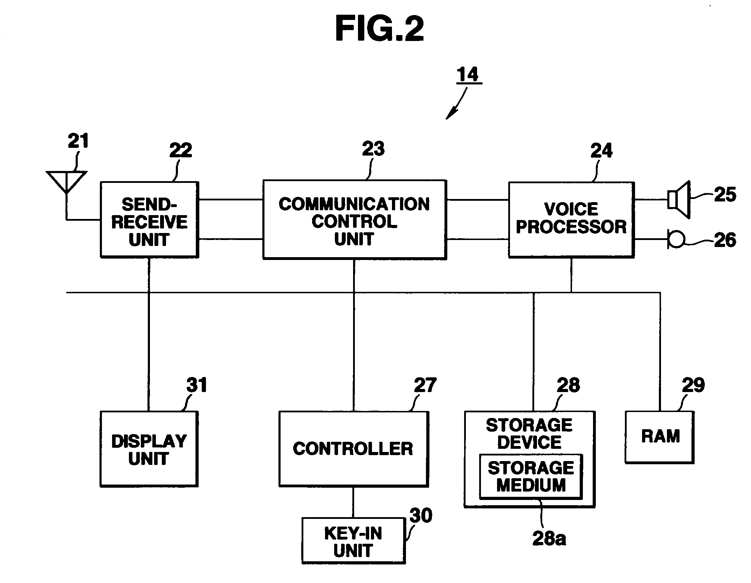

FIG. 2 outlines the structure of a portable terminal 14 used in such radio communication system. In FIG. 2, reference numeral 21 denotes an antenna to which a send-receive unit 22 is connected. The send-receive unit 22 is composed of a frequency converter and a modem (none of which are shown). In a receipt section of the frequency converter, a signal is received from the antenna 21 via an antenna switch (not shown) which switches between transmission and receipt, and mixed with a local oscillator signal having a predetermined frequency output from a PLL synthesizer (not shown) to change from a signal of frequencies in the vicinity of 1.9 GHz to an IF (Intermediate Frequency) signal having frequencies in the vicinity of 1 MHz. In a transmission section of the frequency converter, a π/4 shift QPSK (Quadriphase Phase Shift Keying) modulated signal fed from the modem is mixed with a local oscillatory signal having a predetermined frequency output from the PLL synthesizer to provide a signal of frequencies in the vicinity of 1.9 GHz, which is then radiated from the antenna 21 via the antenna switch.

In a receipt section of the modem, the IF signal from the frequency converter is demodulated, and IQ (Inphase and Quadrature) data is separated and transferred in the form of a data string to the communication control unit 23. In the transmission section of the modem, IQ data is produced from the data transferred from the communication control unit 23, subjected to a π/4 shift QPSK modulation, and then outputted to the frequency converter.

The send-receive unit 22 is connected to the communication control unit 23 and a voice processor 24, in this order, and the voice processor 24 is, in turn, connected to a speaker 25 and a microphone 26.

The communication control unit 23 performs a frame synchronization/slot data extraction/insertion process in which, in a receipt section of the communication control unit 23, picks up data for one slot at a predetermined timing from data fed by the modem of the send-receive unit 22, extracts a unique word (sync signal) from the data to take the frame synchronization and descrambles the control data and voice data, feeds the control data to a controller 27 to be described later, and transfers the voice data to the voice processor 24. The transmission section of the communication unit 23 adds control data to voice data fed by the voice processor 24, scrambles the voice data and control data, adds a unique word to the resulting data to provide send data for one slot, inserts the send data in a predetermined slot in a frame concerned at a predetermined timing, and sends it to the modem of the send-receive unit 22.

The voice processor 24 is composed of a speech codec and a PCM (Pulse Code Modulation) codec (either of which is not shown). The speech codec compresses/expands digital data. A receipt section of the voice processor 24 decodes and expands an ADPCM (Adaptive Differential Pulse Code Modulation) voice signal (4 bits x 8 KHz = 32 Kbps) fed from the communication control unit 23 to provide a PCM voice signal (8 bits x 8 KHz = 64 Kbps), which is then outputted to the PCM codec. A transmission section of the voice processor 24 encodes and compresses a PCM voice signal fed from the PCM codec to provide an ADPCM voice signal, which is then outputted to the communication control unit 23.

The PCM codec performs an analog-to-digital conversion. A receipt section of the PCM codec performs a digital-to-analog conversion on the PCM voice signal fed from the speech codec and sends the resulting analog voice signal to the speaker 25. A transmission section of the PCM codec performs an analog-to-digital conversion on the analog voice signal inputted by the microphone 26 and outputs the resulting PCM voice signal to the speech codec.

The send-receive unit 22, communication control unit 23, and voice processor 24 are connected to the controller 27 which is, in turn, connected to a storage device 28, RAM (Random Access Memory) 29, key-in unit 30 and display unit 31.

The storage device 28 includes a storage medium 28a installed fixedly or removably therein and containing programs, data, etc. The storage medium 28a is composed of a magnetic storage medium (hard disc or floppy disc), an optical storage medium (optical disc) or a semiconductor memory (ROM). The programs, data, etc., recorded in the storage medium 28a may be received from a second device via communication lines and stored in the storage medium 28a. Alternatively, the storage device 28 which includes the storage medium 28a may be installed on the side of the second device so that the programs, data, etc., stored in the storage medium 28a are used via communication lines. The RAM 29 temporarily stores data handled under the control of the controller 27. The key-in unit 30 is used to enter data to set the respective functions into the controller 27. The display unit 31 displays input data for and the result of the respective control operations.

### 1-2) Operation:

The operation of the first embodiment will be described next. When the sender portable terminal 14 calls a receiver portable terminal 14, a (call) setup message is sent via the public base station 13, the communication network 11 and the personal base station 12 to the receiver portable terminal 14, where an incoming call occurs. The receiver portable terminal 14 responds to this call to start communication. In this case, by adding control information which controls the receiver portable terminal 14 to the incoming call signal for the receiver portable terminal 14, the sender portable terminal 14 is capable of controlling the receiver portable terminal 14.

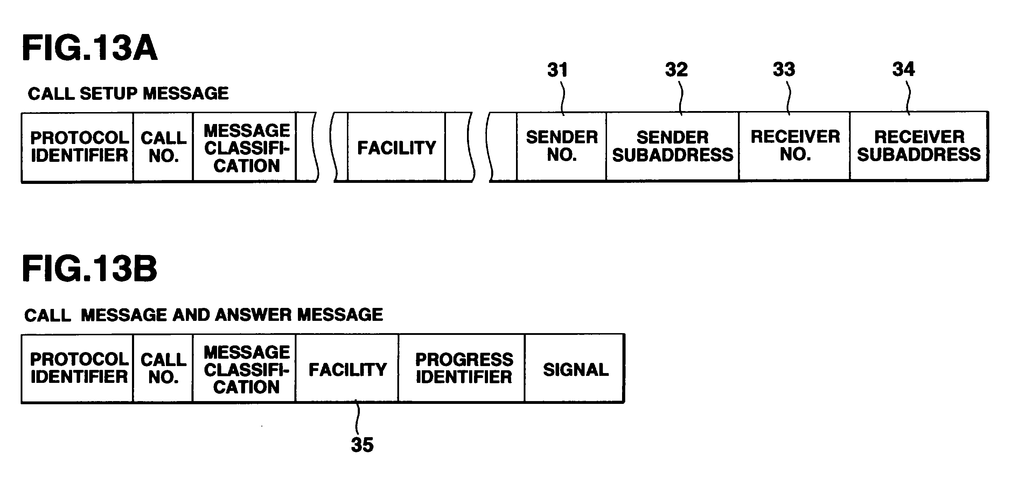

As shown in FIG. 13A, the setup message is composed of at least a protocol identifier, a call number, a message classification, facility, a sender number 31, sender subaddress 32, a receiver number 33, and a receiver subaddress 34.

The control over the receiver portable terminal 14 includes "transceiver (peer-to-peer communication) information recording" which allows transceiver communication between terminals without using the communication network, "hide sender subaddress information" which controls display in the receiver terminal 14 and which inhibits viewing information on the sender subaddress 32 without confirming the coincidence of passwords, "change an incoming ringing tone" which converts information on the sender subaddress 32 to ringing tone string data to change the incoming ringing tone at the receiver PHS terminal 14, and "classify/record sender subaddress information in a specified memory area" which stores the sender subaddress 32 information in a special-purpose area of a memory of the receiver portable terminal 14 from the sender portable terminal 14.

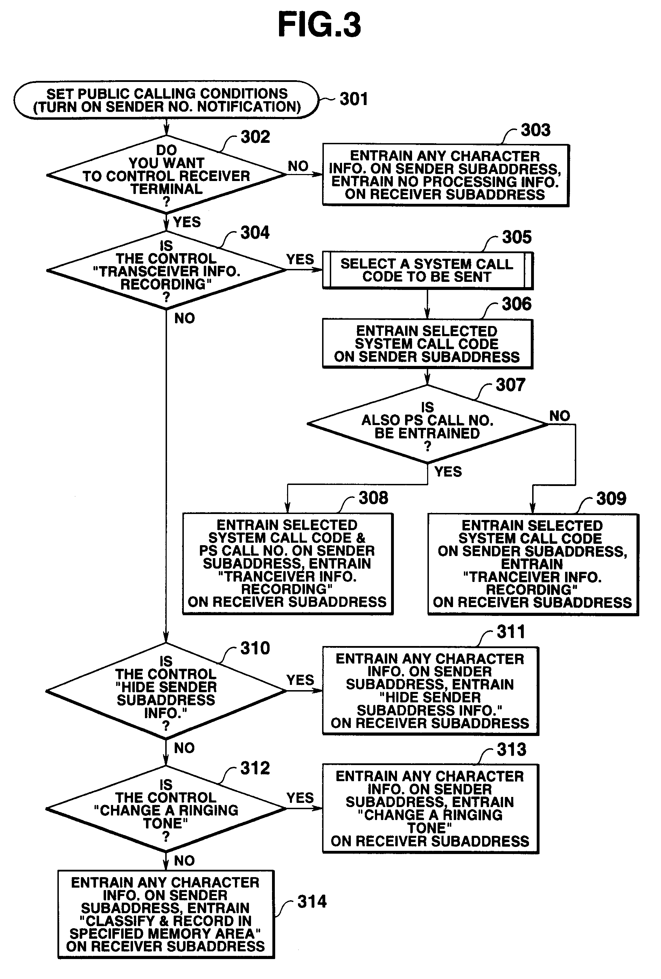

The operation of first embodiment of the present invention will be described hereinafter. Program which realizes each function as shown in the flowchart of FIGS. 3,4,5,6 and 7 is stored in said storage medium 28a in the form of program codes readable by controller 27.

FIG. 3 is a flow chart of a process for setting data and control information in the sender and receiver subaddress. In this case, at step 301, a sender number notification key (not shown) is turned on and the conditions of a public call are set. At step 302, it is determined whether the receiver portable terminal 14 should be controlled. If not, control passage to step 303, where any character information alone is entrained as data on the sender subaddress, but no processing information as the control information is entrained on the receiver subaddress. In this case, the receiver terminal will be notified of character information such as the telephone number and name of the sender portable terminal 14 as in the prior art.

When the receiver portable terminal should be controlled at step 302, it is first determined at step 304 whether the control includes "transceiver information recording". If so, control passes to step 305, which selects transceiver information recording data (system call code) to be sent to the receiver terminal. At step 306, a system call code of the selected transceiver information recording data is entrained on the sender subaddress. Then, at step 307, it is determined whether PS (portable terminal) call number in the selected transceiver information recording data should also be entrained on the sender subaddress. If so, at step 308 the system call code and the PS call number are entrained on the sender subaddress while the "transceiver information recording" processing signal (control code) is entrained on the receiver subaddress. If the PS call number is not entrained, the system call code is entrained on the sender subaddress and "transceiver information recording" processing signal is entrained on the receiver subaddress, at step 309.

If it is determined at step 304 that the control is not "transceiver information recording", control passes to step 310, which determines whether the control of the receiver portable terminal 14 is "hide sender subaddress information". If so, at step 311 any character information is entrained on the sender subaddress while "hide sender subaddress information" processing signal is entrained on the receiver subaddress. If not at step 310, control passes to step 312.

At step 312, it is determined whether the control of the receiver portable terminal 14 is "change a ringing tone". If so, at step 313 any character information is entrained on the sender subaddress while the "change a ringing tone" processing signal is entrained on the receiver subaddress. If not at step 312, control passes to step 314, which entrains any character information on the sender subaddress while entraining a "classify/enter in a specified memory area" processing signal on the receiver subaddress.

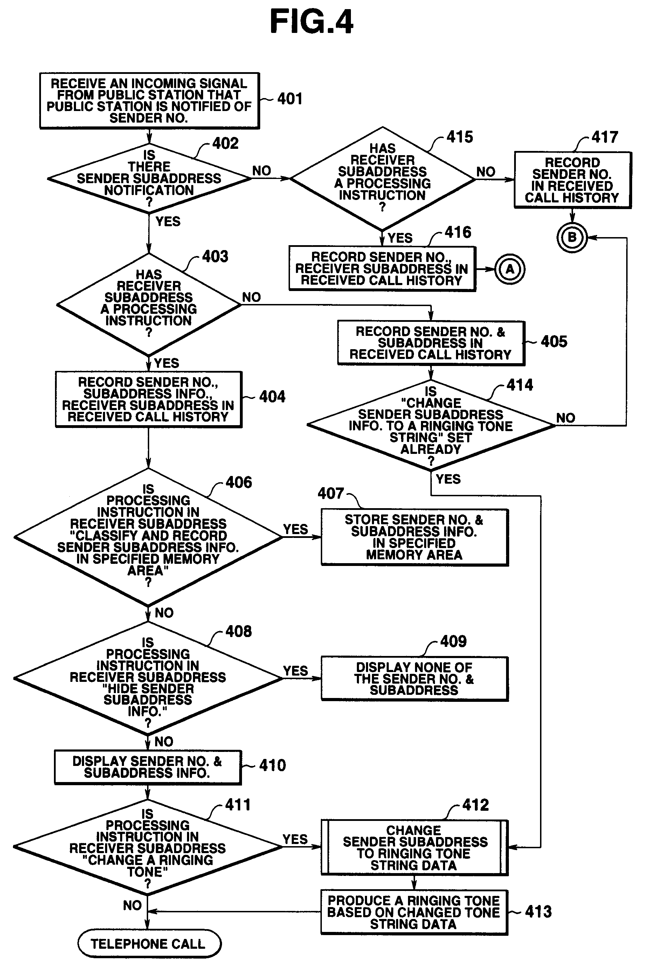

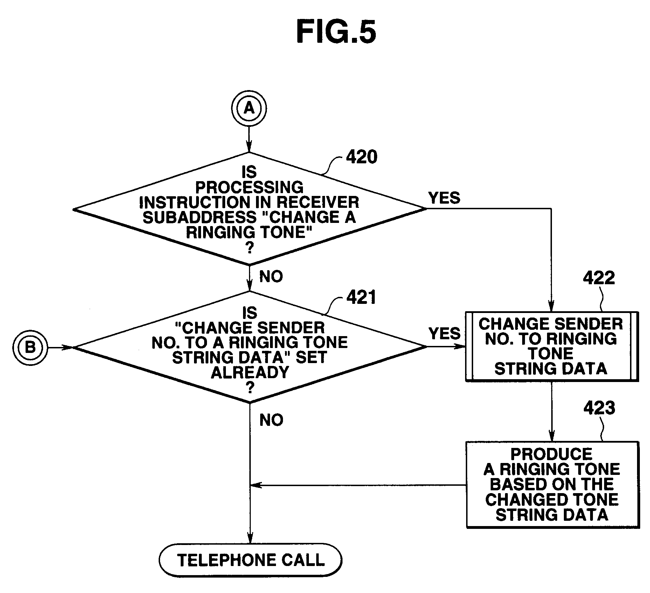

FIGS. 4 and 5 are a flow chart of a ringing tone signal receiving process performed in the receiver portable terminal 14. In this case, at step 401, when a public station signal is received that the public base station is notified of the sender number, it determined at step 402 whether the receiver portable terminal is notified of the sender subaddress (or whether there is any information in the sender subaddress). If so, it is determined at step 403 whether a processing instruction is contained as control information in the receiver subaddress.

If so at step 403, control passes to step 404, which records the sender number, sender subaddress information and receiver subaddress information in the received call history. If there is no processing instruction at step 403, step 405 records the sender number and sender subaddress information in the received call history.

When at step 404 the sender number, sender subaddress information and receiver subaddress information are recorded in the received call history, control passes to step 406, which determines whether the processing instruction in the receiver subaddress contains "classify/records in a specified memory area". If so, step 407 stores the sender number and sender subaddress information in the special-purpose area of the memory in the receiver portable terminal 14. If not at step 406, step 408 determines whether the processing instruction in the receiver subaddress contains "hide sender subaddress information". If so, step 409 does not display the sender number and the sender subaddress whereas if not at step 408, step 410 displays the sender number and sender subaddress information. In this case, either one of the sender number and sender subaddress information may be displayed.

Then, step 411 determines whether the processing instruction in the receiver subaddress contains "change a ringing tone". If so, step 412 converts the sender subaddress information to ringing tone string data in the receiver portable terminal 14, and step 413 produces a ringing tone in accordance with the converted tone string to thereby terminate the processing concerned. If not at step 411, a regular ringing tone is produced and control passes to subsequent regular received signal processing (or telephone call).

When there is no processing instruction in the receiver subaddress and step 405 records the sender number and sender subaddress information in the received call history, control passes to step 414 which determines whether the receiver portable terminal 14 has beforehand set therein a process "convert the sender subaddress information to ringing tone string data" even when the receiver subaddress contains no processing instruction. If so, step 412 converts the sender subaddress information to ringing tone string data. At step 413, a ringing tone is produced in accordance with the converted tone sting data and then control passes to the received signal processing (telephonic communication). If "convert the sender subaddress information to ringing tone string data" has not been set, control passes to step 421 which determines whether the receiver portable terminal 14 has beforehand set "convert the sender number to ringing tone string data". If so, control passes to step 422 which converts the sender number to the ringing tone string data, and step 423 produces a ringing tone in accordance with the converted tone string data. Control then passes to the received signal processing (telephone call). If not at step 421, a regular ringing tone is produced and control then passes to the received signal processing (telephone call).

If step 402 determines that the receiver is not notified of the sender subaddress, control passes to step 415, which determines whether there is any processing instruction in the receiver subaddress.

If so at step 415, step 416 records the sender number and the receiver subaddress information in the received call history. If not at step 415, step 417 records the sender number in the received call history.

After step 416 records the sender number and the sender subaddress information in the received call history, step 420 determines whether the processing instruction in the receiver subaddress contains "change a ringing tone". If so, step 422 converts the sender number information to ringing tone string data, step 423 produces a ringing tone in accordance with the converted tone string data. Control then passes to the subsequent telephone call. If not at step 420, control passes to step 421 which determines whether the receiver portable terminal 14 has beforehand set "convert the sender number to ringing tone string data even if the receiver subaddress contains no processing instruction. If so, control passes to step 422 which converts the sender number to a ringing tone string data and step 423 produces a ringing tone in accordance with the converted tone string data and then control passes to the received signal processing (telephone call). If not at step 421, a regular ringing tone is produced and control then passes to the received signal processing (telephone call).

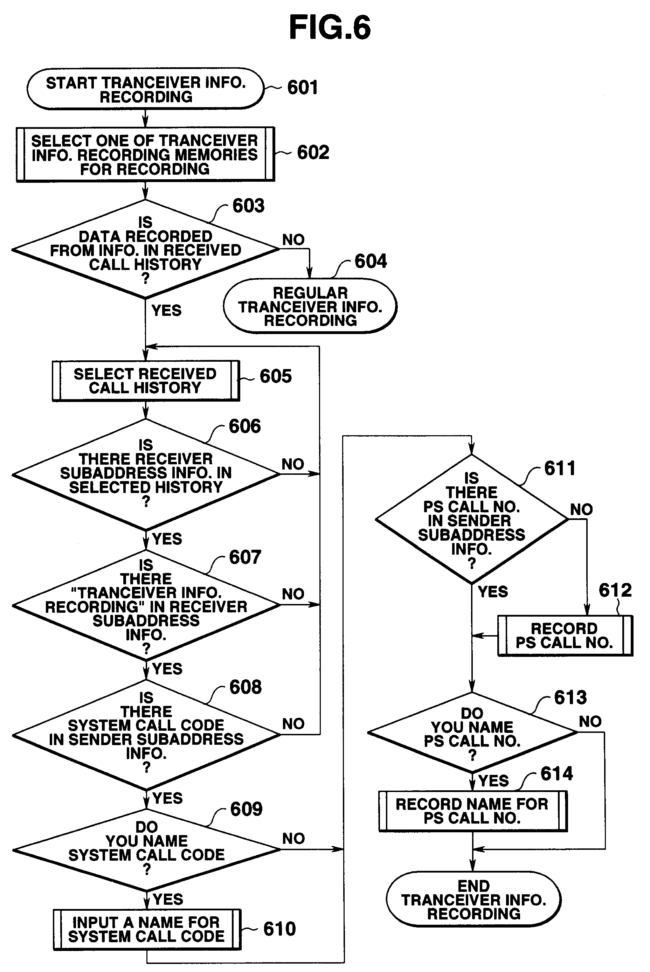

FIG. 6 is a flow chart of a transceiver information recording process. In this case, first at step 601, a transceiver information recording mode starts. At step 602, a memory to store data is selected from among a plurality of transceiver information recording memories. At step 603, it is determined whether the data to be entered in the memory should be selected from the received call history stored at step 404 of FIG. 4. If not, control passes to step 604, which involves regular transceiver information recording. If so at step 603, control passes to step 605 which selects a received call history to be cited. At step 606, it is determined whether there is receiver subaddress information in the selected received call history.

If so at step 606, control passes to step 607, which determines whether there is the processing instruction "transceiver information recording" in the receiver subaddress information in the selected received call history. If not at step 606, control returns to step 605, which again selects a received call history to be cited.

If so at step 607, control passes to step 608, which determines whether there is a system call code in the receiver subaddress information in the selected received call history. If not, control returns to step 605, which again selects a received call history to be cited.

If so at step 608, control passes to step 609, which determines whether a name (for example, of a group name) should be entered for the system call code. If not at step 608, control returns to step 605, which again selects a received call history to be cited.

If YES at step 609, control passes to step 610, which enters a name for the system call code, and control passes to step 611 whereas if not at step 609, control directly to step 611.

At step 611, it is determined whether there is a PS call number in the sender subaddress information in the selected received call history. If not, step 612 records the PS call number and control passes to step 613. If so at step 611, control directly passes to step 613.

At step 613, it is determined whether a name (for example, a user's name) should be entered/recorded for the PS call code number. If so, step 614 entered/records the name for the PS call code and terminates the transceiver information recording. If not at step 613, control directly terminates the recording processing.

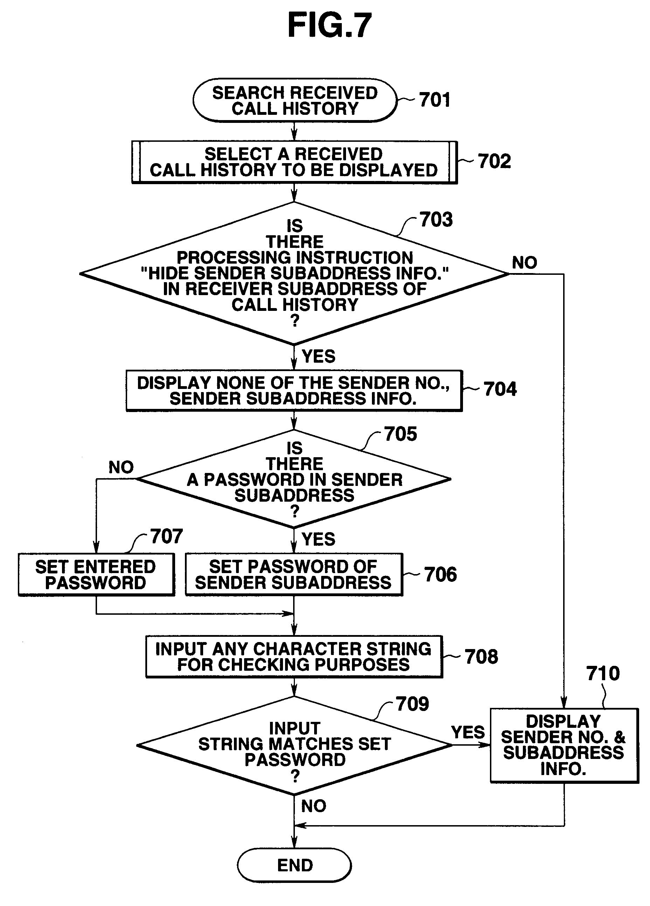

FIG. 7 is a flow chart of searching a received call history by check. In this case, first at step 701, a received call history retrieval mode starts. At step 702, a received call history to be displayed is selected from among a plurality of received call histories.

At step 703, it is determined whether there is a processing instruction "hide sender subaddress information" in the receiver subaddress information in the selected received call history. If not at step 703, step 710 displays the sender number and the sender subaddress information and terminates the appropriate processing. If so at step 703, control passes to step 704, which does not display the sender number and sender subaddress information in the received call history selected based on the processing instruction "hide sender subaddress information".

At step 705, it is determined whether a password is contained in the sender subaddress. If so, step 706 sets the password in the sender subaddress. Control then passes to step 708. If not at step 705, step 707 sets the preliminarily entered password and control then passes to step 708.

At step 708, any character string provided beforehand by the user is input for checking purposes. At step 709, it is determined whether the input character string matches the set password. If so, control passes to step 710 which displays the sender number and sender subaddress information and terminates the appropriate processing. If not at step 709, none of the sender number and sender subaddress information are displayed and the appropriate processing is terminated.

In summary, as described above, a predetermined processing signal as a control information to control the receiver portable terminal 14 is added to the receiver subaddress of an incoming signal to the receiver portable terminal 14 due to the calling operation of the sender portable terminal 14, predetermined data is also added to the sender subaddress of the incoming signal, and the resulting data is then sent to the receiver. Thus, the receiver portable terminal 14 is controlled by the data sent along with the control information on the basis of the control information from the sender portable terminal 14. Thus, the receiver portable terminal 14 is set as a terminal, which is capable of making transceiver communication, by the sender portable terminal 14, the display of the receiver portable terminal 14 is controlled, only the user who knows the password at the receiver portable terminal 14 can see the received data, the ringing tone in the receiver portable terminal 14 is controlled, data is stored by the sender portable terminal 14 into the memory of the receiver portable terminal 14---such various control operations are realized.

In order to release from the sender end the sender number and sender subaddress containing "hide sender subaddress information" stored in the receiver end, the sender end may entrain a release request on the receiver subaddress and send same to the receiver, and the receiver end may release "hide sender subaddress information" on the sender number contained in the call setup message.

While the data of the sender subaddress is changed to ringing tone data at the receiver end when the "change a ringing tone" is specified in the embodiment, the present invention is not limited to this particular case. For example, arrangement may be such that a plurality of ringing tones are allocated to a corresponding plurality of items of identification information which identify a corresponding plurality of senders in a terminal which can produce a corresponding plurality of ringing tones, the sender terminal adds a sender identification number to the sender subaddress in addition to the receiver number, adds "change a ringing tone" to the receiver subaddress, and sends those resulting data to the receiver, and the receiver terminal receives those data and produces a ringing tone allocated on the basis of the sender identification information in the sender subaddress.

### (Second Embodiment)

The second embodiment of the present invention involves control of an answertelephone function of the receiver portable terminal 14 due to control information from the sender portable terminal 14.

In this case, RAM 29 of portable terminal 14 of FIG. 2 contains telephone directory data, a self-made answer messages and a party's message. A storage medium 28a of a storage device 28 contains a pre-installed answer message intended for general callers. The remaining portions of the second embodiment are similar to corresponding ones of FIGS. 1 and 2, and further description thereof will be omitted.

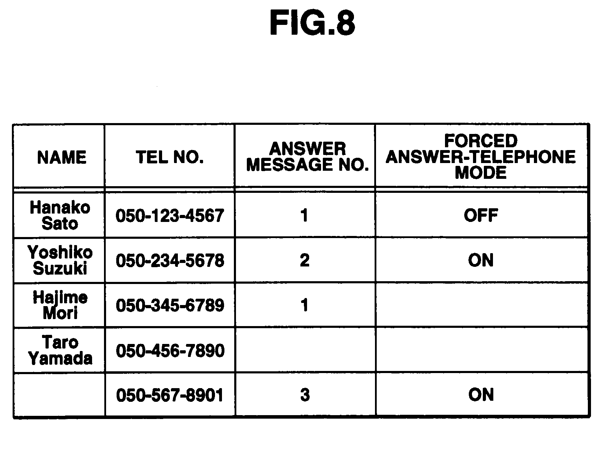

FIG. 8 illustrates one example of telephone directory data stored in RAM 29 which includes names, telephone numbers, answer message numbers, and forced answertelephone modes. In this case, the answer message numbers are those corresponding to the respective answer messages stored in another data area. The forced answertelephone modes contain "ON" for a caller whose call occurring in a normal mode (released from the answertelephone mode) is desired to be forcedly switched to an answertelephone mode, and "OFF" for a caller whose call occurring in the answertelephone mode is desired to be forcedly switched to the normal mode (normal receipt).

Usually, the columns for the forced answertelephone mode contain no data. When there is no entry in the telephone directory or there is no telephone number of a party, answer message number "0" and "there is no forced answertelephone mode" are set as default values.

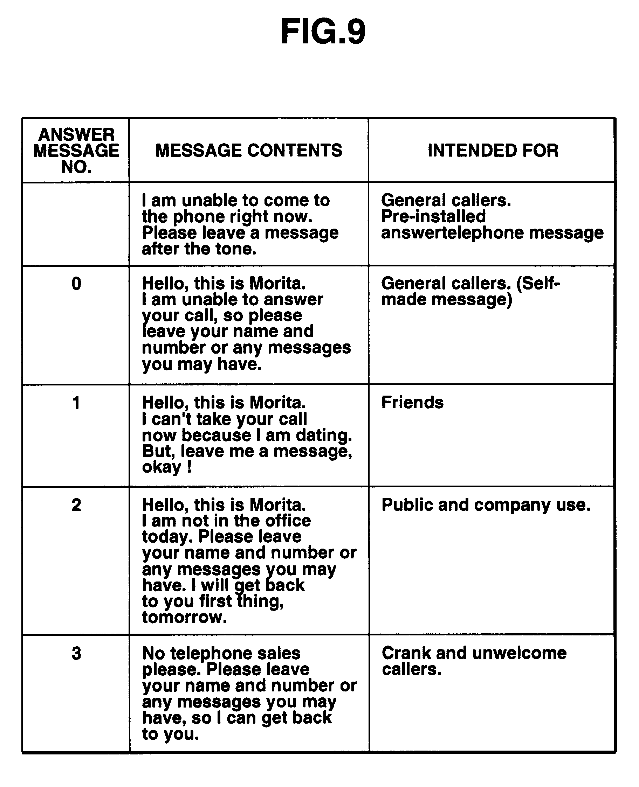

FIG. 9 shows a table which is provided separate from the telephone directory data, and contains answer message numbers, and answer message contents and parties in corresponding relationship. In this case, five messages are prepared for corresponding parties; that is, a pre-installed answer message contained in the telephone terminal and intended for general callers, a self-made answer message intended for general callers, an answer message intended for friends, an answer message for public and company use and an answer message intended for crank and unwelcome callers. The pre-installed answer message intended for general callers and the self-made answer message set at the answer message number "0" are selectable respectively. Since in this case the self-made answer message is selected, the number of answer messages used actually are 4 in all.

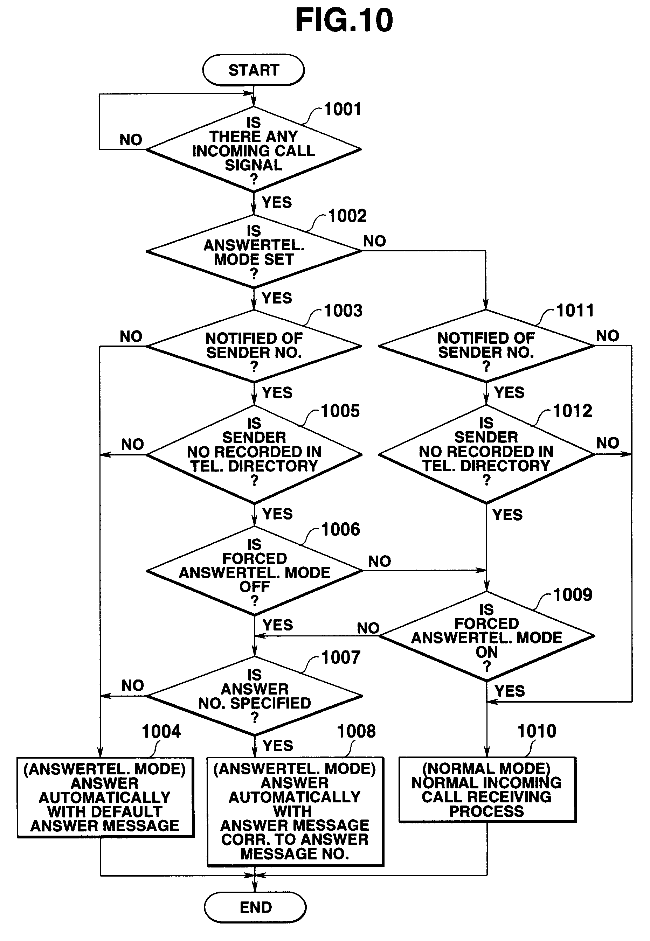

The operation of second embodiment of the present invention will be described hereinafter. Program which realizes each function as shown in the flowchart of FIGS. 10 is stored in said storage medium 28a in the form of program codes readable by controller 27.

FIG. 10 is a flow chart of the operation of such answertelephone function. First, at step 1001, when the receiver portable terminal 14 determines that there is an incoming call, control passes to step 1002 which determines whether the answer telephone mode is set in the receiver portable terminal 14.

If so at step 1002, control passes to step 1003 which determines the "sender number" is contained in the received signal from the sender portable terminal. If not, control passes to step 1004, which automatically answers, using the self-made answer message stored in RAM 29 to terminate the appropriate processing. If the received signal contains the sender number "at step 1003, step 1005 determines whether the "sender number" is entered in the telephone directory data of FIG. 8. If not, control passes to step 1004 which automatically answers, using the self-made answer message stored in RAM 29, and then terminates the appropriate processing. If the "sender number" is entered in the telephone directory data, step 1006 determines whether the forced answertelephone mode is off.

If so at step 1006, control passes to step 1007, which determines whether an answer message number is specified. If so, control passes to step 1008, which automatically answers, using an answer message corresponding to an answer message number of FIG. 9 and then terminates the appropriate processing. If not at step 1007, control passes to step 1004, which automatically answers, using the self-made answer message, and the appropriate processing is then terminated.

If not at step 1006, control passes to step 1009, which determines whether the forced answertelephone mode is on. If so, step 1010 performs received signal processing in the normal mode and the appropriate processing is then terminated.

If not at step 1002, control passes to step 1011, which determines whether "sender number" is contained in the signal from the sender portable terminal 14.

If not at step 1011, control passes to step 1010, which performs the normal incoming call signal receiving process in the normal mode and the appropriate processing then ends. If the "sender number" is contained at step 1011, step 1012 determines whether the "sender number" is entered in the telephone directory data of FIG. 8. If not, control passes to step 1010, which performs normal incoming call processing in the normal mode and the processing concerned ends.

If the "sender number" is entered in the telephone directory data at step 1012, control passes to step 1009, which determines whether the forced answertelephone mode is on. If so, step 1010 performs the normal incoming call receiving process in the normal mode and the appropriate process ends. If not at step 1009, the processes at steps 1007, and 1004 or 1008 are performed.

Thus, by adding control information to control the receiver portable terminal 14 to the incoming signal received by the receiver portable terminal 14 involved in the call from the sender portable terminal 14 and then sending the resulting signal to the receiver, the answertelephone mode/answer message of the receiver portable terminal 14 can be switched on the basis of the control information. In addition, the receiver portable terminal 14 may contain telephone directory data and a plurality of answer messages such as a pre-installed answer message, a self-made answer message intended for general callers, an answer message intend for friends, an answer message intended for public and company use, and an answer message intended for crank and unwelcome callers which can be selectively extracted for a sender portable terminal 14 and output to the sender portable terminal.

In addition to the sender number, identification information which identifies the sender may be entrained on the sender subaddress to thereby select the answertelephone mode or normal mode.

### (Third Embodiment)

The third embodiment has the function of sending back to the sender portable terminal 14 a message receipt acknowledge signal containing information to the effect that data sent from the sender portable terminal 14 has been sent correctly to the receiver portable terminal 14 by receiving the signal from the sender portable terminal 14.

In this case, a control code "automatic answer control" is entrained on a receiver subaddress of a call setup message of FIG. 13A to be sent from the sender portable terminal 14 to the receiver portable terminal 14. A message receipt acknowledge signal to be sent back to the sender portable terminal 14 in response to the control code "automatic answer control", or to request an additional service or to confirm some matters contains an information identifier entrained on a protocol profile of a facility 35 of a call (or alerting) message or answer message, as shown in FIG. 13B.

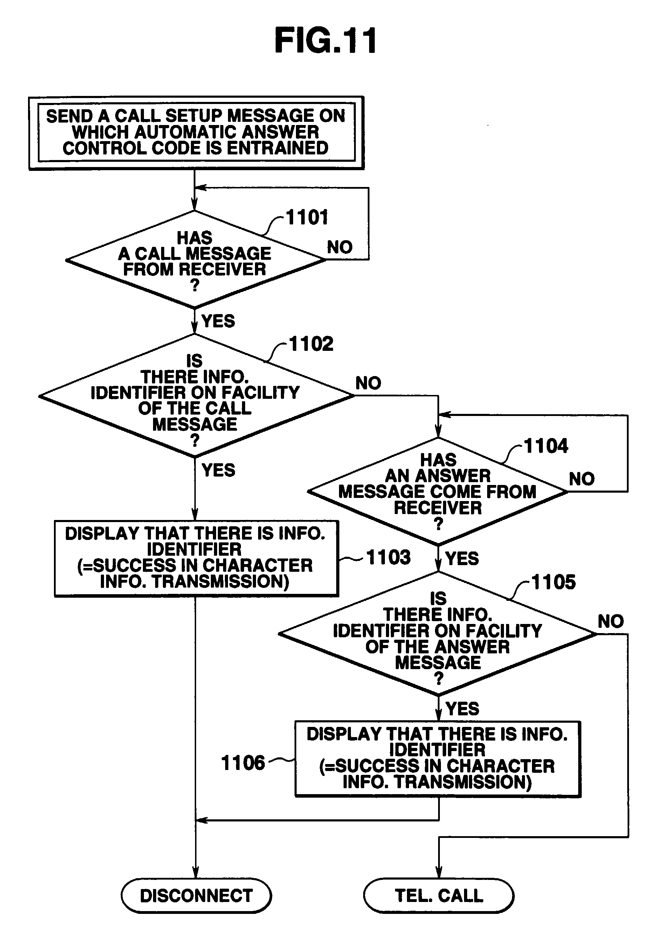

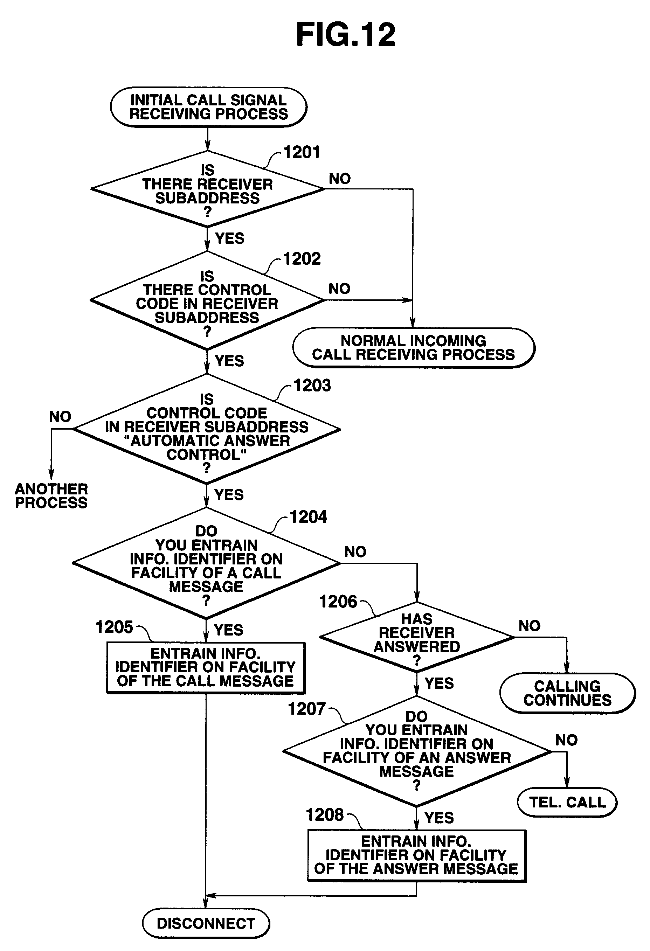

The operation of third embodiment of the present invention will be described hereinafter. Program which realizes each function as shown in the flowchart of FIGS. 11 and 12 is stored in said storage medium 28a in the form of program codes readable by controller 27.

FIG. 11 is a flow chart of an initial call signal sending process performed by the sender. In this case, when the sender sends the receiver a call (or alerting) setup message in which an automatic answer control code is entrained on the receiver subaddress of the setup message, step 1101 wait for a call (or alerting) message from the receiver end. When the sender end receives the call (alerting) message from the receiver, control passes to step 1102, which checks whether there is an information identifier from the receiver in a facility of the call (alerting) message from the receiver.

If so, step 1103 displays that there is the information identifier, informs the sender of this fact and disconnects the line automatically. If not at step 1102, control passes to step 1104, which waits for an answer from the receiver. If there is the answer from the receiver, control passes to step 1105, which determines whether there is an information identifier from the receiver on the facility of the answer message.

If so, control passes to step 1106, which displays there was an information identifier and informs the sender of this fact, and then disconnects the line automatically. If not at step 1105, control passes to a telephone call.

FIG. 12 is a flowchart of an initial call signal receiving process performed in the receiver. First, step 1201 determines whether there is information in the receiver subaddress when the incoming call signal is received. If not, the normal incoming call receiving process is performed. If so at step 1201, step 1202 checks whether a control code is contained in the receiver subaddress code.

If not at step 1202, the normal incoming call receiving process is performed. If so at step 1202, step 1203 checks whether "automatic answer control" is contained.

If not at step 1203, another processing is performed based on the control code of the receiver subaddress. If so at step 1203, control passes to step 1204, which determines whether an information identifier indicating that character information has been correctly sent should be entrained on the protocol profile of the facility of the call (or alerting) message.

If so at step 1204, control passes to step 1205, which entrains the information identifier on the call (or alerting) message and sends those data to the sender, and then disconnects the line automatically. If not at step 1204, control passes to step 1206, which waits for an answer from the receiver. In this case, there is no answer, the calling continues.

If so at step 1206, step 1207 determines whether an information identifier indicating that character information has been correctly sent to the receiver should be entrained on the protocol profile of the facility of the answer message.

If so at step 1206, step 1208 entrains the information identifier on the answer message and sends those data to the sender and then discounts the line automatically. If not at step 1207, control passes to a telephonic call.

Thus, as described above, since the control information "automatic answer control" to control the receiver portable terminal 14 is added to the receiver subaddress of the incoming call signal to the receiver portable terminal 14 due to the call from the sender portable terminal 14, and the information identifier indicating that the data has been sent correctly to the receiver is entrained on a message receipt acknowledgement sent back to the sender portable terminal 14 on the basis of the control information "automatic response control", the sender portable 14 is notified that the data has been correctly sent to the receiver portable terminal 14. Alternatively, on condition that there is an answer from the receiver portable terminal 14, the sender portable terminal 14 may be notified that the data is correctly sent to the receiver.

While in the first, second and third embodiments data and control information are entrained on the sender and receiver subaddresses, respectively, the data and the control information may reversibly be entrained on the receiver and sender subaddresses, respectively.

As described above, according to the first-third embodiments, a communication terminal and system is provided which is capable of performing various control operations on the receiver portable terminal can be realized on the basis of the control information sent by the sender portable terminal before the receiver portable terminal goes off the hook.

The above second object of the present invention will be achieved by the fourth and fifth embodiments of the present invention.

### (Fourth Embodiment)

### 4-1) Communication System:

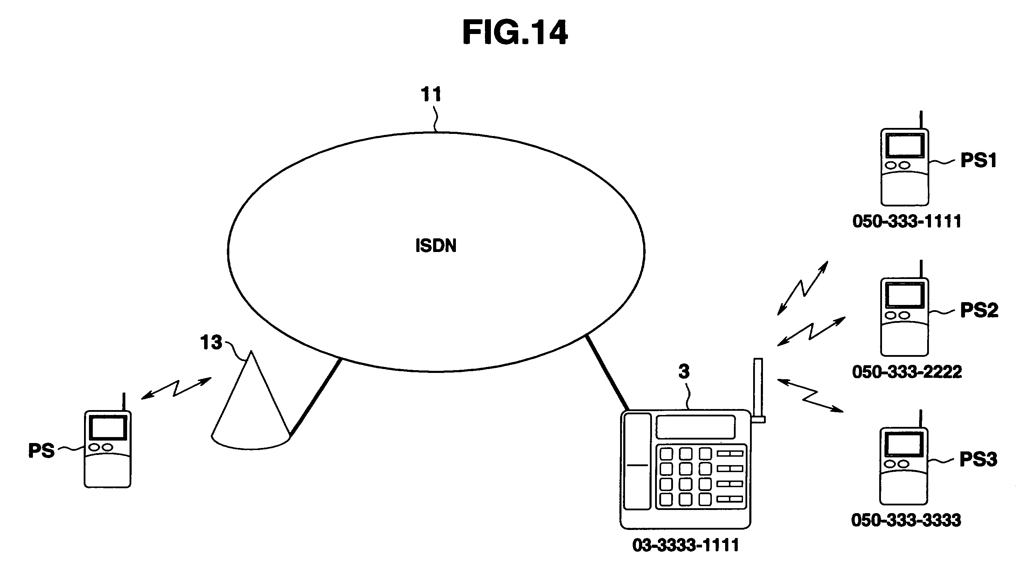

FIG. 14 is a block diagram of a communication system of the fourth embodiment. In FIG. 14, reference numeral 11 denotes an ISDN (Integrated Services Digital Network : hereinafter referred to also as a communication network) spread over the whole country. A plurality of public base stations 13 (only one of which is shown) are connected at predetermined intervals to the communication network 11. Each public base station 13 has a service area or radio reach which has a radius of several hundreds of meters, and is a relay station which connects a portable (PHS) terminal PS present in the service area by radio to the communication network 11. A personal base station 3 is connected to the communication network 11, and has a handset, dial keys and various function keys, like a general telephone set which is capable of making telephonic communication with other telephone sets. Portable terminals PS1, PS2, and PS3 are registered in the personal base station 3 and operate as portable terminals of the personal base station 3. The personal base station 3 makes radio communication with the portable terminals PS1, PS2 and PS3, connects a call from the outside to a portable terminal, and also connects calls from the respective portable terminals PS1-PS3 to the communication line network 11 so as to send a calling signal to a desired external telephone set. When there is an incoming call, the personal base station 3 recognizes the sender or caller, calls a portable terminal specified by the caller, and connects the portable terminal to the communication network 11.

Portable terminals PS1-PS3 or portable terminal PS are each carried about by a user and driven by a battery. They each have functions similar to those of a general telephone set having a liquid crystal display unit and dial keys. They makes radio communication with the personal base station 3 or a public base station 13 so as to be connected with the communication network 11. In other words, when the respective potrtable terminals PS1-PS3 are in the personal base station's service area, they each make radio communication with the personal base station 3 to be connected with the communication network 11 so that they can each communicate with another telephone set. When they are each out of the personal base station's service area, they each make radio communication with a nearby public base station 13 to be connected with the communication network 11 so that they can each communicate with another telephone set or personal base station 3. In the present embodiment, it is assumed that the portable terminal PS is a sender or caller while the personal base station 3 and its portable terminals PS1-PS3 are receivers.

In FIG. 14, it is assumed that the personal base station 3 is allocated a public telephone number (subscriber telephone number) "03-3333-1111" while the portable terminals PS1-PS3 are allocated public telephone numbers "050-333-1111", "050-333-2222" and "050-333-3333", respectively. In calling, the sender portable terminal PS (or telephone set) specifies a portable terminal to be called, with a public number (telephone number) allocated to that potable terminal. More specifically, at the sender portable terminal PS, the user enters the public number (telephone number) of the personal base station via which a desired portable terminal is to be called, and the public number (telephone number) of that portable terminal, or selects those public numbers from a predetermined database. Therefore, even when the user does not know the portable terminal number allocated to the portable terminal and set in the personal base station 3, the user can call that portable terminal as long as the user knows the public telephone number of that portable terminal. A method of specifying a portable terminal will be described later.

### 4-2) Structure of personal Base Station:

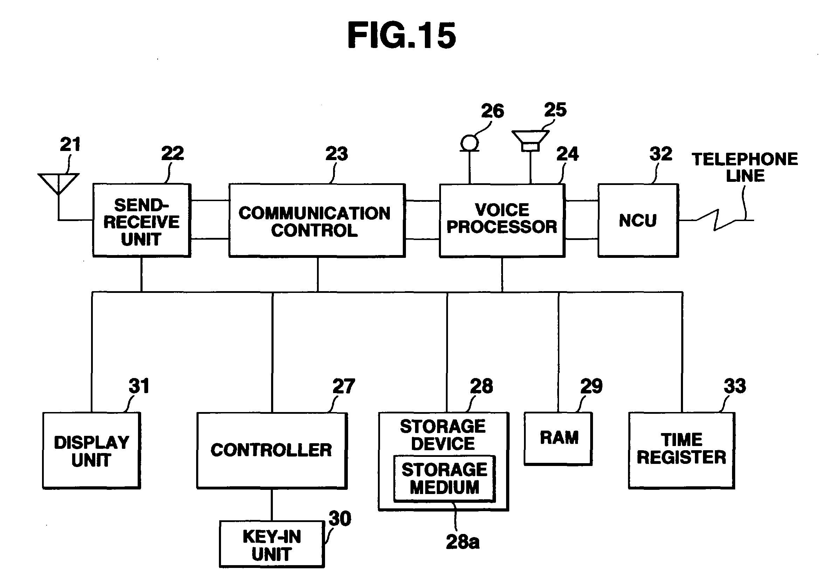

FIG. 15 is a block diagram of the personal base station of the fourth embodiment. The structure of the personal base station is substantially the same as that of FIG. 2. Thus, the structural points of the personal base station of FIG. 15 different from those of the terminal 14 of FIG. 2 will be mainly described next.

A NCU (Network Control Unit) 32 is connected to a telephone line via which the personal base station makes voice or data communication by sending/receiving a calling signal to and from the communication network 11 and providing connection control such as recovering and disconnecting the connection of the personal base station to and from the communication network.

A key-in unit 30 is provided with numeral keys for entering a telephone number of a receiver to be called, a switch to determine whether to go off the hook, and a volume switch to change the voice output. Outputs from these keys/switches are fed to the controller 27, which controls the whole personal base station in accordance with a predetermined program. Especially in this embodiment, when NCU 32 receives an incoming call via the telephone line, it checks whether the public telephone number of a portable terminal to be called is added to sender/receiver subaddresses of a setup message to be also described later. If so, it calls a portable terminal to which its public telephone number is allocated.

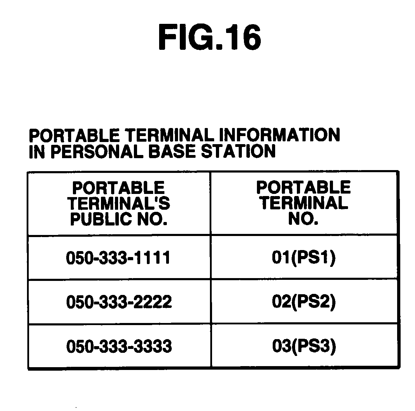

RAM 29 is used as a working area where data produced under control of the controller 27 is stored and further contains a telephone directory such as an address book which contains data such as the addresses and telephone numbers of telephone terminals to be called. As shown in FIG. 16, RAM 19 contains portable terminal numbers to identify the corresponding portable terminals, in correspondence to the "portable terminals' public numbers". As will be described later, the personal base station 3 gets a portable terminal number on the basis of its public number sent from the sender and calls that portable terminal, using the portable terminal number. In the illustrated embodiment, the public numbers of the portable terminals PS1, PS2 and PS3 are "050-333-1111", "050-333-2222" and "050-333-3333", respectively. Those data can be entered from the key-in unit 30, as requested.

The display 20 is composed of a liquid crystal display unit which displays various data such as operational modes, telephone numbers and communication time duration, and LED(light emitting diode)s which display the on/off states of the switches, and displays various data under control of the controller 27. A time register 33 records the present time and delivers data on the present time to the controller 27 at predetermined timings.

### 4-3) Call Setup message:

This setup message is the same as of FIG. 13A. In this embodiment, the sender portable terminal PS entrains the public number of the personal base station 3 on the receiver number, and entrains the public number of a portable terminal to be called, on the sender or receiver subaddress, and send those data to the receiver. Receiving those data, the receiver personal base station 3 gets the pubic number of the portable terminal entrained on the subaddress, refers to information of FIG. 16, gets the corresponding portable terminal number, and calls the portable terminal concerned.

### 4-4) Sender's Telephone Number Information:

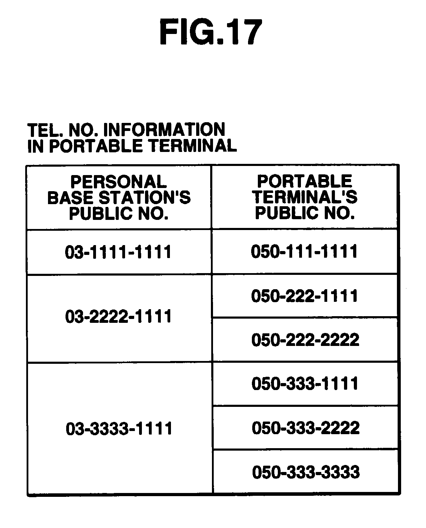

FIG. 17 illustrates telephone number information stored in the sender portable terminal PS. As described above, the sender portable terminal PS entrains the receiver personal base station's public number and a portable terminal's public number to be called on a (call) setup message and then sends the same to the receiver. In other words, the sender calls the particular portable terminal by specifying the personal base station's public number and the portable terminal's public number. At this time, while the personal base station's and portable terminal's pubic numbers may be entered by the dial keys, they are selected from telephone number information (or telephone directory) beforehand entered, in order to simplify the operation in the present embodiment. As shown in FIG. 17, the personal base station's public numbers and portable terminal's public numbers recorded in these personal base stations are stored in corresponding relationship in the sender terminal.

In the illustrated example of FIG. 17, a personal base station having a public number "03-1111-1111" corresponds to a single portable terminal having a public number "050-111-1111"; a personal base station having a public number "03-2222-1111" corresponds to two portable terminals having public number"050-222-1111" and "050-222-2222"; and a personal base station having a public number "03-3333-1111" corresponds to three portable terminals having public numbers "050-333-1111", "050-333-2222", and "050-333-3333". In sending an initial call signal, the user of the sender is required to select a personal base station's public number, and then select a portable terminal's public number corresponding to the personal base station. In the selection of the public numbers, the user enters or selects the personal base station's public number, displays the portable terminal's public numbers, and selects one from among those displayed numbers. Those numbers may be linked with corresponding names.

### 4-5) Operation:

The operations of the portable terminal PS and the personal base station 3 of the fourth embodiment (an initial call signal sending/receiving operations) will be described next. The operations of the respective elements involved in the telephonic communication are the same as those performed in the general telephonic communication and their description will be omitted.

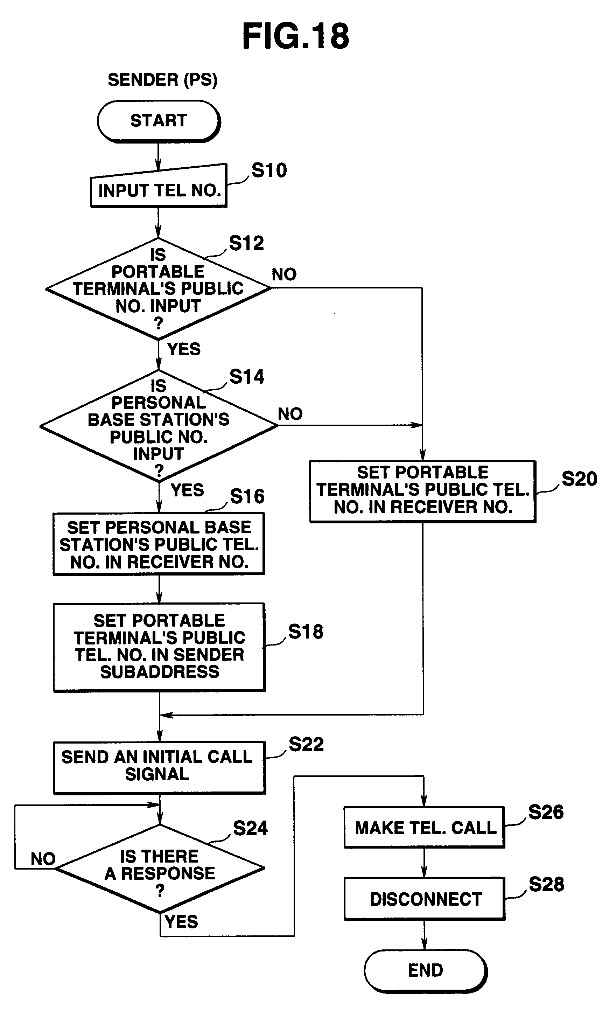

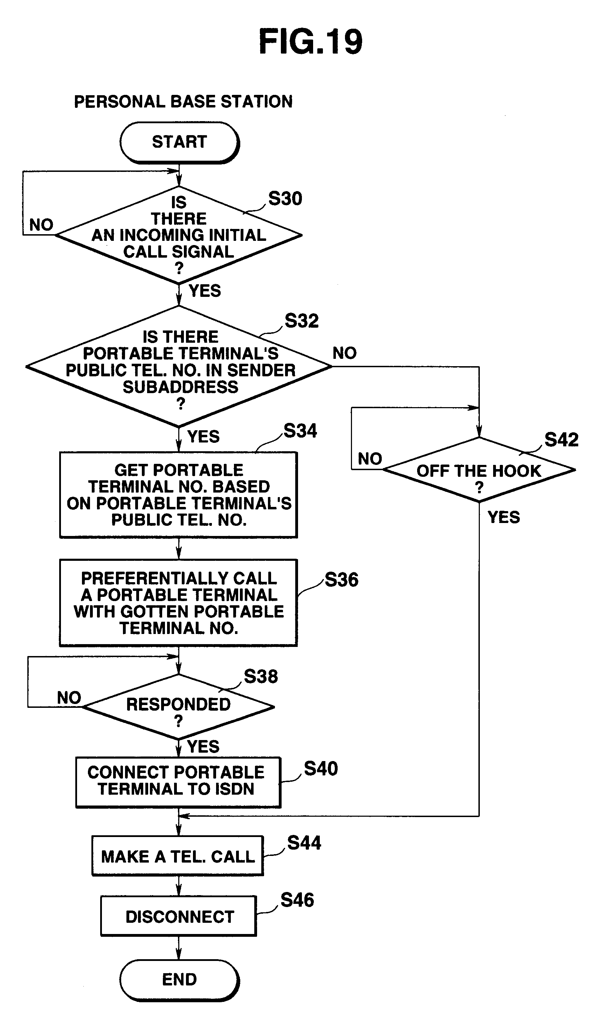

The operation of fourth embodiment of the present invention will be described hereinafter. Program which realizes each function as shown in the flowchart of FIG. 18 is stored in said storage medium 28a provided in the portable terminal PS in the form of program codes readable by controller 27. Program which realizes each function as shown in the flowchart of FIG. 19 is stored in said storage medium 28a provided in the personal base station 3 in the form of program codes readable by controller 27.

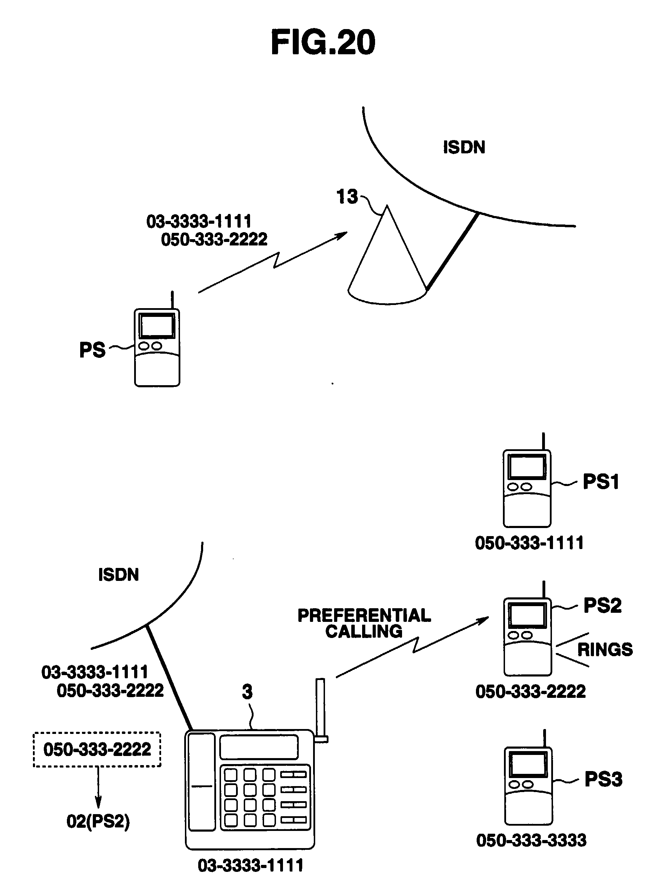

FIG. 18 is a flow chart of the operation of the sender portable terminal PS or another telephone set in the communication system according to the fourth embodiment. FIG. 19 is a flow chart of the operation of the receiver personal base station 3. FIG. 20 illustrates the initial call signal sending/receiving operations of the sender and receiver. First, step S10, the user at the sender portable terminal PS inputs a receiver telephone number of interest, using the dial keys or the telephone number information. In response to this operation, it is determined at step S12 whether the input telephone number is a portable terminal's public number, and further at step S14 whether the call signal is sent via the sender personal base station at step S14.

When the sender user inputs the personal base station's public number (for example, "03-3333-1111") and a portable terminal PS 2's public number (for example, "050-333-2222") or selects those public numbers from the telephone number information, step S16 sets the personal base station's public number "03-3333-1111" in a receiver number of the setup message, and step S18 sets the portable terminal PS2's public number "050-333-2222" in the sender subaddress of the setup message. Then, step S22 sends the resulting setup message to the pubic base station 13 to call the portable terminal. Then, step S24 determines whether there is a response from the receiver. If so, at step S26 the sender makes a telephone call to the receiver portable terminal PS2. Step S28 disconnects the communication line by when one of the sender and the receiver goes to off the hook to thereby terminate the appropriate processing.

If the receiver telephone number is not a portable terminal's pubic number (a telephone number starting with "050") or if the personal base station's public number is not specified even when the receiver telephone number is a portable terminal's public number, any one of the portable terminals PS1-PS3 or the personal base station 3 is to be directly called. Thus, control passes to step S20, which sets a portable terminal's public telephone number in the receiver number of the setup message and sends same to the receiver.

The personal base station 3 determines at step S30 whether there is an incoming call. If NCU 32 receives an incoming call via the telephone line, the personal base station 3 determines at step S32 whether there is a portable terminal's public number in the sender subaddress. If so, at step S34 the personal base station 3 searches information of FIG. 16 on the basis of the portable terminal's public number (in this case, "050-333-2222") set in the sender subaddress and gets the portable terminal's number "02:PS2" corresponding to its public number. At step S36, the personal base station 3 performs a preferential calling operation with the gotten portable terminal's number "02:PS2", that is, calls the potable terminal PS2 having the gotten potable terminal's number "02". At step S38, the personal base station determines whether there is a response from the called portable terminal "PS2". If so, at step S40 the personal base station 3 connects the responding portable terminal PS2 to the communication network 11. At step S44, the sender portable terminal PS makes a radio telephone call to the receiver portable terminal PS2. At step S46, the communication line is disconnected when any one of the sender portable terminal PS and the receiver portable terminal PS 2 goes off the hook to terminate the processing concerned.

If no portable terminal's public number is set in the sender subaddress, the incoming call is for the personal base station 3 itself. Thus, control passes to step S42, which determines whether the handset of the personal base station 3 is off the hook. If so, control passes to step S44, where the personal base station 3 itself makes a telephone call to the sender portable terminal PS. At step S46, the communication line is disconnected when any one of the personal base station 3 and the sender portable terminal disconnects the line to terminate the appropriate processing.

As described above, according to the communication system of the fourth embodiment, the portable terminal is called with its pubic number even in the call signal sending/receiving operation via the personal base station. Thus, even when the user does not know the extension number (portable terminal's number) of a particular portable terminal, the sender can call the particular portable terminal easily as long as the sender knows the portable terminal's public number. Since the sender calls the portable terminal by its public number, the sender can call the portable terminal in a similar operation to that performed when the portable terminal is in the personal base station's service area, even when the portable terminal is out of the personal base station's service area.

### (Fifth Embodiment)

The fifth embodiment of the present invention will be described next. Since the basic structures of the communication system, personal base station and potable terminal are the same of those of FIGS. 2, 14 and 15, further description thereof will be omitted. In the fifth embodiment, as in the fourth embodiment, when the sender calls a particular portable terminal, it sets the base station terminal's public number in a receiver number of the a call setup message, sets the public number of the portable terminal to be called in a subaddress (sender or receiver subaddress), and sends the resulting call setup message to the sender. The personal base station 3 of this embodiment has an answertelephone function which includes automatically answering to an incoming call from a sender, sending a predetermined answer message to the sender, and recording a message from the sender. In the fifth embodiment, the personal base station sends the sender an answer message set in the portable terminal called by the sender, and permits only that portable terminal to reproduce the recorded sender's message.

### 5-1-1) portable Terminal Information and Answer Message Information in Personal base station:

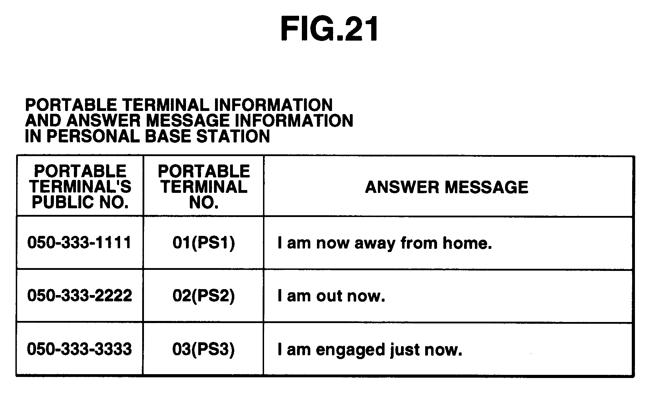

FIG. 21 illustrates portable terminal information and answer message information stored in a personal base station in the fifth embodiment. In FIG. 21, the personal base station 3 contains public numbers, terminal numbers and answer messages of portable terminals PS1-PS3 in corresponding relationship. In the illustrated example, the personal base station 3 contains an answer message "I am now away from home" in correspondence to a portable terminal PS1 having a pubic number "050-333-1111". Similarly, the personal base station 3 contains an answer message "I am out now" in correspondence to a portable terminal PS2, and an answer message "I am engaged just now" in correspondence to portable terminal PS3. For example, if there is an incoming call at portable terminal PS1 when the answertelephone function is set, the answer message "I am out" is sent to the caller. Similarly, in response to a call to portable terminal PS2, the answer message "I am out now" is sent to the caller. In response to a call to portable terminal PS3, the answer message "I am engaged just now" is sent to the caller.

### 5-1-2) Information to be Recorded:

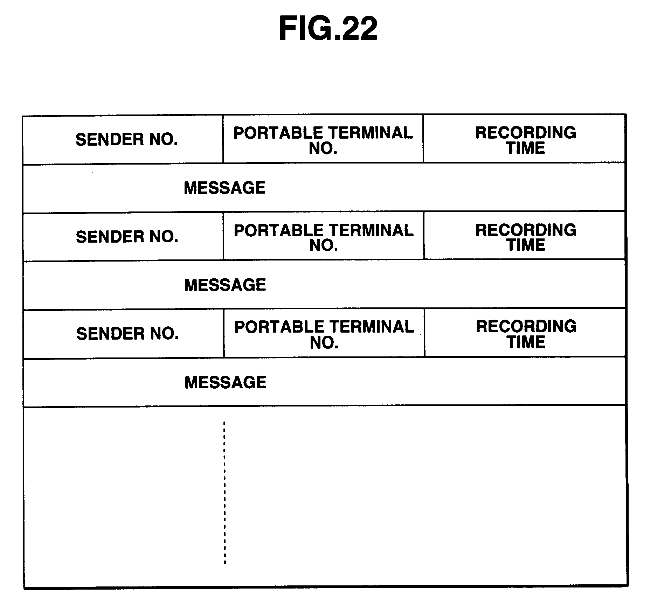

FIG. 22 illustrates information (including messages) recorded in the personal base station in the fifth embodiment. In FIG. 22, when the personal base station 3 records a message from a sender, it stores a sender number (telephone number) to identify the sender, a terminal number of a called portable terminal, a recording time, and a message from the sender. The sender's number is the telephone number of the sender sent attached to the setup message. Any information to identify the sender except for the sender's telephone number, for example the sender's name, may be used. The personal base station 3 causes only a portable terminal having a terminal number attached to the message to reproduce the recorded message information.

### 5-2) Operation:

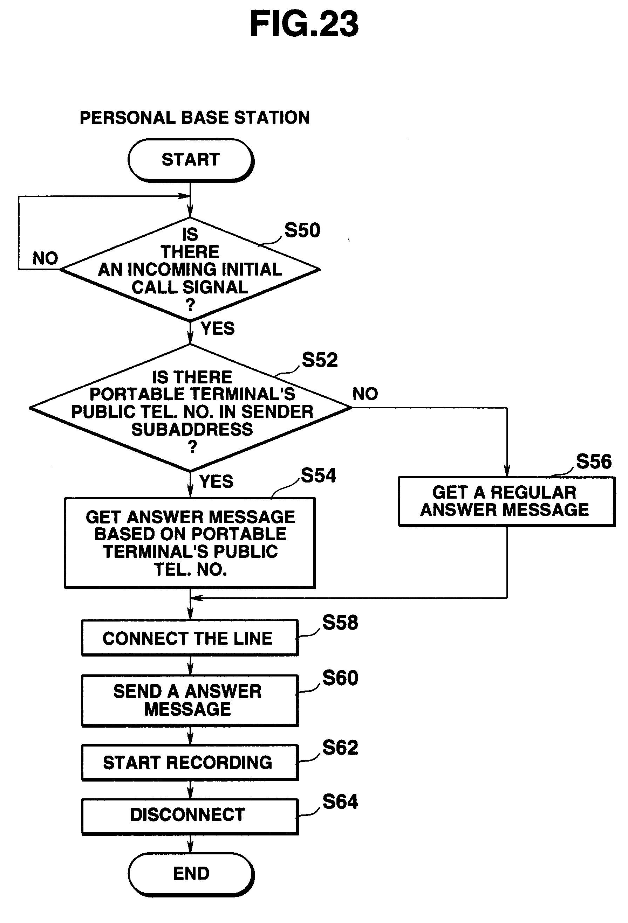

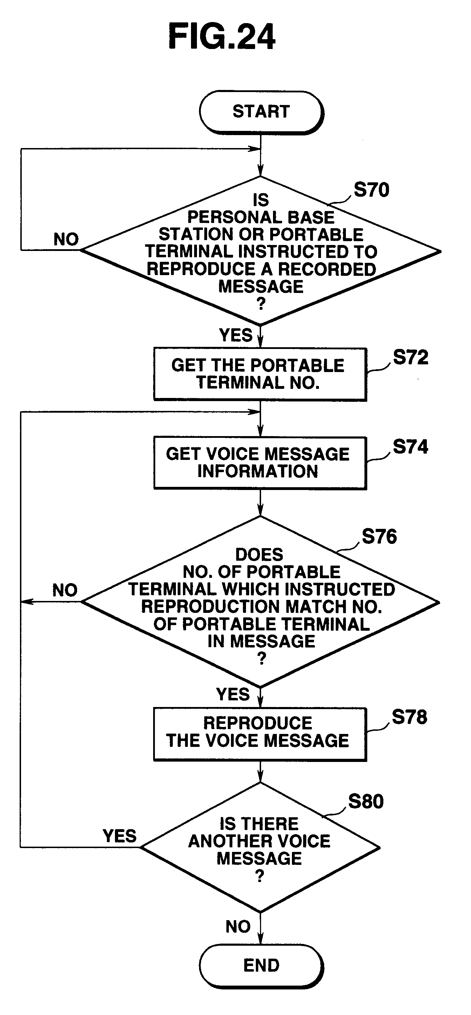

The operation of the communication system of the fifth embodiment will be described next. FIG. 23 is a flow chart of the operation of the personal base station set in the answertelephone of the communication system as the fifth embodiment. FIG. 24 is a flow chart of the operation of the personal base station 3 performed when a recorded message is reproduced.

Program which realizes each function as shown in the flowchart of FIGS. 23 and 24 is stored in said storage medium 28a provided in the personal base station 3 in the form of program codes readable by controller 27.

### 5-2-1) Processing with Answertelephone Function:

The operation of the fifth embodiment performed when the answertelephone function is set will be described next. At step S50, the personal base station 3 determines whether there is an incoming call. When it receives an incoming call via NCU 15 and the telephone line, it determines at step S52 whether the sender subaddress has a portable terminal's public number. If so, at step S54 the personal base station 3 searches information of FIG. 17 on the basis of the portable terminal's pubic number (for example, "050-333-2222") set in the sender subaddress, and gets the portable terminal number "02:PS2" corresponding to the portable terminal's public number, and its answer message "I am now out". At step S58, the personal base station 3 connects the line to the portable terminal, and at step S60 reproduces the gotten answer message "I am out now". At step S62, the personal base station 3 records the message from the sender along with the sender number, portable terminal number "02:PS2", and the recording time, as shown in FIG. 22. After recording the message, the personal base station disconnects the line and terminates the appropriate processing at step S64.

If the portable terminal's public number is not set in the sender subaddress of the setup message, the incoming call is for the personal base station 3 itself. Thus, at step S56, the personal base station 3 gets a regular response message (for example, "I am out now. So, please leave me a message"). Control then passes to step S58 and its subsequent steps, where the personal base station 3 records the message from the sender and terminates the appropriate processing.

### 5-2-2) Reproducing Process:

The case where the user releases the set answertelephone function by manipulating the personal base station 3 or portable terminals PS1-PS3, and reproduces a recorded message will be described next with respect to FIG. 24. First, at step S70, the personal base station 3 determines whether the personal base station 3 itself or one of the portable terminals PS1-PS3 was instructed to reproduce the recorded message. If so, at step S72 the personal base station 3 gets the terminal number of the portable terminal which was instructed to reproduce the messages, and gets at step S74 a portable terminal number attached to the recorded message. At step S76, the personal base station then determines whether the terminal number of the portable terminal which was instructed to reproduce the messages matches the portable terminal number of the message. If not, control returns to step S74 to get the next message without reproduction.

If so at step S76, control passes to step S78, where the sender number, recording time and message are reproduced. Thereafter at step S80, it is determined whether there is another message. If so, control returns to step S74 to get the next message. Thereafter, by repeating the steps S74-S80, messages for the portable terminal numbers matching that of the portable terminal which was instructed to reproduce the messages are sequentially reproduced. Thus, if there is no more message to be reproduced, the appropriate processing is terminated.

As described above, according to the fifth embodiment, since the personal base station 3 has the answertelephone function, no portable terminals PS1-PS3 are required to have an answertelephone function. In addition, since the personal base station contains recorded messages and the portable terminal numbers in corresponding relationship, no contents of the recorded messages are heard by other base station and/or portable terminals, and thus privacy is protected.

While in the fifth embodiment an answer message for an answering telephone call is sent to the caller, the present invention is not limited to this particular case. For example, a message such as "I'm afraid that I'll be late for coming to a place where we arranged to meet" or "Our tomorrow meeting is postponed" may be sent instead.

According to the fourth and fifth embodiments, the following advantageous effects are produced:
(1) Also, in the initial call signal sending/receiving operations via the personal base station, the sender can call a particular portable terminal without requiring the sender to perform a special operation. Thus, although the sender does not the extension number (portable terminal number) of the portable terminal to be called, the sender can call that portable terminal in an easy operation as long as the sender knows the portable terminal's public number. Since the sender calls the portable terminal with its public number, the sender can call that portable terminal even when that portable terminal is out of the personal base station's service area in a similar operation performed when that portable terminal is in the personal base station's service area.
(2) According to the fifth embodiment, each portable terminal is not required to have an answertelephone function. Since the stored messages and the portable terminals are placed in corresponding relationship, the contents of a talk between the sender and that portable terminal are not heard by other portable terminals and personal base stations to thereby ensure protection of privacy.

According to the fifth embodiment, a more appropriate answer message depending on the sender can be sent to the sender.

### (Sixth Embodiment)

The above-mentioned third object is achieved by the sixth embodiment.

### 6-1) Structure:

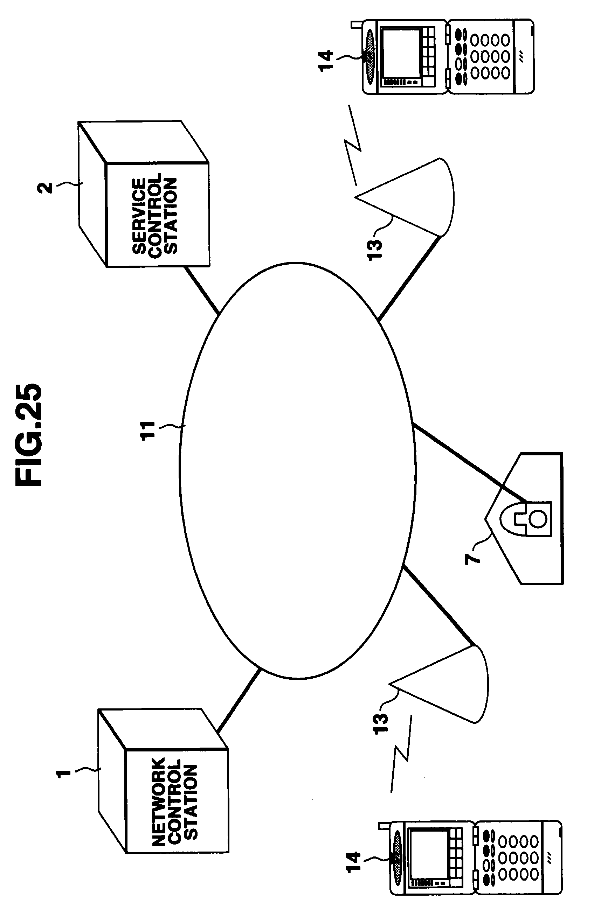

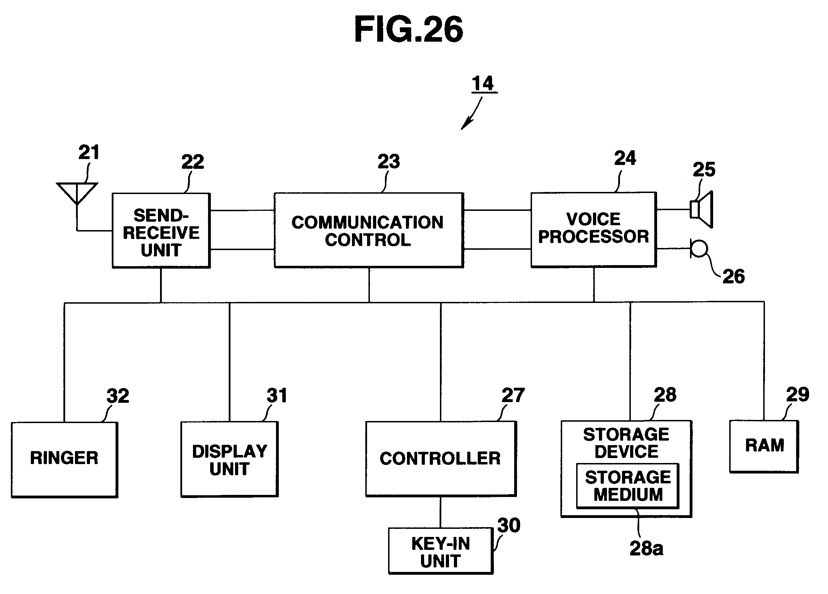

FIG. 25 shows a radio communication system in which portable terminals are applied in a sixth embodiment of the present invention. FIG. 26 is a block diagram of the portable terminal. FIGS. 25 and 26 are similar to FIGS. 14 and 15, so that the structural portions of the radio communication system and the portable terminal of FIGS. 25 and 26 different from those of FIGS. 14 and 15 will be mainly described and further descriptions of other structural portions of the sixth embodiment will be omitted. In FIG. 25, reference numeral 1 denotes a network control station which connects respective radio base stations 13 via the communication network(ISDN) 11 and controls communication between portable terminals 14 or between portable terminal 14 and a general telephone set 7 in a home. Reference numeral 2 denotes a service control station which provides respective portable terminals 14 with various services, for example, of an incoming signal identifying function, mentioned above. The service control station 2 may be united with the network control station 1.

RAM 18 is used as a working area for the controller 27 to store various register/flag data temporarily therein, and includes a data area for storage of various user data such as an address book which contains the name of a receiver to be called, and its address and telephone number, a keyed-in character string, and a character string sent by the receiver. The user data stored in RAM 18 are backed up by a secondary cell (not shown) for storing purposes.

A touch panel (not shown) is provided on a liquid crystal display (LCD) panel of a display unit 31. When the user depresses one of icons displayed on the LCD panel, a portion of the touch panel corresponding to the pressed icon detects that icon pressing operation, and instructs the controller 27 to fulfil a function assigned to the icon. A ringer 32 produces a ringing tone in accordance with an instruction from the controller 27 when there is an incoming signal.

### 6-2) Operation:

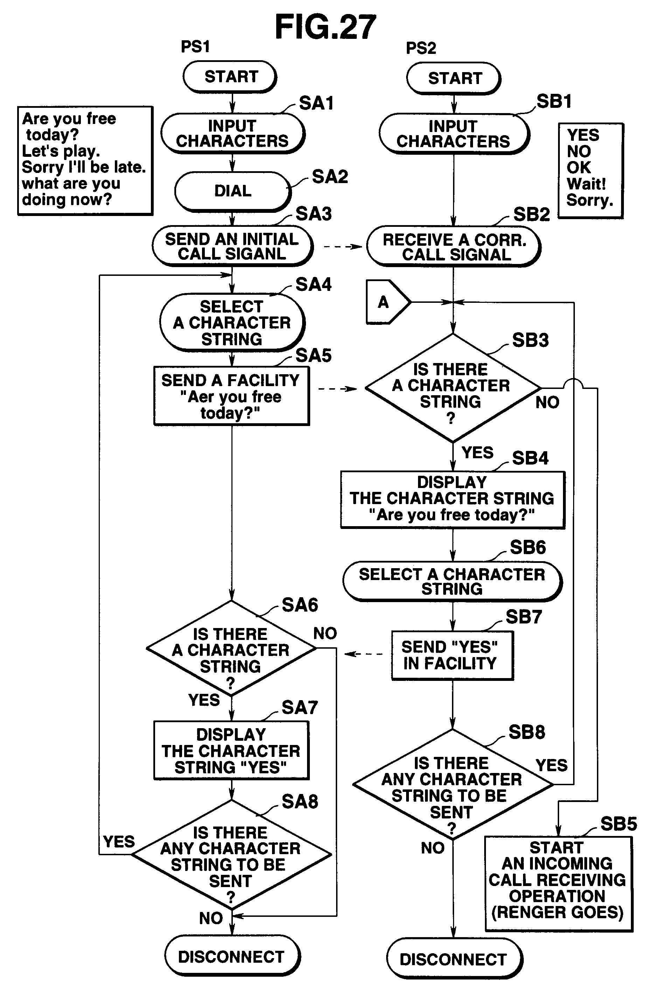

Referring to FIG. 27, the operation of the sixth embodiment will be described next. A process for sending/receiving information such as a character string (message statement) between a sender and a receiver before telephonic communication starts, which process involves the essential portion of the present invention, will be illustrated next.

Hereinafter, "terminal PS1" and "terminal PS2" denote sender and receiver portable terminals 14, respectively. The operation of the sixth embodiment including the respective operations of the terminals PS1 and PS2 will be described.

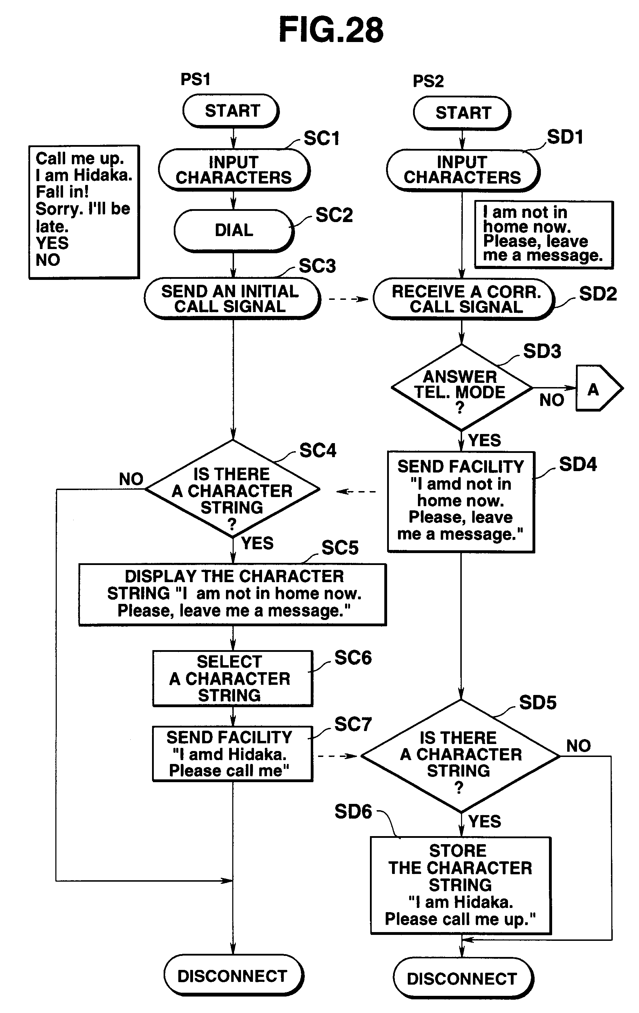

Program which realizes each function as shown in the flowchart of FIGS. 27 and 28 is stored in said storage medium 28a provided in the portable terminal 14 in the form of program codes readable by controller 27.

### 6-2-1) Creation of a Character String:

First, at steps SA1, SB1, the respective key-in units 30 are each manipulated to enter characters to record a character string, to be sent to each other, beforehand in a data area of RAM 29.

In the example of FIG. 26, five types of character strings to be sent; that is, "Are you free today?", "Let's play", "Fall in!", "I'm sorry, I'll be late" and "What are you doing?" are recorded in terminal PS1 whereas five types of character strings to be sent: "YES", "NO", "OK", "Wait" and "Sorry" are recorded in the terminal PS2.

### 6-2-2) Send/Receive an initial Call Signal:

When a linked channel is established between terminal PS1 and the radio base station 13 in response to the terminal PS1 going off the hook, at step SA2 the receiver telephone number is dialed, the terminal PS1 shifts to an initial call signal sending control sequence (step SA3). Thus, the terminal PS2 is called by the radio base station 13 to start a call signal receiving control sequence (step SB2) corresponding to the initial call signal sending control sequence (step SA3).

The terminal PS1, which has shifted to the initial call signal sending control sequence, transfers a call setup message to the network 11. In that case, at step SA4, a character string to be inserted into the sender subaddress of the call setup message may be selected. In this case, the user selects a character string to be sent to the receiver from among the character string produced and recorded at step SA1, inserts the selected character string into the sender subaddress and then sends the resulting sender subaddress to the receiver.

### 6-2-3) Sending a Character String from the Sender to the Receiver:

At step SA5, the terminal PS 1 adds the selected character string to a facility and sends the facility data to the network. When the terminal PS2 receives the facility via the network, it determines at step SB3 whether a character string is inserted.

If so, the PS2 passes its control to step SB4, which displays the facility on the display unit 31. If not at step SB3, the terminal PS2 determines that it is a general incoming signal, and advances its control to step SB5, which performs a signal receipt operation by operating the ringer 32 after a predetermined incoming call receiving control sequence.

### 6-2-4) Sending a Character String from Receiver to Sender:

Assume now that the terminal PS2 receives the character string "Are you free today?" from the terminal PS1 and that the character string is displayed on the display unit 31. At this time, a predetermined reporting operation (with a ringing tone or vibrations) different from the general signal receipt operation may be performed. The terminal PS2 then advances its control to step SB6, where the terminal PS2 selects "YES" as a character string to be answered. Then, at step SB7, the terminal PS2 inserts the selected character string "YES" into a facility and sends the resulting facility to the network.

When the terminal PS1 receives this facility via the network, it determines at step SA6 whether any character string has been inserted into the facility. If so, the result of the determination at step SA6 becomes "YES", and control then passes to step SA7, which displays the character string "YES" on the display unit 31. At this time, a predetermined reporting operation (with a ringing tone or vibrations) different from that performed when the regular signal receipt operation may be performed.

### 6-2-5) Disconnecting Process:

When the character string answered by the terminal PS2 is displayed on the display unit 31 of the PS1, the terminal PS1 advances its control to step SA8, which determines whether there is a character string to be sent. If so, the terminal PS1 iterates the processing at steps SA4-SA8.

If there are no more character strings to be sent at step SA8, control passes to step SA9, which disconnects the appropriate line. If there is no character string inserted in the facility information element at step SA6, the terminal PS1 determines that the terminal PS2 has no intention to communicate information with the terminal PS1, and advances its control to step SA9, which disconnects the appropriate line.

After terminating the processing at step SB7, the terminal PS2 also determines at step SB8 whether there is any character string to be sent. If so, the terminal PS2 returns its control to step SB3. If there are no more character string to be sent at step SB8, the terminal PS2 passes its control to step SB9, which disconnects the appropriate line.

As described above, according to the present embodiment, since a character string is inserted into the sender subaddress information element of the call setup message or the facility and the resulting call setup message or the facility is then sent to the receiver or the sender, information can be transmitted mutually between the sender and the receiver before telephonic communication starts.

### 6-3) Modification:

A modification of the sixth embodiment will be described with reference to FIG. 28. In this modification, the receiver stores as a message a character string which the sender sends back to the receiver in response to a character string with which the receiver answers, using its answertelephone function, in response to a sender's call. This process will be described next in more detail.

### 6-3-1) Creation of a Character String:

As in the sixth embodiment, the terminals PS1 and PS2 enter character strings to be sent to each other from the respective key-in units 15 and store the character strings in their respective RAMS 18. In the example of FIG. 28, terminal PS1 RAM 18 contains recorded six types of character strings "Please call me up", "I am Hidaka", "Fall in!", "I'm sorry, I'll be late", "Yes" and "No" whereas the terminal PS2 RAM 18 contains a recorded character string "I am away from home now. Please leave me a message, Okay!".

### 6-3-2) Send/Receive an Initial Call Signal:

When a linked channel between the terminal PS1 and the radio base station 13 is established in response to the terminal PS1 going off the hook, and the receiver telephone number is dialed at step SC2, the terminal PS1 shifts to a call signal sending control sequence (step SC3) whereas the terminal PS2 responds to a corresponding call signal from the radio base station 13 to start an initial call signal receiving control sequence (step SD2).

Then, in the terminal PS2, control passes to step SD3, which determines whether the present operational mode is an answertelephone mode. If not, processing at step SB3 and subsequent steps will be performed. If so at step SD3, the result of the determination at step SD 3 becomes "Yes" and control passes to step SD4.

### 6-3-3) Answertelephone Response:

At step SD4, the terminal PS2 sends the network a character string "I'm not in home now. Please leave me a message." for an answertelephone as a facility information element of a call setup message.

### 6-3-4) Send a Message:

When the terminal PS1 receives the call setup message via the network, step SC4 determines whether there is any character string inserted in the facility information element. If so, the result of the determination is "YES". Thus, control passes to step SC5, which displays the character string "I'm not in home now." Please leave me a message." on the display unit 31. As a result, the sender recognizes that the receiver is away from home.

Then, in the terminal PS1, control passes to step SC6, which selects a character string "I am Hidaka. Please call me up." for the answertelephone, sets the selected character string as a message in a facility information element of a call setup message, and transfers the message to the receiver (step SC7).

### 6-3-5) Disconnect the Line:

When the terminal PS2 receives the call setup message via the network, step SD5 determines whether any character string is inserted in the facility information element. If so, step SD6 stores the character string "I am Hidaka. Please call me up." sent back in response to the answertelephone, as a message in the data area of RAM 18, and then disconnects the appropriate line.

After sending the facility at step SC7, the terminal PS1 disconnects the appropriate line. When there is no character string inserted in the facility information element at step SC4, it is determined that the terminal PS2 has no intention to communicate information to the terminal PS1 and disconnects the appropriate line immediately.

As described above, according to the modification, the receiver inserts a character string into a facility information element of a call setup message and answer in the answertelephone, whereas the sender similarly sends the receiver a message to the receiver's answer in the answertelephone, in the facility of a (call) setup message, and causes the receiver to store the sender's facility. Thus, prior to telephonic communication, information can be communicated mutually in a simple manner between the sender and the receiver.

While in the sixth embodiment and its modification alternate communication of character strings (data) between the sender and the receiver has been illustrated, the present invention is not limited to this particular case. For example, the character strings sent/received alternately between the sender and the receiver may be synthesized as voice data one word at a time to produce a voice message. In addition to character strings, compressed data, for example, of graphic information, may be used to send a simple map to the receiver.

While in the modification a character string, which will merely be a message, is illustrated to be stored, the time when the message was received may be stored along with the message.

According to the present embodiment, since a message is communicable between the caller communication terminal and the receiver communication terminal between the time from the start of a calling operation of the sender communication terminal and the off-hook operation of the receiver communication terminal, the sender and the receiver can express their intentions, and the answertelephone function is realized, before their telephonic communication starts.

### (Seventh Embodiment)

The above-mentioned fourth object is achieved by a seventh embodiment.

The radio communication system and PHS terminals of FIGS. 25 and 26 are also used in this embodiment so that further description thereof will be omitted.

### 7-1) Structure of Musical Tone Data:

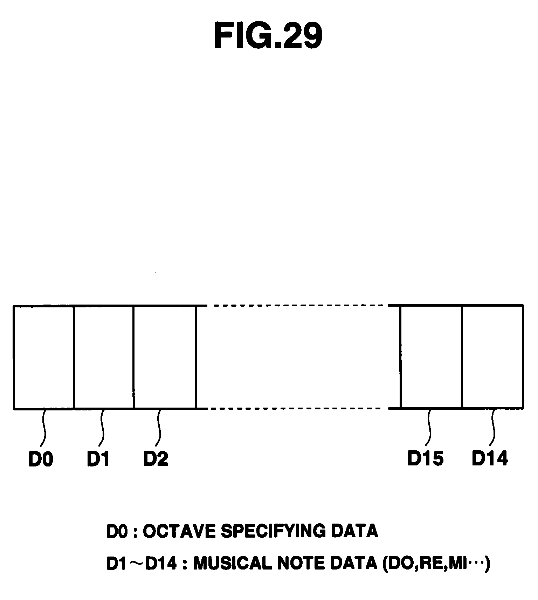

Referring to FIG. 29, the structure of musical note data will be described. The musical note data is set as a subaddress of a call setup message and composed of data which specifies at least a note pitch and length. In the present embodiment, musical note data for one phrase is composed of octave specifying data D0 and musical note data D1-D14. The octave specifying data D0 defines the note pitch areas (octave areas) of the respective note data D1-D14 (in this respect, when "0" is specified, a musical scale starting with a center C results).

The musical note data D1-D14 individually specify the musical scale tones (Do, Re, Mi,...) and tone lengths (crotchet, quaver....) of a ringing tone to be produced and are assigned a maximum of 14 different notes. A series of ringing tones (hereinafter refers to as a ringing tone string) specified by a maximum of 14 different tones of the note data D1-D14 forms a melody for one phrase.

Such ringing tone string of the musical note data represents the urgency of a sent business matter and the sender's feeling. For example, in the case of musical note data representing the urgency of the sent business matter, a ringing tone string produced at a predetermined pitch and a maximum octave is used. When the sender's feeling "delightful" is expressed, a ringing tone string having a gentle melody of a relatively high octave is used. That is, various tone patterns could be considered.

In the present embodiment, musical note data of various patterns which represents the urgency of a sent business matter and a sender's feeling are recorded beforehand in a musical note database MDB of RAM 18.

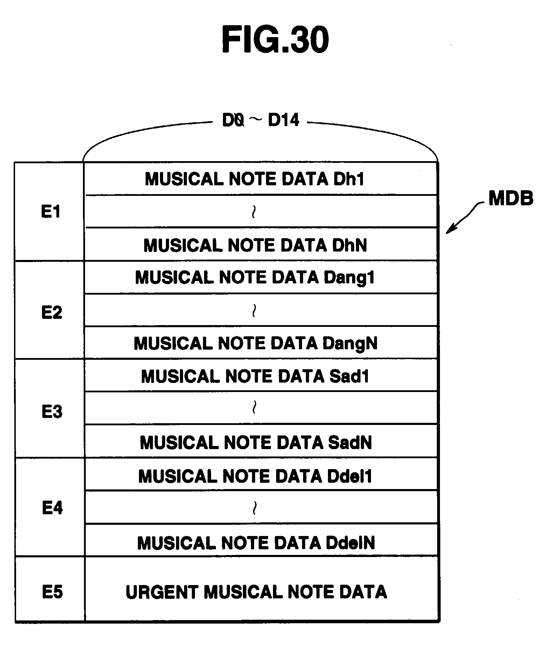

FIG. 30 illustrates one example of the musical sound database MDB. In FIG. 30, reference symbols E1-F5 denote storage areas, which contain corresponding musical note data which represent feelings "happy", "angry" "sad" and "delightful". Each musical note data is composed of a plurality of musical subnote data. For example, storage area E1 contains a plurality of musical subnote data Dh1-Dhn which compose a ringing tone string which represents "happy". This applies to other respective musical note data representing the feelings "angry", "sad" and "delightful". Storage area E5 contains musical note data Demer which represents the urgency of a sent business matter, for example, at a predetermined pitch and a maximum octave.

Also the storage area E5 may contain a plurality of different musical note data Demer which provide ringing tones which are different depending on the degrees of urgency. In that case, the octave value may be changed depending on the degree of urgency.

The musical sound database MDB may be customized so that musical note data selected depending on the user's editing operation may be rewritten so as to be a desired ringing tone string. In addition, musical note data sent from the receiver may be additionally recorded in the musical note database MDB.

### 7-2) Operation:

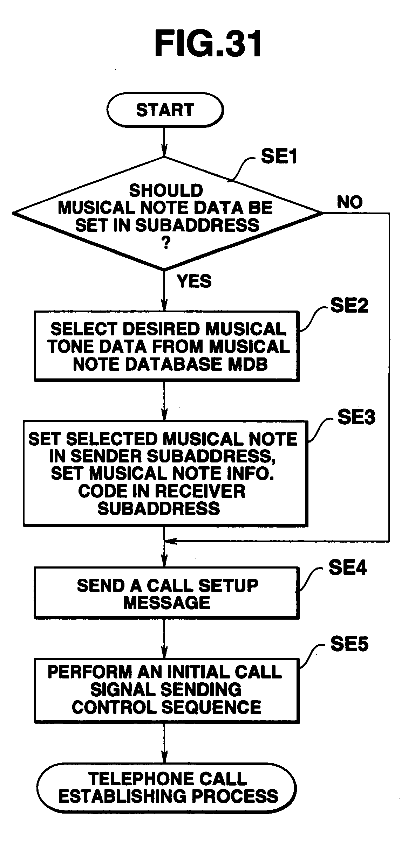

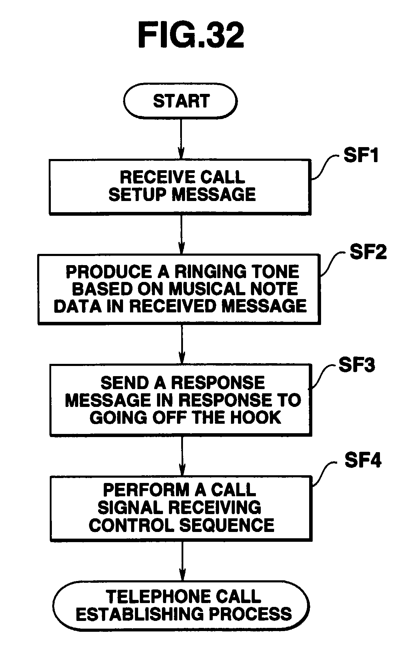

Referring to FIGS. 31 and 32, the operation of this embodiment will be described next concerning an initial call signal sending process in which musical note data is set as a subaddress of the sender telephone number and sent to the receiver, and a call receiving process corresponding to the initial call signal sending process.

Program which realizes each function as shown in the flowchart of FIGS. 31 and 32 is stored in said storage medium 28a provided in the portable terminal 14 in the form of program codes readable by controller 27.

### 7-2-1) Sending Process:

For example, when the user enters a receiver telephone number and depresses a call key of the key-in unit, the controller 27 displays on the display unit 31 a message indicating whether musical note data should be set in the subaddress (step SA1).

When the user does not set the musical note data in the subaddress, the result of the determination is "NO", and control passes to step SE4.

When the musical note data is set in the subaddress, the result of the determination at step SE1 becomes "YES" and control then passes to step SA2, which selects desired musical note data from the musical note database MDB in accordance with the operation of the key-in unit 30. At step SE3, the musical note data selected or edited at step SE2 is set along with a control code to change the ringing tone in the area of the sender subaddress and musical note information code is set in the receiver subaddress to form a call setup message. At this time, the musical note data specified in the musical note database MDB may be edited.

Control then passes to step SE4, where the controller 27 transfers the call setup message via the radio base station 13 to the network and instructs the network to start a call setup process. Then, control shifts to a call receiving state. Control then passes to step SE5, which performs an initial call signal sending control sequence and then passes to a telephone call establishing step.

### 7-2-2) Received Call Signal Processing:

When the sender sends the network a call setup message in which a desired musical note data is set at the sender subaddress, the receiver PHS terminal 14 performs a corresponding initial call signal receiving process of FIG. 32. First, control passes to step SF1, where when the receiver receives an incoming call from the network, the receiver receives the call setup message in a predetermined process. Then at step SF2, when there is a control code to change the ringing tone in the subaddress of the received call setup message, musical note data is extracted from the subaddress and delivered to the ringing tone generator 32. The ringing tone generator 32 repeatedly generates a ringing tone string for one phrase depending on the musical note data.

If the ringing tone string produced repeatedly is, for example, based on the urgent musical note data Demer, it is known that the incoming call is urgent before telephonic communication starts. If it is a ringing tone string for any one of "happy", "angry", "sad" and "delightful", the sender's feeling can be known before the telephonic communication. Thus, for example, when the user at the sender terminal does not want telephonic communication, but desires to tell the user's feeling to the receiver terminal, it is effective for expressing the user's feeling.

As described above, after there is an incoming call which expresses the urgency of a sent business matter and the sender's feeling, a response message is sent to the network in response to the receiver going off the hook as in the general PHS terminal (step SF3), and then an incoming call control sequence is performed (step SF4). A telephone call establishing process then starts.

As described above, according to this embodiment, when musical note data which specifies the sounding state of a ringing tone is set in the subaddress and sent, the receiver produces a ringing tone depending on the musical note data to express the urgency of the sent business matter and the sender's feeling. Thus, the sender can be identified and the urgency of the sent business matter and the sender's feeling can be expressed depending on the sounding state of the ringing tone.

While in the particular embodiment the call signal sending and receiving operations for general telephonic communication (voice service) have been described, the present invention is not limited to this particular case. For example, the present invention is applicable to data transmission and/or a pocket bell service. Especially, in the pocket bell service, the sent characters, the urgency of a sent business matter and the sender's feeling can be expressed, so that more various uses of the pocket bell are possible.

While in the present embodiment the ringing tone is directly specified by musical note data, melody reproducing means which stores contains melody data may be provided in the PHS terminal 14 so that it reproduces melody data specified by a subaddress as a ringing tone. In this case, the kind, tempo and pitch of a melody to be reproduced may be changed, so that various sounding states of a ringing tone are obtained.

While in the present embodiment the musical note data is set in the subaddress of the call setup message and sent to the receiver, the present invention is not limited to this particular case as long as the musical note data can be sent before the receiver goes off the hook.

In addition, while in the present embodiment radio comminution has been referred to, the present invention also is, of course, applicable to cable communication.

According to the present embodiment, when the call sending means of the sender adds to the call setup message musical note data which specifies the sounding state of a ringing tone and sends the resulting message to the receiver, the call receiving means of the receiver generates a ringing tone depending on that musical note data to express the urgency of the sent business matter and the sender's feeling. Thus, the receiver is able to identify the sender, and know the urgency of the sent business matter and the sender's feeling depending on the sounding state of the ringing tone.

### (Eighth Embodiment)

The above-mentioned fifth object is achieved by the eighth embodiment.

### 8-1) Structure:

The structural portions of the eighth embodiment different from the first embodiment will be mainly described next with reference to the accompanying drawings, and further description of structural portions of the eighth embodiment similar to those of the first embodiment will be omitted.

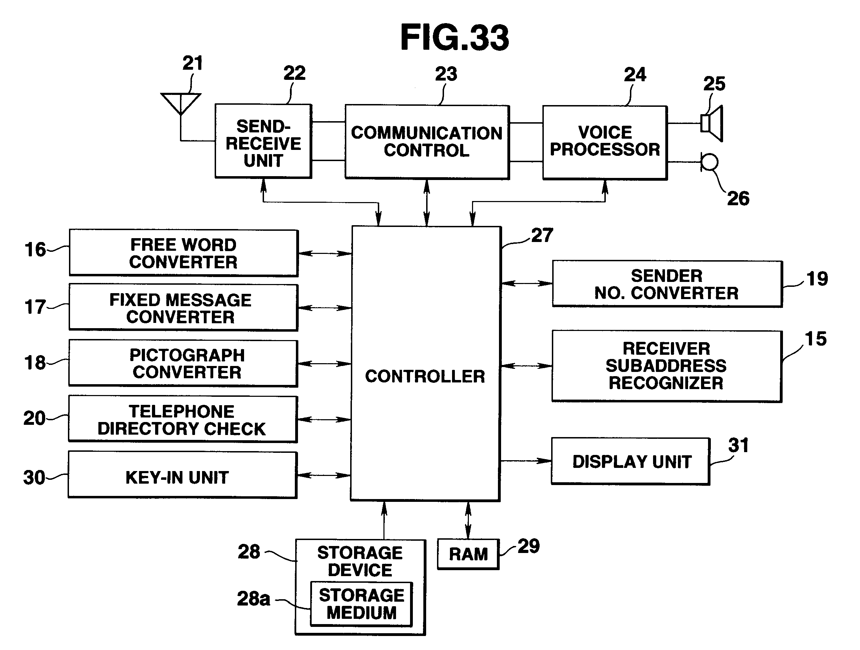

In FIG. 33, when there is an incoming call signal, a receiver subaddress recognizer 15 is started up by a controller 27 to determine whether there is a receiver subaddress information included. If so, it also determines whether there is a symbol "*" at the head of the receiver subaddress information, and delivers a signal indicative of the result of the determination to the controller 27. When there is a symbol "*2" as the head of a code attached to the receiver subaddress, a free word converter 16 is started up by the controller 27, converts the code subsequent to the head symbol "*2" to character string data in accordance with a predetermined conversion table, and delivers the character string data to controller 27. When there is a symbol "*4" as the head of a code attached to the receiver subaddress, the fixed message converter 17 is started up by the controller 27, converts the code subsequent to the head symbol "*4" to fixed message data in accordance with a conversion table, and delivers the fixed message data to the controller 27.

When a head symbol "*6" is at the head of a code attached to the receiver subaddress, a pictograph converter 18 is started up by the controller 27, converts the code subsequent to the head symbol "*6" to pictograph data in accordance with a predetermined conversion table, and delivers the pictograph data to controller 27. When a head symbol "*0" is at the head of a code attached to the receiver subaddress, a sender number converter 19 is started up by the controller 27, converts the code subsequent to the head symbol "*0" to numerical string data (sender number) in accordance with a predetermined conversion table, and delivers the numerical string data to the controller 27. A telephone directory checker 20 determines as the sender number the numerical string converted by the sender number converter 19, checks the sender number against telephone numbers in a telephone directory recorded beforehand, picks up a sender name recorded in correspondence to the matching telephone number, and delivers the sender number and name data to controller 27.

In the present embodiment, when there is an incoming call, the controller 27 starts up the receiver subaddress recognizer 15, and an appropriate one of the converters based on the result of the recognition by the receiver subaddress recognizer 15, receives the result of the conversion from the appropriate converter, and delivers it to display unit 31.

### 8-2) Operation:

The operation of a portable terminal of this embodiment will be described next. In the next description, the operations of the respective elements of the portable terminal related to telephonic communication are similar to those of a general portable terminal, and further description thereof will be omitted. When a sender terminal calls a receiver terminal, a call setup message is sent to the receiver. The call setup message contains at least a sender number, sender subaddress, and a receiver subaddress. The sender number notification function using this sender number is fulfilled usually, and its further description will be omitted. The sender number notification, which will be described next, uses the subaddresses.

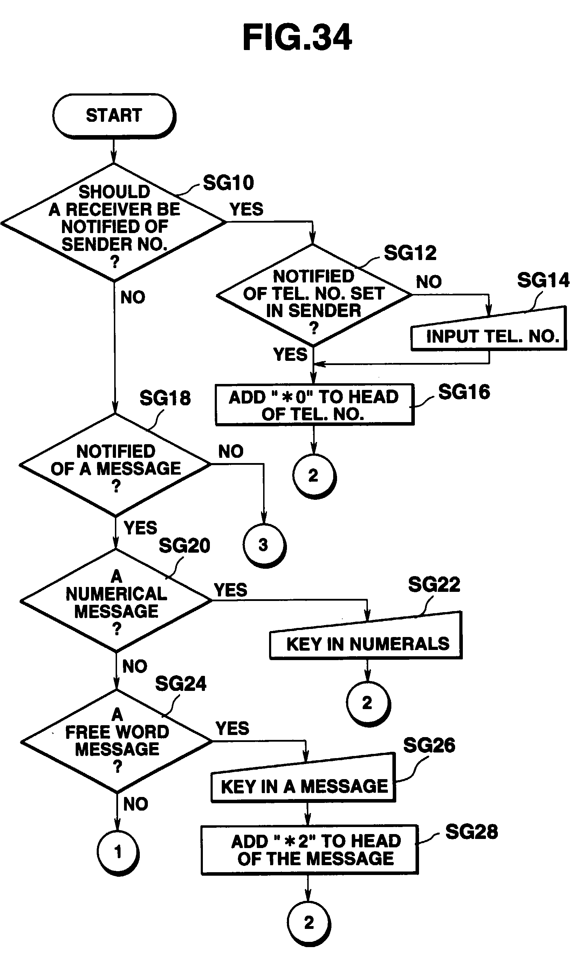

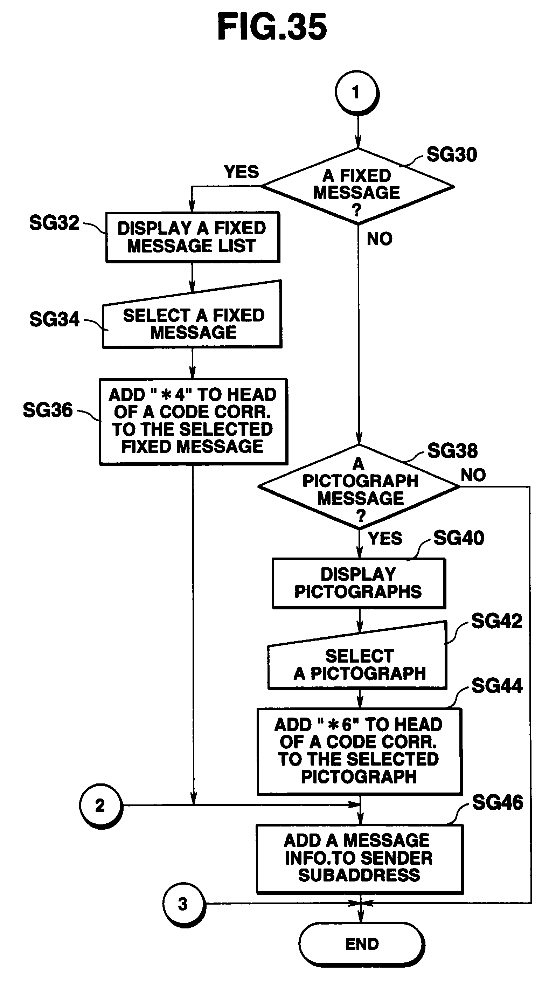

Program which realizes each function as shown in the flowchart of FIGS. 34 and 35 is stored in said storage medium 28a provided in the portable terminal 14 in the form of program codes readable by controller 27.

### 8-2-1) An Initial Call Signal Sending Process:

FIGS. 34 and 35 are a flow chart of an initial call signal sending operation of the portable terminal, and also shows the operation of an ISDN public terminal having no sender number notification function. In FIG. 34, steps SG10-SG16 represent a call signal sending process performed when a sender terminal such as an ISDN public terminal having no sender number notification function wants to notify the receiver of the sender terminal's telephone number or when a terminal having a sender number notification function wants to notify as the sender number the receiver of a telephone number which is not a telephone number (for example, a user-related company's, user home's or pager's telephone number) set in the sender terminal. First, at step SG10, the controller determines in accordance with the user's instruction whether the receiver should be notified of the sender number. If the user selects the sender number notification, control passes to step SG12, which determines in accordance with the user's instruction whether the receiver should be notified of the telephone number set in the sender terminal.

When the user specifies that the receiver should not be notified of the telephone number set in the sender terminal as the sender number, control passes to step SG14, where the user enters a telephone number from the key-in unit 30. When the sender sends a call signal from a public terminal such as an ISDN public terminal to the receiver, the user enters such a telephone number (for example, user-related company's, user home's or pager's telephone number) that the sender can be identified by the receiver terminal or that the sender terminal can be contacted by the receiver terminal. Control then passes to step SG16 which adds "*0" to the head of the entered telephone number. Control then passes to step SG46 of FIG. 35, which adds "*0" + the telephone number as the sender number to the receiver subaddress information to produce a receiver subaddress. Control then passes to an initial call signal sending process (not shown) which dials the receiver's telephone number and sends the receiver a call setup message which includes a receiver subaddress which additionally includes "*0" + the entered sender's number.

In the case of a terminal having a sender number notification function, the receiver is automatically notified of the sender number in the call setup message. Thus, if the sender number is not added to the receiver address, the receiver displays the sender number of the sender subaddress. If the sender number is added to the receiver address, it is preferentially displayed. This process will also be described in a call signal receiving process to be described later.

When the user specifies that the receiver terminal should be notified of the telephone number set in the sender terminal as the sender number, control directly passes to step SG16, which adds "*0" to the head of the telephone number set in the sender terminal. Then, control passes to step SG46 of FIG. 35, which adds "*0" + the telephone number set in the sender terminal as the sender number in the receiver subaddress information to produce a receiver subaddress. Control then passes to the initial call signal sending process (not shown) which dials the receiver's telephone number and sends the receiver a call setup message which includes the receiver subaddress information which, in turn, "*0" + the sender number set in the sender terminal.

When the user selects no sender number notification, control passes from step SG10 to step S18, which determines in accordance with the user's instructions whether the receiver should be notified of a message. If not, the appropriate processing is terminated, and control then passes to the initial call signal sending process (not shown) which dials the receiver's telephone number.

When the user specifies that the receiver should be notified of the message at step SG18, control passes to step SG20, which determines in accordance with the user's instructions whether the message is a numerical message. If so, control passes to step SG22 which causes the user to enter numerals from the key-in unit (dial). Control then passes to step SG46, which adds the entered numerals as a numerical message to the receiver subaddress information to produce a receiver subaddress. Control then passes to the initial call signal sending process (not shown) which dials the receiver's telephone number to send the receiver the receiver subaddress which includes the receiver subaddress information which, in turn, includes the numerical message. In this case, nothing is added to the head of the numerical message.

When the user specifies no numerical message, control passes from step SG20 to step SG24, which determines whether the message is a free word message of any characters. If so, control passes to step SG26, which causes the user to enter the message from the key-in unit (dial) in accordance with the predetermined corresponding relationship between dial numerical keys and characters. Thereafter, control passes to step SG28, which adds "*2" to the head of the free word message. Control then passes to step SG46 of FIG. 35, which adds the "*2" + the free word message to the receiver subaddress information to produce a receiver subaddress. Control then passes to the initial call signal sending process (not shown) which dials the receiver's telephone number and then sends the receiver a call setup message which includes the receiver subaddress information which, in turn, includes "*2" + the free word message.

When the user specifies no free word message, control passes from step SG24 to step SG30 of FIG. 35, which determines whether the message is a fixed message. If so, control passes to step SG32, which displays a fixed message list on the display unit 31. Then, step SG34 causes the user to select a desired fixed message. In the case of an ISDN public terminal, the user sees the fixed message list (hard copy) and enters the number (code) of a desired fixed message to select the fixed message. Then, step SG36 adds "*4" to the head of a code corresponding to the selected fixed message.
Then control passes to step SG46, which adds the "*4" + the code of the fixed message to the receiver subaddress information to produce a receiver subaddress. Control then passes to the initial call signal sending process (not shown) which dials the receiver's telephone number and sends the receiver a call setup message which includes the receiver subaddress information, which, in turn, includes "*4" + the code of the fixed message.

When the user does not specify a fixed message, control passes from step SG30 to SG38, which determines whether the message is a pictograph message. If so, control passes to step SG40, which displays pictographs on the display 31. Then, step SG42 causes the user to select a desired pictograph (or pictographs). In the case of an ISDN public terminal, the user sees a pictograph list (hard copy) to enter the number of a desired pictograph for selecting purposes. Then, step SG44 adds "*6"to the head of a code corresponding to the selected pictograph(s). Control then passes to step SG46, which adds the "*6" + the pictograph code to the receiver subaddress information to produce a receiver subaddress. Control then passes to the initial call signal sending process (not shown) which dials the receiver's telephone number, and sends the receiver a call setup message which includes receiver subaddress information which, in turn, includes "*6" + the pictograph code.

### 8-2-2) An Initial Call Signal Receiving Process:

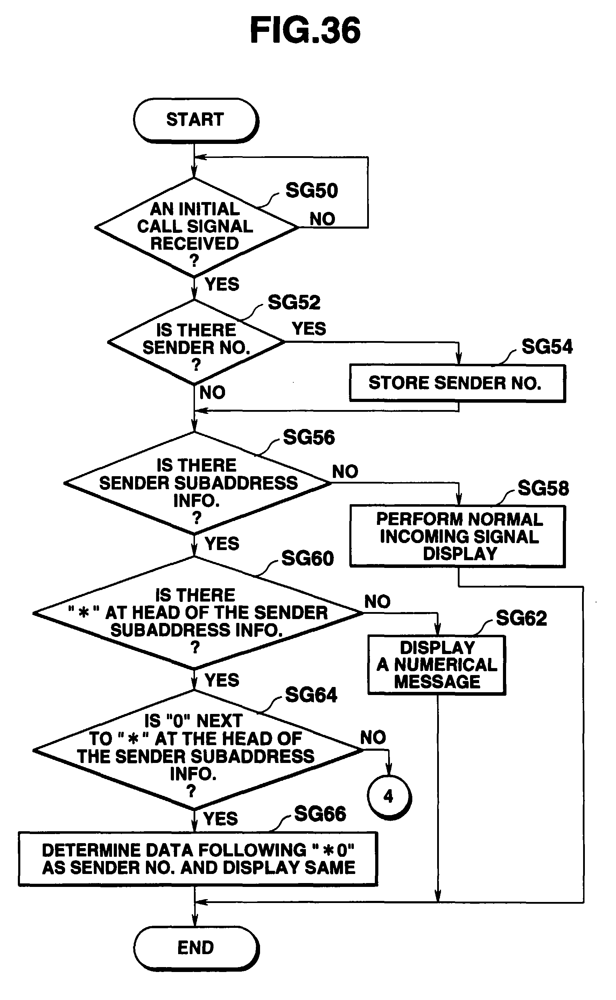

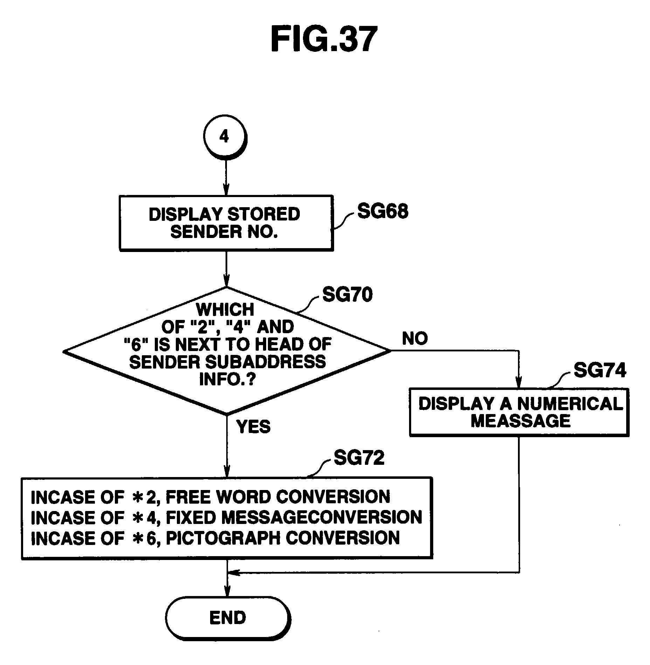

FIGS. 36 and 37 are a flowchart of an initial call signal receiving operation of the portable terminal.

Program which realizes each function as shown in the flowchart of FIGS. 36 and 37 is stored in said storage medium 28a provided in the portable terminal 14 in the form of program codes readable by controller 27.
First, step SG50 determines whether there is a received initial call signal. If not, step SG50 is repeated. In that case, this processing may be terminated to execute another processing (for example, whether there is any keyed-in data). If so at step SG50, control passes to step SG52, which determines whether there is a sender number in the received call setup message. If so, step SG54 stores the sender number in RAM 29 and then control passes to step SG56. If there is no sender number at step SG50, control directly passes to step SG56, which starts up the sender subaddress recognizer 15, which causes the receiver subaddress recognizer to determine whether there is receiver subaddress information included. If not, control passes to step SG58, which displays the call signal in a regular manner and performs a general telephonic communication process.

If there is receiver subaddress information included at step SG56, control passes to step SG60, which determines whether there is "*" at the head of the sender subaddress information. If not, control passes to step SG62, which determines that the receiver subaddress information is a numerical message, converts the message to a numerical string, stores it in RAM 29, and displays the numerical string on the display 31.

If there is the symbol "*" at the head of the receiver subaddress information, control passes to step SG64, which determines whether there is "0" next to the head "*" of the sender subaddress information. If so, control passes to step SG66, which starts up the sender number converter 19, which converts data following the head symbol "*0" to a numerical string (sender number) in accordance with a predetermined conversion table, and delivers the numerical string to the controller 27. The numerical string is then checked as the sender number by the telephone directory checker 20 against the respective telephone numbers in the telephone directory recorded beforehand. If there is a matching telephone number, the sender's name recorded in correspondence to that telephone number is picked up, and the sender number and name are delivered to the controller 27, stored in RAM 29, and displayed on the display unit 31. The sender number in this case is a telephone number (for example, user-related company's, user home's or pager's telephone number) entered by the user at the sender end.

If the head symbol of the receiver subaddress information is not "*0", control passes to step SG68 of FIG. 37, which displays on the display 31 the sender number added to the call setup message stored at step SG54. Also, in this case, if the sender number matches a telephone number in the telephone directory as at step SG66, the sender's name recorded in correspondence to that telephone number is displayed along with that sender number. Control then passes to step SG70, which determines which of "2", "4" and "6" is present next to the head symbol "*" of the sender subaddress information. If the head symbol of the receiver subaddress information is one of "*2", "*4" and "*6", control passes to step SG72, which performs a corresponding converting process.

More specifically, if the head symbol is "*2", the free word converter 16 is started up to thereby convert the subsequent codes to a character string in accordance with a predetermined table. The character string is stored in RAM 29, and displayed as a free word on the display unit 31. If the head symbol is "*4", the fixed message converter 17 is started up, which converts the subsequent codes to a fixed message in accordance with predetermined table. The fixed message is stored in RAM 29 and displayed on the display unit 31. If the head symbol is "*6", the pictograph converter 18 is started up, which converts the codes subsequent to the "*6" to a pictograph character in accordance with a predetermined table. Similarly, the pictograph is stored in RAM 29 and displayed on the display unit 31.

If the head symbol of the receiver subaddress information is "*", and any of "0", "2", "4" and "6" does not follow, control passes to step SG74, which determines that the code following "*" is a numerical message, converts the message to a numerical string, stores same in RAM 29 and displays it on the display unit 31.

As a result, if "*0" is added to the receiver subaddress information, the subsequent data is displayed as the sender number. If "*2", "*4" or "*6" is added to the receiver subaddress information, the subsequent data can be converted to a predetermined character string, which is then displayed. Thus, also, if a terminal such as an ISDN public terminal having no sender number notification function wants to notify the receiver of the sender number or if a terminal having a sender number notification function wants to notify the receiver of a telephone number (for example, of a user's company, home or pager), which is not a telephone number set in the user's terminal, as the sender's number, the sender number can be displayed and a message can also be received from a terminal which has no message sending function.

While in the particular embodiment a composite terminal including a pager function and a portable terminal function has been described, the present invention is not limited to this particular case. For example, a composite terminal may be used which includes a pager function and a portable telephone function. Instead of retrieving an acknowledge message on the basis of the telephone number sent by the sender, the receiver may have the sender's name sent and retrieve the sender's telephone number and an acknowledge on the basis of the sender's name sent by the sender. Alternatively, a time recording function may be provided in the composite terminal so that data on the time when a pager message is received is added to an acknowledge message so as to be displayed, for example, "I acknowledge receipt of your message at 10:35" in the sender's pager. While in the particular embodiment the receiver subaddress was used, the sender subaddress may be used instead.

According to the particular embodiment, the following advantageous effects are produced:
(1) Even when the sender terminal and the receiver terminal belong to different communication networks, they can send/receive a message/a sender number between them.
(2) Even an ISDN terminal or ISDN public terminal which original has no message notification function can receive a message.
(3) An optimal message can be selected and sent depending upon the situation and the operation is simplified.

The above-mentioned sixth object of the present invention will be achieved by ninth-twelfth embodiments of the present invention.

### (Ninth Embodiment)

### 9-1-1) Structure of a Communication System:

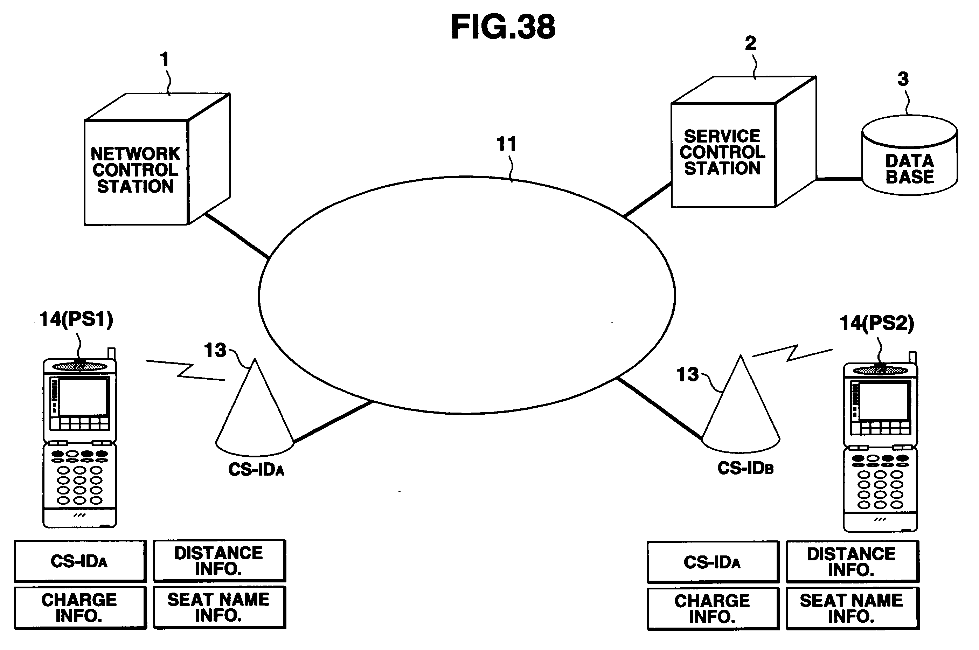

FIG. 38 is a block diagram of a communication system of the ninth embodiment. Structural portions of the present embodiment different from the eighth embodiment of FIG. 37 will be mainly described and further description of the other similar structural portions of the present and eighth embodiments will be omitted.

A database 3 contains various data such as a voice mail, image data and text data to be used by the users.

A time register 20 records a date and time on a real time basis in accordance with a predetermine clock signal, and delivers data on the date and time to the controller 27 at predetermined timings to record a call time and calculate telephone charges. A distance storage 40 contains data on the distance between public base stations associated with the sender and the receiver to get information on the distance between the sender and the receiver. A charge memory 41 contains data on a basic call charge for the distance between the public base stations. A seat name memory 42 contains data on the names of the seats of the public base stations. Information stored in those memories is read out in accordance with a read instruction from the controller 27. The distance memory 40, charge memory 41, and seat name memory 42 may also include RAM 29. The details of those memories will also be described later.

### 9-1-1) External Structure of portable Terminal:

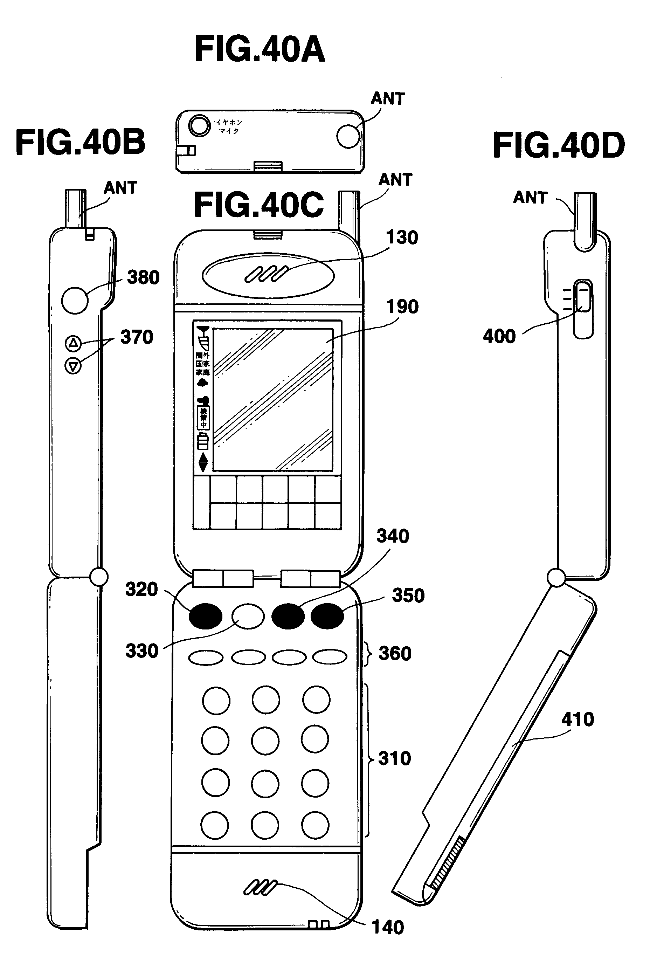

FIG. 40A is a plan view of each portable terminal used in this embodiment; FIG. 40B is a left side view of the portable terminal; FIG. 40C is a front view of the portable terminal; and FIG. 40D is a right side view of the portable terminal. Reference numeral 310 denotes a set of different dial buttons to enter various numerals, characters and symbols. Reference numeral 320 denotes a call button, which causes the portable terminal to go off the hook when depressed. Reference numeral 330 denotes a disconnect button which causes the PHS terminal to go back on the hook when pressed after the telephone call button is depressed. Reference numeral 340 denotes a transceiver/extension button used to make direct telephonic communication with another portable terminals.

Reference numeral 350 denotes an answer/hold button, which is depressed to hold the conversation or to send the receiver terminal a voice mail stored in the sender terminal. Reference numeral 360 denotes various function buttons used to redial any telephone number, record/delete a shortened number, measure a call time, and call a telephone directory which is a database of beforehand recorded telephone numbers. Sound volume buttons 370 of FIG. 40B are used to search for the telephone directory or to adjust the sound volume. A recording button 380 is operated to record in this terminal a voice from a party and to record in this terminal a voice mail to be sent to a party. In FIG. 40D, reference numeral 400 denotes a slide switch which is slid to turn on/off a power supply (not shown), and select one of determine in which of transceiver on/off, transceiver and telephone modes. Reference numeral 410 denotes a touch pen provided removably on the body of the portable terminal. When the user depresses any one of icons or choices on the liquid crystal display surface of the display unit 31 with the touch pen 410, a function allocated to that icon is fulfilled or one of the choices is selected.

### 9-1-3) Structure of a Message:

The messages of FIGS. 13A and B are also used in this embodiment, so that their further description will be omitted.

In the present embodiment, the portable terminal inserts a positional information request into a sender or receiver subaddress of a call setup message or into a facility message and the call setting message or the facility message to the receiver.

In response to the positional information request, the receiver terminal inserts into a facility message its positional information, which includes the identification number CSID of a public base station for the portable terminal, and the number of a service area in which the portable terminal receives services from the public base station, and the name of the service area, and sends it back to the sender.

### 9-1-4) Distance Information:

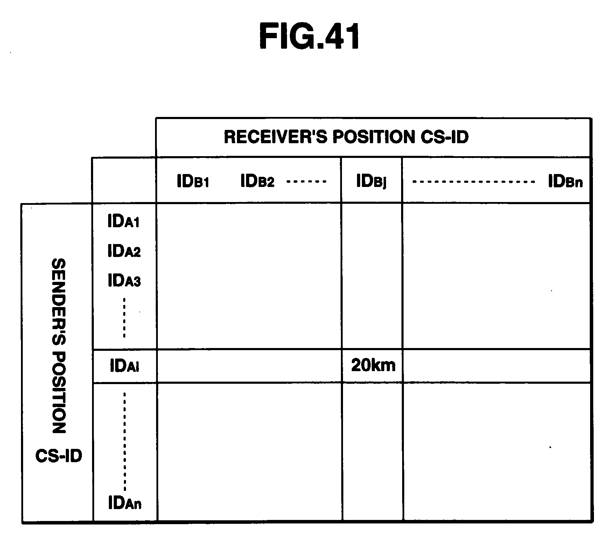

FIG. 41 schematically illustrates the arrangement of distance information stored in the distance memory 40. The distance memory 40 contains information on the distance between public base stations, which have identification numbers CS-IS. In an service area of a public base station from which a portable terminal receives services, the portable terminal records itself in the public base station as receiving the services from the public base station, which is hereinafter referred to as position recording. In this case, the portable terminal holds in its body (for example, its RAM) an identifier CS-ID to identify the public base station in which the portable terminal is recorded. When the sender portable terminal calls a receiver terminal, the sender terminal requests receiver's positional information from the receiver in the subaddress or facility of a call setup message. At this time, the receiver sends back its CS-ID in a facility message. The sender terminal gets information on the distance between the sender and the receiver, 20 km in the illustrated example, on the basis of the sender-held identifier CS-IDA and the identifier CS-IDB received from the receiver terminal. Before telephonic communication, the sender terminal displays the distance on the display unit 31.

### 9-1-5) Charge Information:

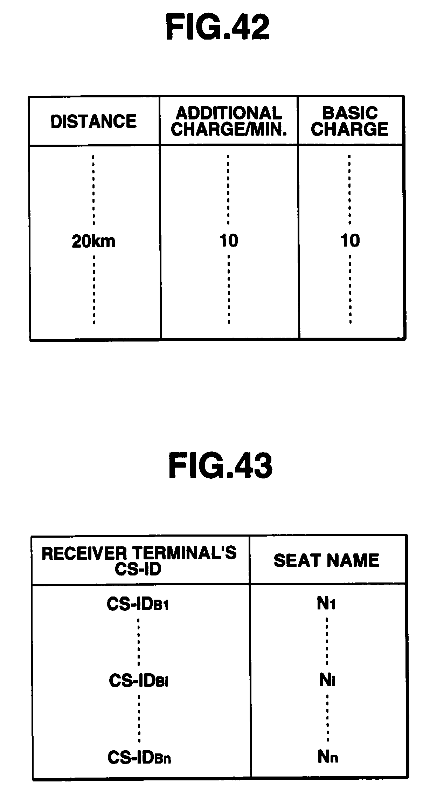

FIG. 42 illustrates a charge memory 41, which contains respective distances, corresponding basic charges, and corresponding additional charges per minute exceeding a basic call time. In the sender portable terminal, before telephonic communication, a basic charge for telephonic communication with the receiver is displayed on the display unit 31. During telephonic communication, telephone charges calculated on the basis of the call time recorded by the time register 20 and the above-mentioned additional charge are accumulated on the basic charge to calculate the total telephone charge, which is then displayed real-time on the display unit 31.

### 7-1-6) Seat Name Information:

FIG. 43 illustrates seat name information stored in the seat name memory 42. The seat name memory 23 contains identifiers CS-ID which identify the corresponding public base stations, and corresponding names of the seats where the public base stations are installed. Before telephonic communication, the sender terminal gets the name of the seat where the receiver terminal is present, in accordance with the identifier CS-ID gotten from the receiver terminal, and displays the seat name on the display unit 31.

### 9-2) Operation:

The operation of the portable terminals of this embodiment will be will be described next. The operations of the respective elements of the portable terminal involved in telephonic communication are similar to those of the corresponding elements of the general portable terminal, so that further description thereof will be omitted.

### 9-2-1) First Operation:

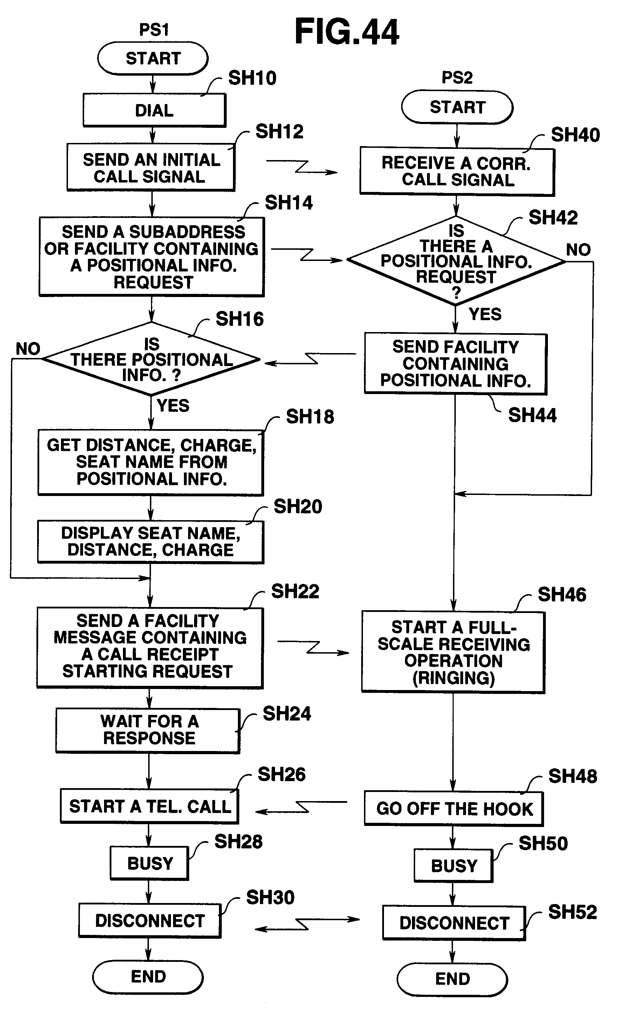

FIG. 44 is a flow chart of a first operation of the portable terminal. First, at step SH10, the user in the sender portable terminal PS1 refers to the telephone directory recorded beforehand or directly pushes dial buttons 310 to enter the receiver terminal's telephone number, and then depresses the call button 320. In response to this operation, step SH12 performs an initial call signal sending process. Step SH14 inserts a positional information request into a subaddress of a (call) setup message or a facility message and sends the message to the receiver.

Program which realizes each function as shown in the flowchart of FIG. 44 is stored in said storage medium 28a provided in the portable terminal 14 in the form of program codes readable by controller 27.

At step SH40, the receiver portable terminal PS2 receives the call setup message from the sender terminal PH1. Step SH42 then determines whether there is a positional information request included. If not, control directly passes to step SH46. If so at step SH42, control passes to step S44, which inserts the public basic station identifier CS-IDB (positional information), stored in the previous position recording in the public base station, into a facility message and sends same back to the sender.

In the sender terminal PS1, step SH16 determines whether the base station positional information (CS-IDV) held by the receiver terminal PS2 has been received in response to the sender's positional information request. If so, control passes to step SH18, which searches for the distance memory 40 on the basis of the sender-held CS-IDA and the received receiver-held CS-IDB to get the distance between the sender and the receiver terminal (for example, 20 km), searches for the charge memory 41 on the basis of the gotten distance information to get a basic charge for telephonic communication over that distance, retrieves the seat name memory 42 on the basis of the received receiver-held CS-IDB to get the seat name of the receiver. Step SH20 then displays the sheet name, distance and basic charge on the display unit 31. Then, step SH22 inserts a call signal receiving operation starting request into the facility message, sends it to the receiver, and waits for the receiver PS2 to go off the hook.

When the receiver terminal PS2 receives the call signal receiving operation starting request from the sender, step SH46 rings the arrival of the call signal to start a call signal receiving operation. When the user causes the receiver terminal to go off the hook at step SH48, step SH50 places the receiver terminal in a busy state. Since the receiver terminal PS2 has gone off the hook, the sender terminal PS1 starts to make a telephone call to the receiver at step SH26, and step SH28 places the terminal PS1 in a busy state. At this time, in the sender terminal PS1, additional charges gotten at step SH18 are accumulated in accordance with a lapse of the call time recorded by the time register 33, and the total call charge is calculated and displayed on the display unit 31. Steps SH30 and 52 on the sides of the sender and receiver terminals PS1 and PS2, respectively, disconnect the circuit line by going back on the hook.

As described above, the first operation of the particular embodiment, the sender terminal PS1 can know the receiver's position (seat name) and a related basic charge before telephonic communication starts.

### 9-2-2) Second Operation:

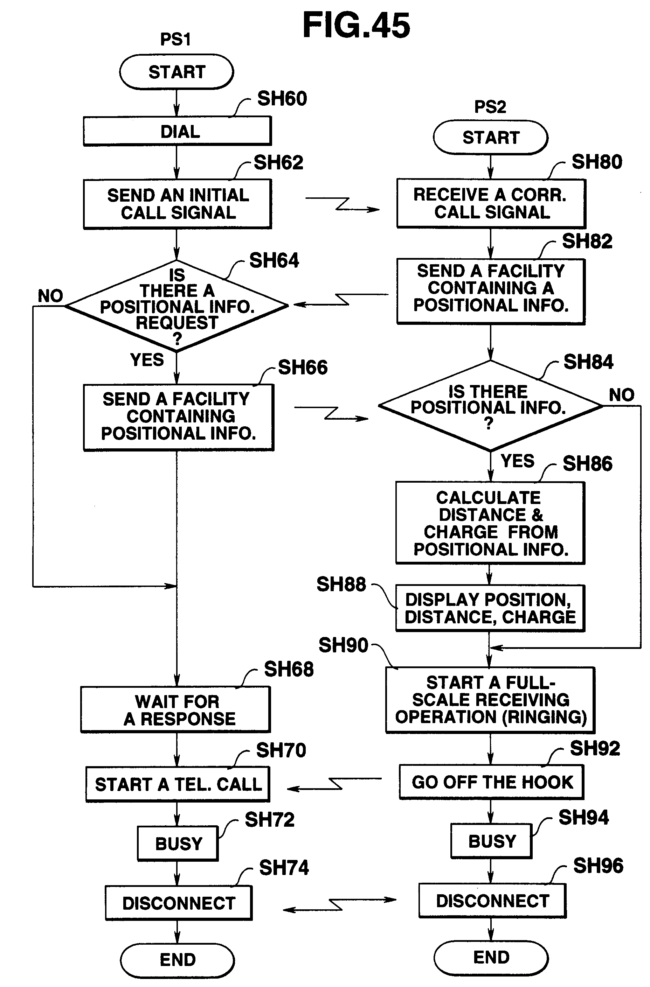

The second operation of the portable terminals of the particular embodiment will be described next. FIG. 45 is a flowchart of the second operation of the portable terminals PS1 and PS2.

Program which realizes each function as shown in the flowchart of FIG. 45 is stored in said storage medium 28a provided in the portable terminal 14 in the form of program codes readable by controller 27.

First, at step SH60, the user at the sender terminal PS1 refers to the telephone directory recorded beforehand and pushes the dial buttons 310 to enter a receiver's telephone number. When the call button 320 is pressed, step SH62 performs an initial call signal sending operation.

At step SH80, the receiver terminal PS2 receives a call signal based on the initial call signal sending process from the sender PS1, and then inserts a positional information request into a facility message and sends it back to the sender at step SH82.

At step SH64, the sender terminal PS1 receives the facility message and determines whether there is a positional information request included. If not, control directly passes to step SH68. If there is a positional information request included, control passes to step SH66, which inserts the public base station identifier CS-IDA (positional information) stored in the sender terminal in the previous position recording in the public base station and a call signal receiving operation starting request into a facility message, and sends it back to the sender. Step SH68 then waits for the receiver terminal PS2 to go off the hook.

At step SH84, the receiver terminal PS2 determines whether the terminal PS1-held public base station identifier CS-IDA (positional information) has been received. If so, control passes to step SH86, which searches for the distance memory 40 on the basis of the receiver terminal PS2-held CS-IDB and the received sender terminal PS1-held public base station CS-IDA to get information on the distance between the sender and the receiver (for example, 20 km), searches for the charge memory 41 on the basis of the gotten distance information to get information on the basic charge for telephonic communication over that distance, and searches for the seat name memory 42 on the basis of the sender terminal PS1-held CS-IDA to get the seat name of the sender terminal. Then, step SH88 displays the seat name of the sender terminal, the distance and the basic charge on the display unit 31.

At step SH90, the receiver terminal PS2 rings the receipt of the call signal to start a corresponding receipt operation. When the receiver goes off the hook at step SH92, the receiver is placed in a busy state at step SH94. Since the receiver terminal PS2 off the hook, the sender's terminal PS1 starts a telephone call to the receiver at step SH70, and is placed in a busy state at step SH72. At this time, the receiver terminal PS2 accumulates additional charges gotten at step SH86 in accordance with a lapse of the call time recorded by the time register 33 to calculate the total call charge, and displays it on the display unit 31. At step SH74, the sender and receiver terminals PS1 and PS2 themselves disconnect the circuit lines by going back on the hook at steps SH74 and SH96, respectively.

As described above, according to the second operation of the present embodiment, the receiver terminal PS2 can know the sender's position (seat name) and the basic charge for telephonic communication when the receiver terminal receives a call signal from the sender.

### (Tenth Embodiment)

### 10-1) Structure:

### 10-1-1) Communication System:

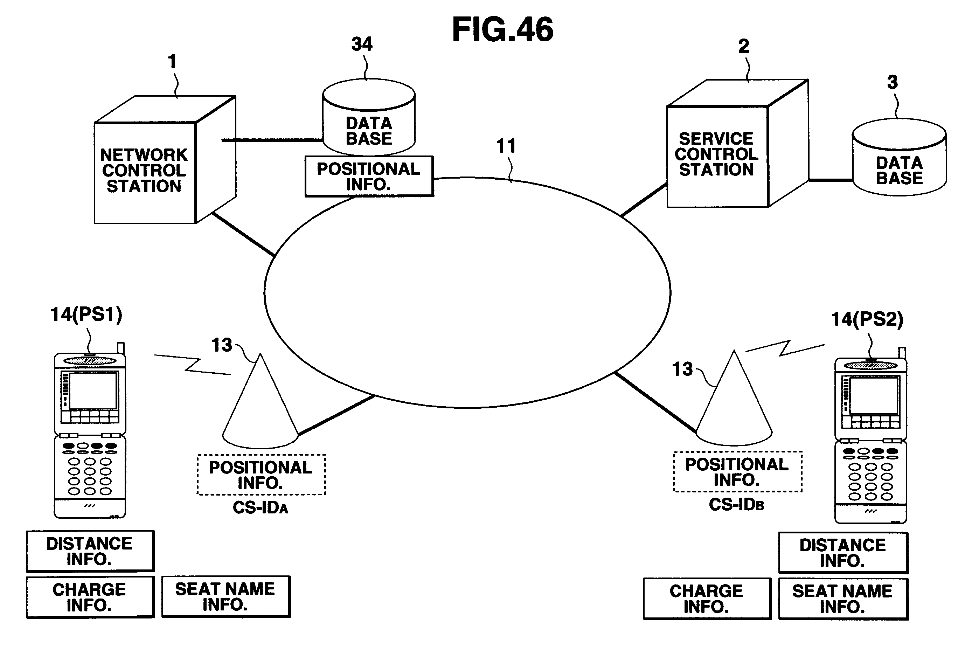

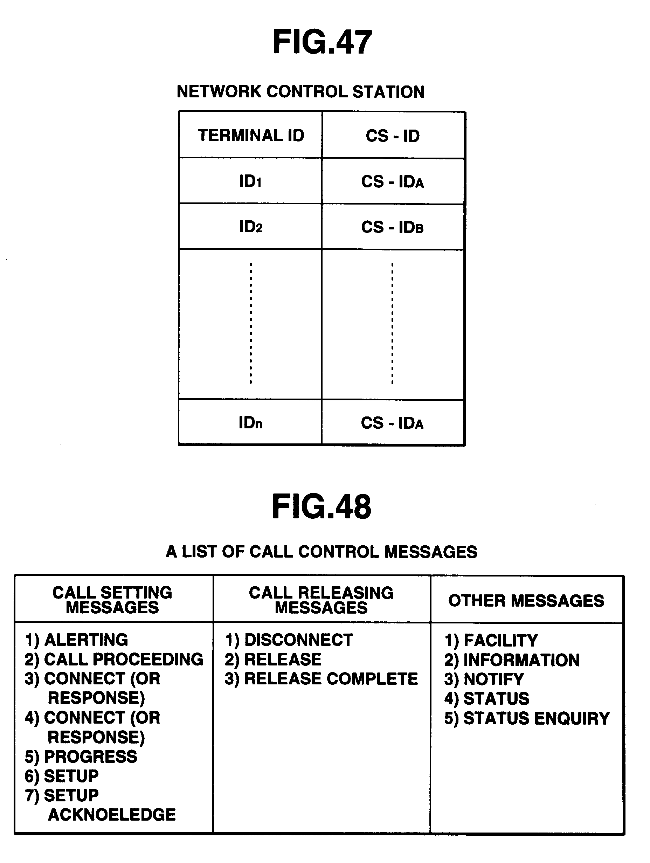

FIG. 46 illustrates a communication system of a tenth embodiment. The corresponding structural portions of the ninth and tenth embodiments of FIGS. 38 and 46 are identified by the same reference numeral and further description thereof will be omitted. The network control station 1 is provided with a database 34, which, as shown in FIG. 47, contains terminal identifications (telephone numbers) to identify the respective portable terminals and corresponding CS-IDs which identify public base stations in which the positions of the respective portable terminals are recorded. The data of the database 34 are rewritten automatically when the public base station for the portable terminal changes to another one, that is, when the portable terminal moves from the service area of one public base station to that of another. The IDs of the sender and receiver terminals PS1 and PS2 are inserted into a call setup message, which is then sent to the receiver when the sender terminal PS1 performs an initial call signal sending process.

The network control stations 1 searches for the position information database 34 of FIG. 47 on the basis of the IDs (telephone numbers) of the sender and receiver terminals PS1 and PS2 to get the CS-IDA and CS-IDB held by the terminals PS1 and PS2, inserts them into a call control message and sends it to the terminal PS1 (or PS2). The terminals PS1, PS2 get information on the respective seat names, basic charges, additional charges and the distance between the terminals PS1 and PS2 on the basis of the respective CS-IDA and CS-IDB as in the ninth embodiment.

### 10-1-2) Call Control Messages:

FIG. 48 illustrates the kinds of call control messages usable in all the embodiments described above and to be described below. The messages are information sent/received between portable terminal PS1 or PS2 and a corresponding radio public station (or network control station) when initial communication starts. The call control messages used are call setting messages (an alerting message, call proceeding message, response (or connect) message, response (connect) acknowledge message, progress message, call setup message, call setup acknowledge message); call releasing messages (disconnect message, release message, release complete message); and other messages (facility message, information message, notify message, status message, status enquiry message).

In the particular embodiment, when a portable terminal sends the network control station (or a public radio station) a positional information request in a call setup message, the network control station (or public radio station) inserts positional information (IS-IDA, CS-IDB) in a facility message and sends it back to the sender portable terminal or sends it to the receiver portable terminal. While in the particular embodiment the call setup message and the facility message are used, any massage may be used as long as it has a facility area.

### 10-2) Operation:

The operations of the portable terminals of the tenth embodiment will be described next. Since the operations of the respective elements of the portable terminals involved in telephonic communication are similar to those of the general portable terminals, and further description thereof will be omitted.

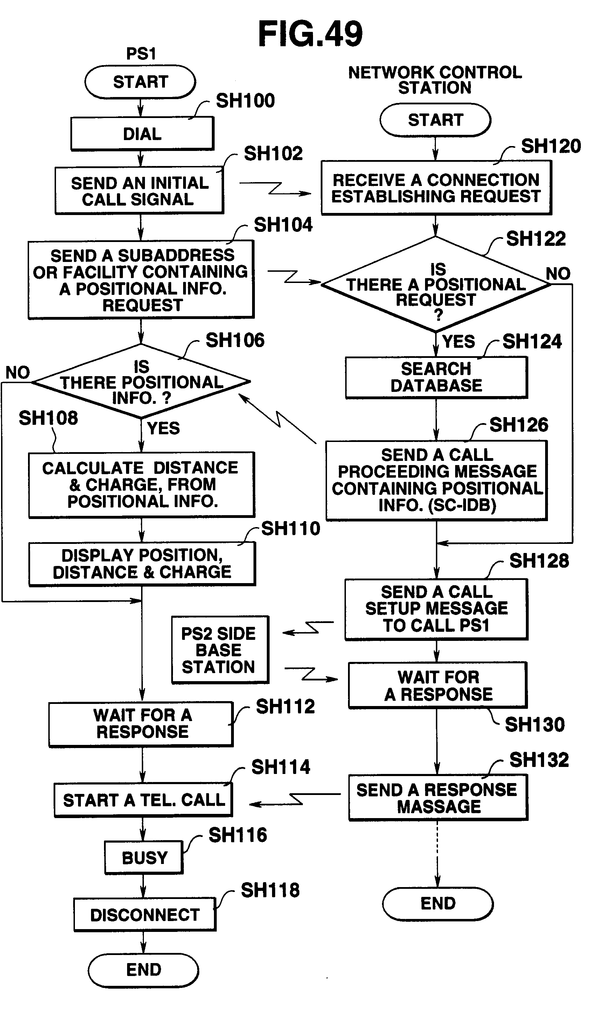

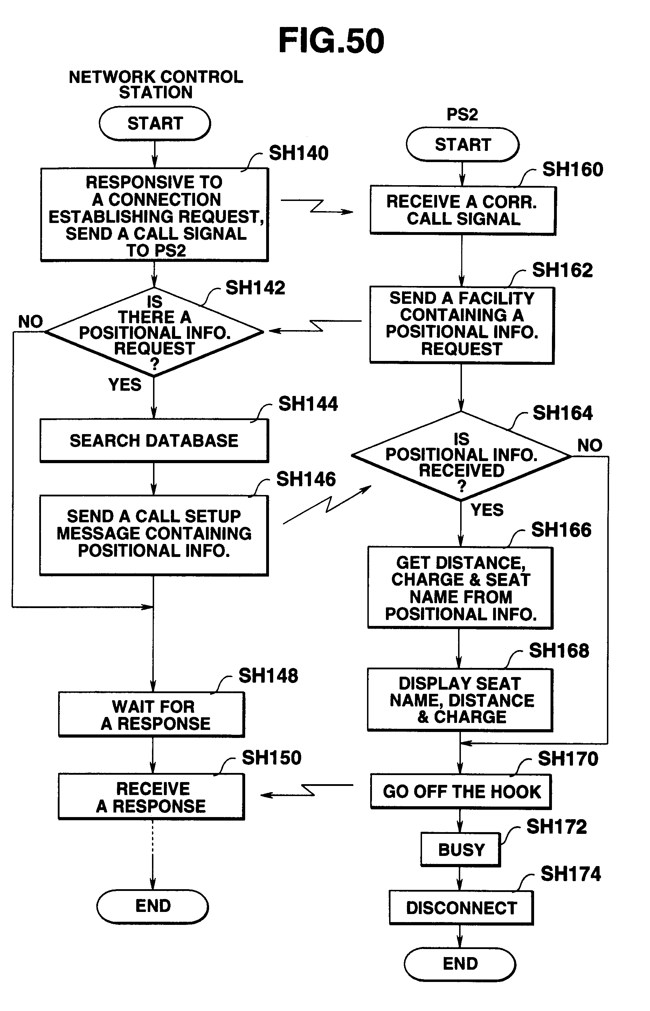

Program which realizes each function as shown in the flowchart of FIGS. 49 and 50 is stored in said storage medium 28a provided in the portable terminal 14 in the form of program codes readable by controller 27.

### 10-2-1) First Operation:

FIG. 49 illustrates a flow chart of a first operation of a sender portable terminal PS1 and the network control station of the tenth embodiment. First, at step SH100, the user at the sender terminal PS1 refers to the telephone directory recorded beforehand, or directly pushes the dial buttons 310 to enter a receiver's telephone number, and pushes the call button 320. In response to this operation, step SH102 performs an initial call signal sending process. Then, step SH104 inserts a positional information request into a subaddress of a call setup message and sends it out to the network control station or inserts a positional information request into a facility message, and then sends it to the network control station after the call setup message is sent out.

At step SH120, the network control station 1 receives a line establishing request due to the initial call signal sending process from the sender terminal PS1. Then, step SH122 determines whether there is a positional information request included. If not, control passes to step SH128 without performing processing at steps SH124 and SH126. If there is the positional information request, control passes to step SH124, which searches for the database 34 on the basis of the terminal ID (telephone number) of the receiver terminal PS2 to get the identifier (or positional information) CS-IDB of the public base station for the receiver terminal PS2. Then, step SH126 inserts the positional information (CS-IDB) into a facility of a call proceeding message and sends it back to the sender terminal PS1.

In the sender terminal PS1, step SH106 determines whether the receiver terminal PS27-held positional information CS-IDB has been received. If so, control passes to step SH108, which searches for the distance memory 40 on the basis of the received receiver terminal PS2-held CS-IDB and the sender terminal PS1-held CS-IDA to get information on the distance between the base stations for the sender and the receiver (for example, 20 km), searches for the charge memory 41 on the basis of the gotten distance information to get information on the basic charge for telephonic communication over that distance, searches for the seat name memory 42 on the basis of the received receiver terminal PS2-held CS-IDB to get the seat name of the receiver terminal. Then, step SH110 displays the seat name, distance and basic charge on the display unit 31. Then, step SH112 waits for the receiver terminal PS2 to go off the hook.

In the network control station 1, step SH128 calls the receiver terminal PS2 via the public base station on the receiver side, using a call setup message, and step SH130 waits for the terminal PS2 to go off the hook. At this time, the terminal PS2 rings the arrival of a call to start a call signal receiving operation. When the terminal PS2 goes off the hook, step SH132 sends a call response message to the sender terminal PS1.

On the other hand, in the terminal PS1, step SH114 starts a telephone call to the receiver and step SH116 places the sender terminal PS1 in a busy state. At this time, in the sender terminal PS1, the additional charges gotten at step SH108 are accumulated in accordance with a lapse of the call time recorded in the time register 20 to calculate the total call charge, and displays it on the display unit 31. When either of the sender and receiver goes back on the hook, step SH118 disconnects the appropriate circuit line.

As described above, according to the first operation of the particular embodiment, the sender terminal PS1 can know the position (seat name) of the receiver terminal and the basic charge for telephonic communication before the telephonic communication starts.

### 10-2-2) Second Operation:

FIG. 50 is a flow chart of a second operation of a receiver portable terminal PS2 and the network control station in the particular embodiment. When there is a line establishing request (an initial call signal sending process) from the sender terminal PS1, the network control station 1 first calls a receiver terminal PS2 via a pubic base station on the receiver side in a call setup message at step SH140.

On the other hand, at step SH160 the receiver terminal PS2 receives a call signal and then at step SH162 inserts a positional information request into a facility message and sends it to the network control information. In the network control station 1, step SH142 determines whether there is a positional information request included. If not, without performing steps SH144 and SH146, control passes to step SH148. If there is a positional information request included, control passes to step SH144, which searches for the database 34 on the basis of the ID of the receiver terminal PS2 (telephone number received from the sender terminal) to get the public base station's CS-IDA for the sender terminal PS1. Then, step SH146 inserts the public base station's CS-IDA into a facility of the call setup message and sends it back to the receiver terminal PS2. Thereafter, step SH148 waits for the terminal PS2 to go off the hook.

In the receiver terminal PS2, step SH164 determines whether the public base station's positional information CH-IDA held by the sender terminal PS1 has been received. If so, control passes to step SH166, which searches for the distance memory 40 on the basis of the received sender terminal PS1-held CS-IDA and the receiver terminal's CS-IDB to get information on the distance between the public base stations for the sender and the receiver terminals (for example, 20 km), searches the charge memory 41 to get the basic charge for a telephone call over that distance, further searches for the seat name memory 42 on the basis of the sender terminal-held CS-IDA to get the seat name of the sender terminal. Then, step SH168 displays the seat name of the sender terminal, the distance and the basic charge on the display unit 31. At this time, the receiver terminal PS2 rings the arrival of the call signal.

When the receiver terminal PS2 goes off the hook at step SH170, step SH172 places the receiver terminal PS2 by a busy state. Since the receiver terminal PS2 goes off the hook, the sender terminal PS1 is also placed in a busy state. At this time, in the receiver terminal PS2, the additional charges gotten at step SH166 are accumulated in accordance with a lapse of the call time recorded by the time register 20 to calculate the total call charge and displays it on the display unit 31. When either of the sender and the receiver goes off the hook, step SH118 disconnect the appropriate circuit line.

As described above, according to the second operation of the tenth embodiment, the receiver terminal PS2 can know the position (seat name) of the sender terminal and the basic charge for telephonic communication when the call signal is received.

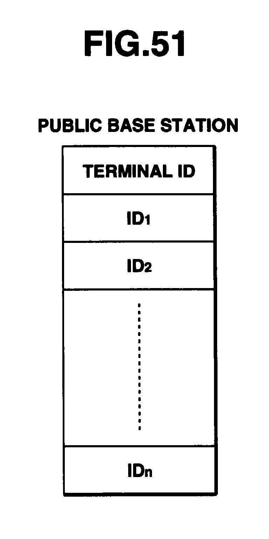

While in the tenth embodiment the network control station 1 is illustrated as controlling the CS-ID (the portable terminal-held public base station's positional information), the present invention is not limited to this particular case. For example, the base station CS-ID held by a portable terminal may be controlled by the public base station 5 itself. In this case, as shown in FIG. 51, the ID (telephone number) of the portable terminal whose positional information is recorded is stored in the public base station 5. When the public base station 5 receives a line connection request from the portable terminal, the network control station may request the public base station in which the receiver terminal's position is recorded to send the network control station the CS-ID of the public base station 13.

While in the ninth and tenth embodiments the distance/charge based on the positional information have been calculated between the portable terminals, such calculation may be performed by the network control station. In this case, when the network control station gets the positional information for the sender and the receiver, it is required to calculate the distance/charge on the basis of the positional information and to notify the respective sender and receiver terminals of the calculated distance/charge.

### (Eleventh Embodiment)

### 11-1-1) Communication System:

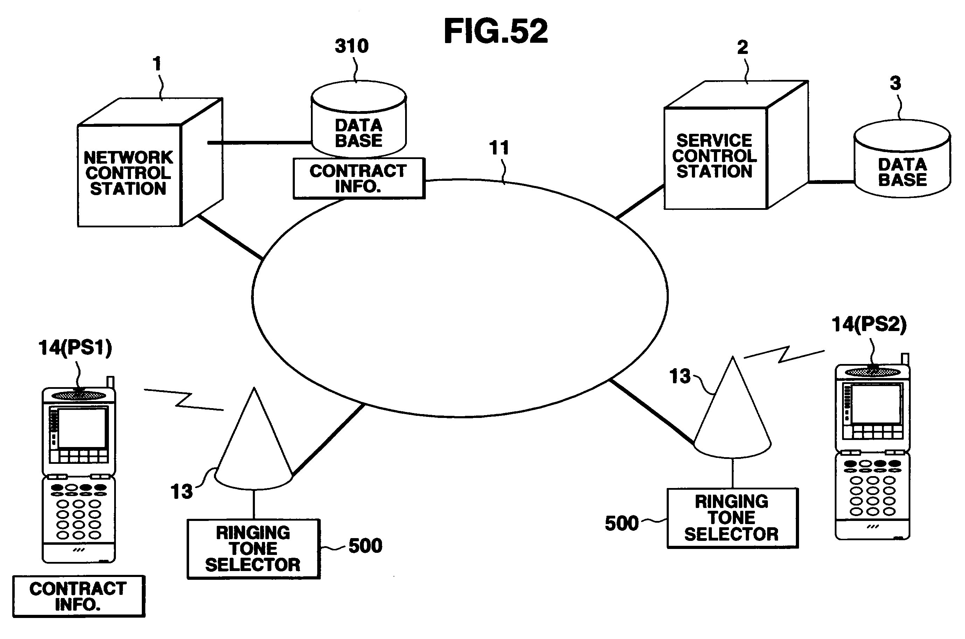

FIG. 52 illustrates a communication system of an eleventh embodiment of the present invention. The structural portions of FIGS. 52, 38 and 46 are identified by the same reference numeral and further description thereof will be omitted. In FIG. 52, the network control station 1 is provided with a database (charge database) 310 which controls a terminal ID inherent in the user (portable terminal), and contract information on the contents of the communication services for which the user has contracted. The network control station 1 searches the data base 34 on the basis of the terminal ID of the sender terminal PS1 via the public base station 13 to get corresponding contract information, and sends it to the public base station 5.

The public base station 5 is provided with a call sound selector 500. In response to an initial call signal (line connection request) sent from a portable terminal PS1, the public base station 13 sends the ID of the portable to the network control station 1. In response to this operation, the network control station 1 sends back the contract information to the public base station 13. The public base station and more particularly the ring tone selector 500 receive the contract information sent from the network control station 1, determines whether the communication charge for the current time zone is a regular (higher) one or a discounted (lower) one, selects a ringing tone signal depending on the system of charges, and sends the ringing tone signal to the sender terminal PS1. Simultaneously, the public base station 5 starts circuit connection with the receiver terminal PS2.

### 11-1-2) Structure of a Database of the Network Control Station:

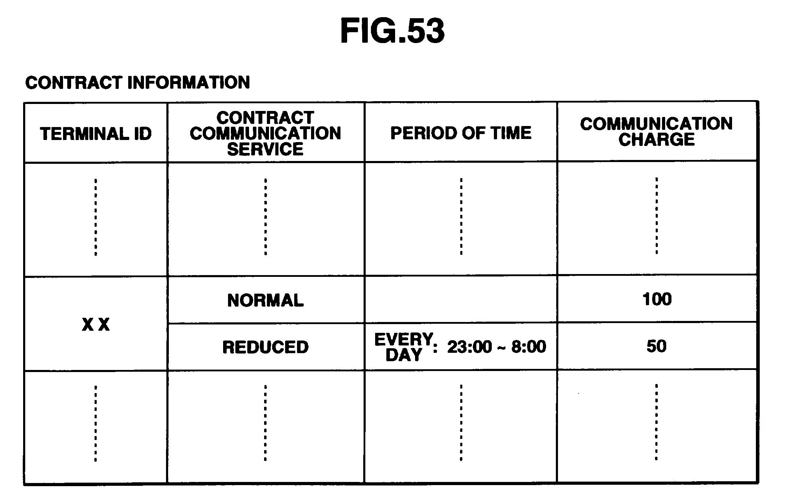

FIG. 53 illustrates the structure of a database 310 controlled by the network control station 1. The database 310 contains the ID of each user's portable terminal, the type of a communication service for which the user of the portable terminal having that ID has contracted, a period of time for which the communication service is available, and a communication charge per unit time of the communication service. In the illustrated example, the user of a portable having an ID "XX" has contracted for a regular communication service and a discounted service which is available everyday for a period of time of 23:00-8:00, whose the communication charge per unit time is ¥50 with the regular communication service being available for another period of time with communication charge of ¥100 per unit time.

### 11-1-3) Operation:

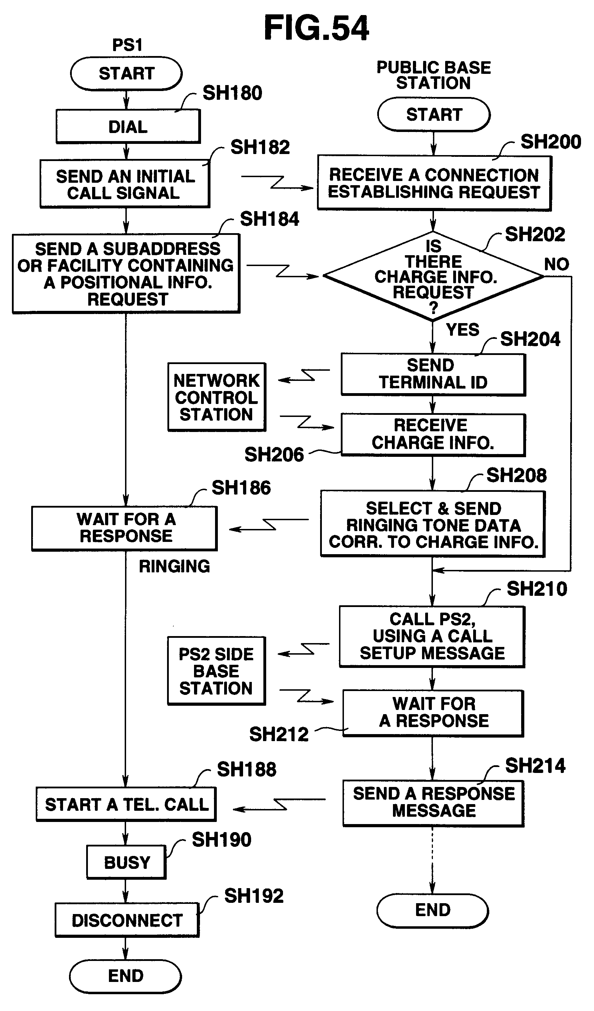

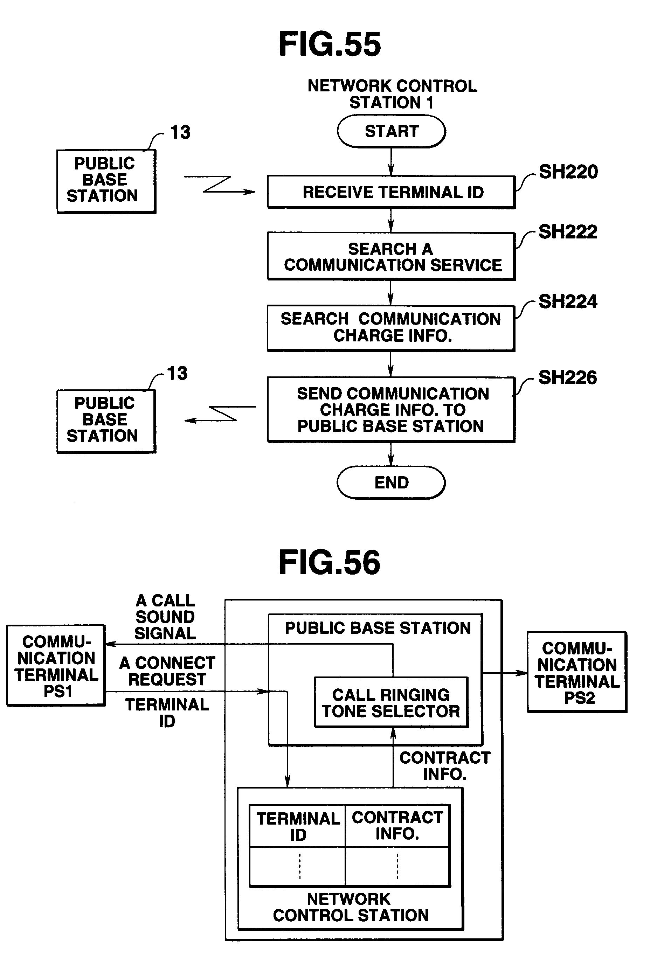

The operation of a communication system of the eleventh embodiment will be described next. FIG. 54 is a flow chart of the operations of the sender terminal PS1 and the public base station 5. FIG. 55 is a flow chart of the operation of the network control station. FIG. 56 illustrates the whole operation of the communication system.

Program which realizes each function as shown in the flowchart of FIGS. 54 and 55 is stored in said storage medium 28a provided in the portable terminal 14 in the form of program codes readable by controller 27.

In the sender terminal PS1, at step SH180 the user refers to the telephone directory recorded beforehand or directly pushes the dial buttons 310 to enter the telephone number of a receiver terminal and presses the call button 320. In response to this operation, step SH182 performs an initial call signal sending process. As shown in FIG. 56, the sender terminal PS1 sends the public base station 13 a connection request and the ID of the terminal PS1. Then, step SH184 inserts a charge information request into a subaddress of a call setup message, and sends the resulting message to the public base station 13 or inserts the charge information request into a facility message, and sends it after the call setup message is sent. Then, step SH186 waits for a ringing tone from the pubic base station 13.

On the other hand, in the pubic base station 13, step SH200 receives a line establishing request due to the initial call signal sending process from the sender terminal PS1, and then step SH202 determines whether there is a charge information request included. If not, control directly passes to step SH210 without performing the processing at steps SH204-SH208. If there is the charge information request included, control passes to step SH204, which sends the ID of the terminal PS1 to the network control station 1 (FIG. 56), and then waits for the charge information to come from

In the public base station 13, step SH206 receives the communication charge information. Step SH208 then selects ringing tone data depending on the communication charge from the ringing tone selector 500, and sends it to the terminal PS1 (FIG. 40). Then, step SH210 calls the receiver terminal PS2, using a call setup message, and step SH212 waits for the terminal PS2 to go off the hook.

When in the sender terminal PS1 step SH186 receives a ringing tone signal from the public base station 13, step SH186 produces a ringing tone depending on a charge system employed at this time. More specifically, if the tome zone is such that the user can utilize only the regular service, a regular ringing tone is produced whereas, if the tome zone is such that the user can utilize a discounted service, a ringing tone different from the regular one is produced. Thus, the user can know the communication charge directly before the telephonic communication starts.

When the receiver terminal PS2 goes off the hook, at step SH214 the public base station 13 sends back a response (connection) message to the sender terminal PS1. Thus, in the terminal PS1, step SH188 starts telephonic communication and then step SH190 places the sender terminal PS1 in a busy state. When either of the sender and receiver terminals PS1 and PS2 goes off the hook, step SH192 disconnects the appropriate circuit line.

As described above, according to the present embodiment, the sender terminal PS1 can know the communication charge before telephonic communication starts. As a result, if the charge is higher, the terminal PS1 can determine that the communication should be terminated in a minimum possible time for saving purposes and also adjusts the communication time. Since a different ringing tone notifies the sender of a different communication charge, the user can know the communication charge of interest even if the user does not severally confirm the display of the charge. Since the communication network confirms the charge information and correspondingly changes the ringing tone, even an already existing terminal is usable without changing its circuit composition.

While in the present embodiment the user is notified of a different communication service to be used or its different communication charge by changing the corresponding ringing tone, the present invention is not limited to this particular case. For example, the user may be notified by corresponding voice or display.

### (Twelfth Embodiment)

### 12-1-1) Structure of a Communication System:

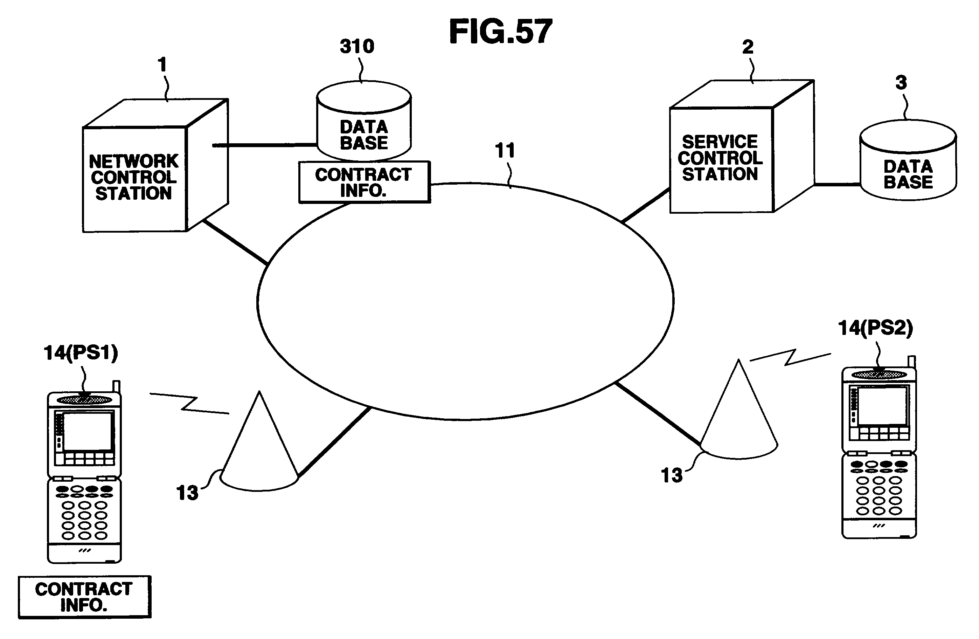

FIG. 57 illustrates a communication system of a twelfth embodiment of the present invention. The corresponding elements of the ninth, tenth and eleventh embodiments of FIGS. 38, 46 and 52 are identified with the same reference numeral and further description thereof will be omitted. In the twelfth embodiment, contract information stored in the network control station 1 is also stored in the terminal PS1 or PS2. When the sender terminal is connected to the communication network or when the user performs a "communication charge confirming" operation, the sender terminal retrieves from the contractor information a communication service available at this time, and changes a ringing tone depending on the available communication service (regular high-charge service or discounted charge service) to notify of the communication charge.

The contract information stored in the database 310 of the network control station 1 is so-called master data, which is first renewed when the user contracts newly for a comminution service or changes the contents of the contract. When the PHS terminal first connects to the network control station 1 after the PHS terminal makes a new contract with the network control station or renews the contract, the network control station 1 sends the contract information to the terminal PS1 (or PS2). When the terminal PS1 (or PS2) receives the contract information, it stores the contract information or renews the already existing contract information.

### 12-1-2) Structure of Contract Information in the Communication Terminal or Network Control Station

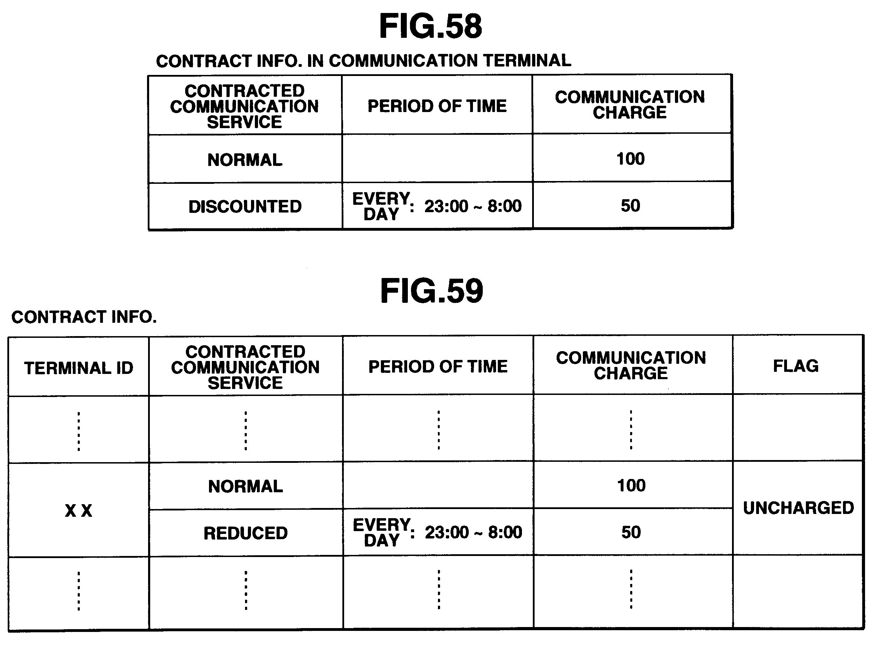

FIG. 58 illustrates the data structure of the contract information stored in the terminals PS1 or PS2. In FIG. 58, the contract information in the terminal PS1 (or PS2) having its ID is composed of the type of a communication service for which the user of the portable terminal has contracted, a period of time for which that communication service is provided, and a communication charge per unit time for the communication service.

FIG. 59 illustrates the data structure of the contract information stored in the network control station 1. In FIG. 59, the contract information in the network control station 1 includes a flag indicating first connection or a change of the contents of the contract in addition to the data structure of FIG. 58. When the user newly contracts for a communication service or changes the contents of the contact, the contract information in the network control station 1 are renewed, at which time the flag is set.

### 12-2) Operation:

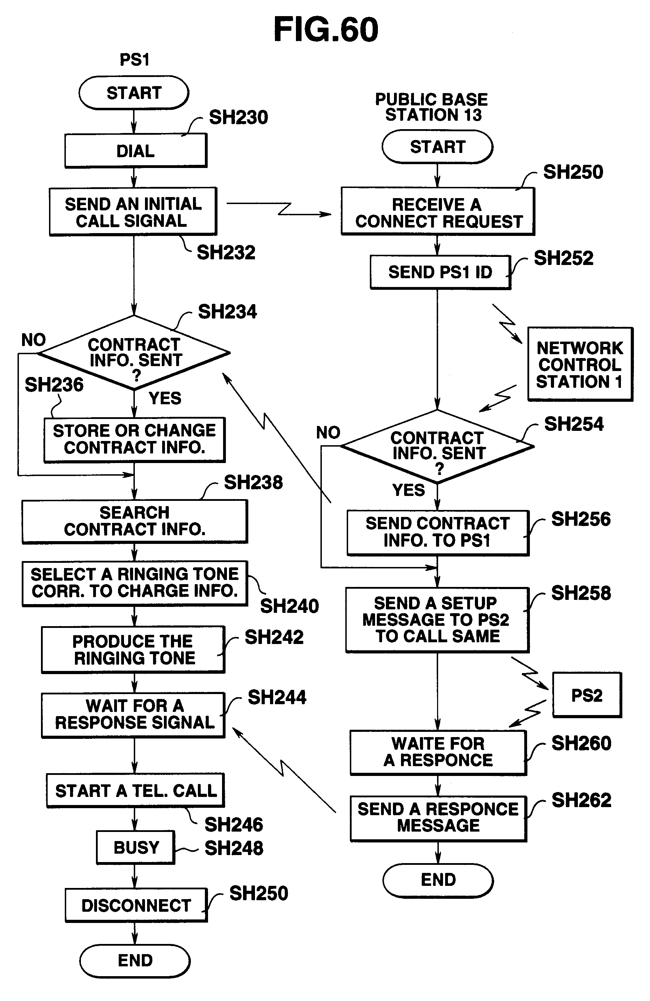

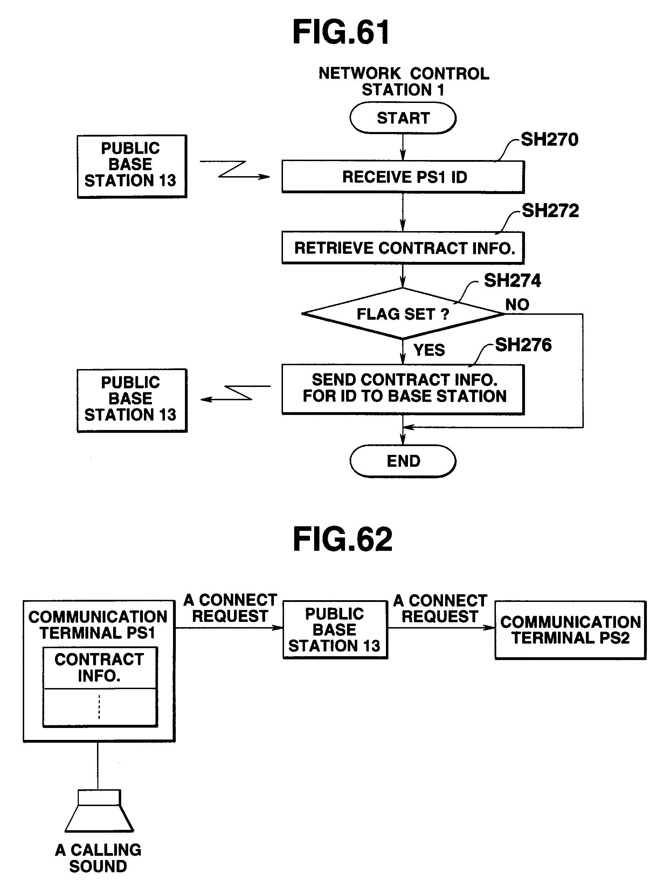

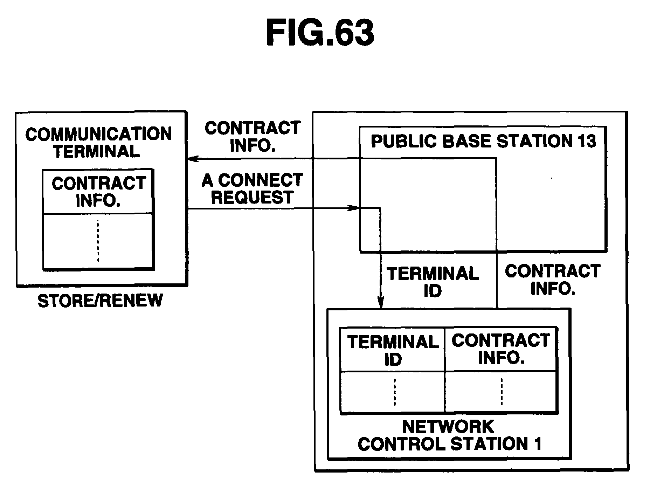

The operation of the communication system of the twelfth embodiment will describe next. In the following, a communication process in which the sender terminal PS1 sends a line connection request to the communication network to thereby be connected to the receiver, and a storing/renewing process for the contract information in the terminal PS1 will be described. FIG. 60 is a flow chart of the operations of the sender terminal PS1 and the public base station 13. FIG. 61 is a flow chart of the operation of the network control station 1. FIG. 62 illustrates the whole operation of the communication system in the communication. FIG. 63 illustrates the whole operation of the communication system in the contract information storing/renewing operation.

Program which realizes each function as shown in the flowchart of FIGS. 60 and 61 is stored in said storage medium 28a provided in the portable terminal 14 in the form of program codes readable by controller 27.

At step SH230, the user at the sender terminal PS1 refers to the telephone directly recorded beforehand or directly pushes the dial buttons 310 to enter a receiver's telephone number, and then pushes the call button 320. In response to this operation, step SH232 sends a line connection request to the public base station 13 (FIG. 61). In the public base station 13, step SH250 receives the line connection request, and step SH252 sends the ID of the sender terminal PS1 to the network control station 1.

In the network control station 1, step SH270 of FIG. 61 receives the terminal ID. Then, step SH272 searches for the contraction information stored in the database 310 on the basis of the terminal ID. Step SH274 then determines whether a flag for the contract information is set. As described above, the flag is set, for example, when the user has contracted newly for a communication service or changed the contents of the contact. Thus, for example, when the user sends a line connection request to the public base station 13 after the terminal PS1 has contracted for a new communication service or directly after the terminal PS1 has changed the contents of the contract. If the flag is set at step SH274, control passes to step SH276, which sends contract information corresponding to the terminal ID to the public base station 13, and then clears the flag.

On the other hand, in the public base station 13, step SH254 determines whether the contract information has been received from the network control station 1 in response to step SH252 sending the terminal ID to the network control station 1. If so, step SH256 notifies the terminal PS1 of the contract information. Thereafter, step SH258 sends a call setup message to the receiver terminal PS2 to call same. In the terminal PS2, the ringer is operated. Then, step SH260 waits for the terminal PS2 to go off the hook.

After performing the initial call signal sending process, the sender terminal PS1 determines at step SH234 whether the contract information has been received. If so, step SH236 writes the received contract information in a predetermined area. When the sender terminal PS1 has contracted for a new communication service, no contract information is stored in the terminal PS1. Thus, the contract information written in the predetermined area is the first one. When existing contract information is renewed, the contract information stored already in the terminal PS1 is renewed by substituting the received contract information therefor.

Thereafter, in the sender terminal PS1, control passes to step SH238, which searches the contract information for a communication service usable at this time and its communication charge. After such service and charge were obtained, step SH240 selects ringing tone information depending on the communication charge. Then, step SH242 waits for the receiver terminal PS2 to go off the hook. At this time, the ringer produces a ringing tone due to the selected ringing tone information, which is a sound depending on the charge system employed at that time; that is, a regular ringing tone if the tome zone is such that only the regular service is available whereas a sound different from the regular one if the tome zone is such that a discounted service is available. Thus, the user can know the communication charge at that time before the telephonic communication starts.

When the sender terminal PS2 goes off the hook, the public base station 13 shifts its control to step SH262, which sends back a call response (or connect) message to the sender terminal PS1. Thus, in the sender terminal PS1, step SH246 starts a telephone call to the receiver PS2 and then, step SH248 places the terminal PS1 in a busy state. When either one of the terminals PS1 and PS2 goes off the hook, step SH250 discounts the appropriate circuit line.

Since the flag for contract information stored in the database 310 of the network control station 1 is not set, excluding when the terminal PS1 first sends a line connection request to the public base station after a new contract is made or directly after the terminal PS1 changed the contents of the contract. Thus, in this case, in the network control station 1, the result of the determination at step SH274 becomes "NO" and no contract information is sent.

As a result, in the public base station 13, the result of the determination at step SH254 becomes "NO", and steps SH258 and subsequent steps 260, 262 perform their corresponding processing operations with step SH256 sending no contract information to the PS1. Similarly, also, in the sender terminal PS1, the result of the determination at step SH234 becomes "NO", and step SH238 and the subsequent steps perform their corresponding processing operations with step SH236 storing/renewing no contract information.

As described above, according to the present embodiment, the contract information in the portable terminals is automatically stored/renewed by calling the portable terminals directly after a new contract is made or directly after the contract is renewed even when any special operations are not performed. The communication between the sender terminal PS1 and the network control station 1 is a calling operation made only once directly after the new contract has been made or directly after the contract is renewed. By another calling operation, the contract information in the portable terminal can be searched, so that the communication charge can be known and the traffic is prevented from increasing.

While in the ninth-twelfth embodiments the radio commination systems have been described, the present invention is not limited to those cases. For example, the present invention is applicable to cable communication systems. In this case, for the positional information, the respective terminals or the network control station contains and controls installed positional information.

According to the particular embodiment, before telephonic communication, a possible communication charge, and the distance between the sender and the receiver or the position of a party can be known from the sender or receiver without increasing the traffic of the communication network. To this end, the existing system may be used as it is.

## Claims

1. A communication terminal (14) for communicating with a different one via a communication network (11), comprising:
calling means (23, 27) for sending the communication network (11) a call signal for requesting connection to the different terminal; and
control information adding means (27, FIG. 3) for adding to the call signal control information which controls the function of the different terminal, whereby said calling means sends the different communication terminal a call signal which includes the control information added by said control information adding means.

2. The communication terminal according to claim 1, further comprising data adding means (step 308, 309, 311 and 313 in FIG. 3) for adding data to the call signal, and wherein said call sending means sends the different communication terminal a call signal which includes the control signal added by said control information adding means and the data added by said data adding means.

3. The communication terminal according to claim 2, further comprising a transceiver communication function (27) to communicate with the different communication terminal without using the communication network as a medium;
the added data comprises data necessary for the transceiver communication (step 308, 309 in FIG. 3); and
the added control information comprises a request for recording information necessary for the transceiver communication (step 308, 309 in FIG. 3).

4. The communication terminal according to claim 1, the added control information comprises a request for determining whether call information of the call signal should be displayed (step 311 in FIG. 3).

5. The communication terminal according to claim 2, wherein the added control information comprises a request for determining whether the added data should be displayed (step 311 in FIG. 3).

6. The communication terminal according to claim 4, wherein the added control information further comprises a password (27 in FIG. 2).

7. The communication terminal according to claim 5, wherein the added control information further comprises a password (27 in FIG. 2).

8. The communication terminal according to claim 4, wherein the added data comprises a password, and the added control information comprises a request for canceling the request for determining whether the call information of the call signal should be displayed (step 706 in FIG. 7).

9. The communication terminal according to claim 5, wherein the added data comprises a password, and the added control information comprises a request for canceling the request for determining whether the call information of the call signal should be displayed (step 706 in FIG. 7).

10. The communication terminal according to claim 1, wherein the added control information comprises a request for converting the call information of the call signal to a tone (step 412, 422 in FIGS. 4 and 5).

11. The communication terminal according to claim 2, the added control information comprises a request for converting the added data to a tone (step 411 in FIG. 4).

12. The communication terminal according to claim 2, wherein the added control information comprises a request for storing the added data in a predetermined area of a memory of the different communication terminal (step 314 in FIG. 3).

13. The communication terminal according to claim 1, wherein the added control information comprises a request for determining whether an answertelephone function of the different communication terminal should be operated (FIG. 10).

14. The communication terminal according to claim 1, wherein the added control information comprises a request for selecting one from a plurality of answer messages provided in an answer telephone function of the different communication terminal (FIG. 10).

15. The communication terminal according to claim 2 wherein the added data comprises an answer message of an answertelephone function, and the added control information comprises a request for changing an answer message of the different communication terminal (FIG. 10).

16. The communication terminal according to claim 2, wherein the added control information comprises a request for sending back an acknowledge signal indicating whether the added data is sent correctly to the different communication terminal (FIG. 11).

17. A communication terminal communicating via a communication network with a different communication terminal, comprising:
means (FIG. 3) for receiving a call signal to which a control signal is added for controlling the function of the first-mentioned communication terminal from the different communication terminal; and
control means (FIG. 4) for controlling the function of the first-mentioned communication terminal on the basis of the control signal added to the received call signal.

18. The communication terminal according to claim 17, wherein the call signal received by said receiving means comprises further data added thereto;
said control means controls the function of the first-mentioned communication terminal on the basis of the control signal and data added to the call signal received by said receiving means (FIGS. 4, 5, 6, 7, 10, 11, 12).

19. The terminal according to claim 18, further comprising a transceiver communication function to communicate with the different terminal without using the communication network as a medium;
the added data comprises information necessary for the transceiver communication; and
the added control information comprises a request for recording information necessary for the transceiver communication; and
said control means is responsive to the recording request to record in the first-mentioned communication terminal the information necessary for the transceiver communication (FIG. 6).

20. The terminal according to claim 17, comprising:
display means (31 in FIG. 2); and wherein the added control information comprises a request for determining whether information of the received call signal should be displayed; and
means for determining whether the call information should be displayed on said display means on the basis of the determining request (step 409 in FIG.4 and FIG. 7).

21. The terminal according to claim 17, comprising:
display means (31 in FIG. 2); and wherein the added control information comprises a request for determining whether the added data should be displayed; and
means for determining whether the added data should be displayed on said display means on the basis of the determining request (step 409 in FIG. 4 and FIG. 7).

22. The communication terminal according to claim 20, wherein the added control information further comprises a password; and comprising:
input means for entering a password (30 in FIG. 2);
said control means permitting the entered password to be displayed on the display means only when the password entered by said input means matches the password of the control information (FIG. 7).

23. The communication terminal according to claim 21, wherein the added control information further comprises a password; and comprising:
input means for entering a password (30 in FIG. 2);
said control means permitting the entered password to be displayed on the display means only when the password entered by said input means matches the password of the control information (FIG. 7).

24. The communication terminal according to claim 21, wherein the added data comprises a password, and the added control information comprises a request for canceling the request for determining whether the call information of the received call signal should be displayed; and
said control means cancels the request for determining whether the information of the received call signal or the added data, on the basis of the canceling request (FIG. 7).

25. The communication terminal according to claim 22, wherein the added data comprises a password, and the added control information comprises a request for canceling the request for determining whether the added data should be displayed; and
said control means cancels the request for determining whether the added data should be displayed, on the basis of the canceling request (FIG. 7).

26. The communication terminal according to claim 17, further comprising data-tone converting means (27 in FIG. 2) for converting data to a tone; and wherein
said added control information comprises a request for converting information of the received call signal to a tone; and
said control means is responsive to the converting request to cause said data-tone converting means to convert the information of the received call signal to a tone (step 412 in FIG. 4).

27. The communication terminal according to claim 18, further comprising data-tone converting means (27 in FIG. 2) for converting data to a tone; and wherein
said added control information comprises a request for converting the added data to a tone; and
said control means is responsive to the converting request to cause said data-tone converting means to convert the added data to a tone (step 412 in FIG. 4).

28. The communication terminal according to claim 18, further comprising a memory for storing data; and wherein
the added control information comprises a request for storing the added data in a predetermined area of said memory; and
said control means is responsive to the storing request to store the added data in the predetermined area of said memory (step 407 in FIG. 4).

29. The communication terminal according to claim 17, further comprising answertelephone means (27 in FIG. 2); and wherein
the added control information comprises a request for determining whether said answertelephone means should be operated; and
said control means is responsive to the determining request to determine whether to operate the answertelephone means should be operated (FIG. 10).

30. The communication terminal according to claim 17, further comprising answertelephone means (27 in FIG. 2)which has a plurality of answer messages; and wherein
the added control information comprises a request for selecting one from the plurality of answer messages had by said answertelephone means; and
said control means is responsive to the selecting request to select one from the plurality of answer messages had by the answertelephone means (FIG. 10).

31. The communication terminal according to claim 18, further comprising: answertelephone means (27 in FIG. 2); and wherein
the added data comprises an answer message to be set in the answertelephone means, and the added control information comprises a request for changing the answer message of said answertelephone means to another;
said control means is responsive to the answer message changing request to set the added answer message as an answer message of said answertelephone means (FIG. 10).

32. The communication receiver terminal according to claim 18, wherein the added control information comprises a request for returning an acknowledge signal representing whether the added data is sent correctly to the different communication terminal; and said control means is responsive to the returning request to return the acknowledge signal to the different communication terminal (FIG. 11).

33. The receiver terminal according to claim 17, comprising storage means (27, 29 in FIG. 2) for storing the added control information.

34. The terminal according to claim 33, comprising display means (31 in FIG. 2) for displaying the control information stored in said storage means.

35. The terminal according to claim 33, wherein said storage means further stores the added data (step 404, 405, 416 in FIG. 4).

36. The terminal according to claim 35, comprising display means for displaying at least one of the control information and data stored in said storage means (FIG. 7).

37. A communication system in which a sender terminal and a receiver terminal are connected via a communication network, wherein a call signal to be sent from the sender terminal to the receiver terminal additionally comprises control information to control the receiver terminal (FIG. 1).

38. The communication system according to claim 37 wherein the call signal further comprises data additionally (FIG. 3).

39. The communication system according to claim 37, wherein the sender and receiver terminals each have a radio transceiver communication without using the communication network as a medium, the data is information necessary for the transceiver communication, and the control information comprises a recording request, on the basis of which the information necessary for the transceiver communication is recorded in the receiver terminal (308, 309 in FIG. 3).

40. The communication system according to claim 37, wherein the control information comprises a request for determining whether the data sent by the sender terminal should be displayed on display means of the receiver terminal, and the receiver terminal comprises means for determining whether the data should be displayed on the display means (step 311 in FIG.3 and step 409, 410 in FIG. 4).

41. The communication system according to claim 40, wherein the receiver terminal stores the data received along with the determining request, and allows the stored data, which is determined as not being displayed on the display means, to be displayed in accordance with a predetermined password inputted by the user of the receiver terminal (30 in FIG. 2).

42. The communication system according to claim 40, wherein the determining request comprises a password, the receiver terminal stores data sent along with the determining request, and allows the stored data, which is determined as not being displayed on the display means, to be displayed on the display means in accordance with a predetermined password inputted by the sender terminal (30 in FIG. 2).

43. The communication system according to claim 37, wherein the receiver terminal comprises data-tone converting means for converting data to a tone, the control information comprises a data-tone converting request, and said data-tone converting means of the receiver terminal converts data sent along with the data-tone converting request to a tone in accordance with the data-tone converting request (step 411, 412 in FIG. 4).

44. The communication system according to claim 37, wherein the receiver terminal comprises a memory for storing data, the control information comprises a request for storing data in a predetermined area of the memory, and the receiver terminal stores the data sent along with the storing request by the sender terminal in the predetermined area of said memory in accordance with the storing request (step 406, 407 in FIG. 4).

45. The communication system according to claim 37, wherein the control information comprises a request for changing an answertelephone mode, and changes the receiver terminal to an answertelephone mode corresponding to data sent along with the changing request by the sender terminal (step 1006, 1009 in FIG. 10).

46. The communication system according to claim 37, wherein the control information comprises a request for switching an answer message in an answertelephone mode, and the receiver terminal is responsive to the switching request to switch an answer message of an answertelephone function of the receiver terminal to an answer message corresponding to the data sent along with the control information by the sender terminal (step 1008 in FIG. 10).

47. The communication system according to claim 46, wherein the answertelephone function of the receiver terminal has a plurality of answer messages and selects one from the plurality of answer messages in accordance with the switching request (step 1008 in FIG. 10).

48. The communication system according to claim 46, wherein the data comprises an answer message, and the receiver is responsive to the switching request to switch the answer message of the receiver terminal to the answer message sent by the sender terminal (step 1008 in FIG. 10).

49. The communication system according to claim 45, wherein the data is for specifying the sender terminal, and the receiver terminal specifies the sender terminal with the data, and switches the answertelephone mode depending on the specified sender terminal (step 1008 in FIG. 10).

50. The communication system according to claim 45, wherein the data is for specifying the sender terminal, and the receiver terminal specifies the sender terminal with the data and switches the answertelephone answer message depending on the specified sender terminal (step 1008 in FIG. 10).

51. The communication system according to claim 37, wherein the control information comprises an automatic answer request (FIG. 11), the receiver terminal is responsive to the automatic answer request to send the sender terminal acknowledge information representing that the data is received correctly along with the control signal (step 1205, 1208 in FIG. 12).

52. The communication system according to claim 51, wherein the acknowledge information representing that the data is received correctly is sent to the sender terminal after the response of the receiver terminal (FIG. 12).

53. The communication system according to claim 51, wherein the acknowledge information representing that the data is correctly sent to the receiver is received by the sender terminal after the response of the receiver terminal (FIG. 12).

54. A communication system in which a sender communication terminal calls a particular communication terminal from a group of a personal base station and a plurality of communication terminals via the base station terminal, wherein
when the sender communication terminal calls the particular communication terminal, the sender terminal sends the base station a call signal which includes an added public number of the particular communication terminal (step S16, S18 in FIG. 18); and
the base station calls the particular communication terminal on the basis of its public number (step S34, S36 in FIG. 19).

55. The communication system according to claim 54, wherein the base station has an answertelephone function for storing a message from a sender communication terminal, and is responsive to the sender communication terminal calling a particular one of the plurality of communication terminals to add identification information which identifies the called communication terminal to the message from the sender communication terminal and store a resulting message (step S54 in FIG. 23).

56. The communication system according to claim 55, wherein the base station contains a plurality of public numbers and a corresponding plurality of answer messages each for a respective one of the plurality of communication terminals recorded in the base station (FIG. 21), and is responsive to a particular one of the communication terminals being called by the sender terminal to send an answer message for the called communication terminal to the sender terminal (step S54 in FIG. 23).

57. The communication system according to claim 56, wherein the base station is responsive to a particular communication terminal giving the base station an instruction to reproduce a stored message to reproduce only a message to which information to identify the communication terminal which gave the instruction to reproduce a stored message is added (FIG. 24).

58. A communication terminal (PS in FIG. 14) for making telephonic communication with a particular communication terminal of a group of at least a personal base station (3 in FIG. 14) and a plurality of second communication terminals (PS1, PS2, PS3 in FIG. 14) via the base station, wherein the sender terminal comprises:
specifying means (step S16, S18 in FIG. 18) for specifying public numbers of the personal base station (3 in FIG. 14) and a particular second communication terminal (PS1 ,PS2 or PS3 in FIG. 14) when the first-mentioned communication terminal calls the particular second communication terminal (PS1, PS2 or PS3)via the personal base station (3 in FIG. 14); and
calling means (step S22 in FIG. 18) for adding the public number (step S16 in FIG. 18) of the particular second communication terminal specified by said specifying means to a call signal and for dialing the public number (step S22 in FIG. 18) of the base station to send the base station the call signal to which the public number of the particular second communication terminal is added, when the particular second communication terminal is to be called.

59. The communication terminal according to claim 58, comprising a plurality of storage means (FIG. 17) for storing the public numbers of base stations and a plurality of public numbers of second communication terminals in corresponding relationship; and wherein
said specifying means (step S12, S14 in FIG. 18) is responsible to specifying the public number of a second communication terminal to read the public number of that second communication terminal and a public number of a base station corresponding to the public number of that second communication terminal from said storage means.

60. A personal base station connected along with a sender communication terminal to a communication network and having a plurality of communication terminals recorded in the base station, comprising:
a communication terminal list (FIG. 16) in which a plurality of public numbers for a corresponding plurality of communication terminals, and a plurality of items of identification information to identify the corresponding plurality of communication terminals are recorded in the base station; and
call means (step S36 in FIG. 19) for calling a particular communication terminal in accordance with identification information for the particular communication terminal recorded in the communication terminal list corresponding to the public number of the particular communication terminal sent by a sender communication terminal.

61. The base station according to claim 60, comprising:
an answertelephone function (27 in FIG. 15) for storing a message from the sender terminal (PS);
storage means (29 in FIG. 15 and FIG. 22) for storing the message; and
storage control means (step S62 in FIG. 23) responsive to the sender communication terminal calling a particular one of the plurality of communication terminals for adding identification information to identify the called particular communication terminal to the message from the sender communication terminal and for storing a resulting message in said storage means.

62. The base station according to claim 61, comprising:
an answer message list (FIG. 21) in which a plurality of public numbers each for a respective one of the plurality of communication terminals, and a plurality of answer messages each for a respective one of the plurality of communication terminals recorded in the base station are recorded; and
answer message sending means (step S54 in FIG. 23) responsive to the sender communication terminal calling a particular one of the plurality of communication terminals for sending the sender communication terminal an answer message for the particular communication terminal.

63. The base station according to claim 61, comprising:
reproducing means (FIG. 24) responsive to a communication terminal giving said base station an instruction to reproduce a message stored in said storage means for reproducing only a message which is stored along with the identification information for a communication terminal which matches the identification information for the communication terminal which gave the instruction.

64. The base station according to claim 62, comprising:
reproducing means (FIG. 24) responsive to a communication terminal giving said base station an instruction to reproduce a message stored in said storage means for reproducing only a message which is stored along with the identification information for a communication terminal which matches the identification information for the communication terminal which gave the instruction.

65. A communication system comprising a communication network and a plurality of communication terminals connected to the communication network, the communication terminals including a sender terminal and a receiver terminal, wherein
the sender terminal sends/receives data to/from the receiver terminal after the sender terminal calls the receiver terminal and before the receiver terminal goes off the hook (FIG. 27).

66. A communication terminal comprising:
receiving means (step SB3 in FIG. 27) for receiving a message from a sender communication terminal after the first-mentioned communication terminal is called by the sender communication terminal and before the first-mentioned communication terminal goes off the hook;
reporting means (step SB4 in FIG. 27) for reporting the message received by said receiving means;
input means (step SB6 in FIG. 27) for inputting a message to the first-mentioned communication terminal; and
sending means (step SB7 in FIG. 27) for sending the message input by said input means to the sender communication terminal after said reporting means reports the received message and between the time when the first-mentioned communication terminal is called by the sender communication terminal and the time when the first-mentioned communication terminal goes off the hook.

67. The communication terminal according to claim 66, comprising sending means responsive to said first-mentioned communication terminal being called by the sender communication terminal in a set answertelephone mode for sending a predetermined message to the sender communication terminal before the first-mentioned communication terminal goes off the hook (FIG. 28).

68. The communication terminal according to claim 67, comprising:
receiving means (step SD5 in FIG. 28) responsive to the predetermined message being sent by said sending means for receiving a message from the sender communication terminal between the time when the communication terminal is called from the sender communication terminal and the time when the first-mentioned communication terminal goes off the hook; and
storage means (step SD6 in FIG. 28) for storing the message received by said receiving means.

69. A communication terminal for communicating via a communication network with a different communication terminal, comprising:
sending means (FIG. 31) for sending the different communication terminal a call setup message which contains added musical note data which specifies the status of a ringing tone.

70. The communication terminal according to claim 69, comprising:
receiving means (FIG. 32) for generating a ringing tone depending on added musical note data contained in a call setup message from the different communication terminal.

71. The communication terminal according to claim 69, wherein the musical note data represents the degree of urgency of a business matter to be sent and a feeling of a user of the first-mentioned communication terminal (FIG. 30).

72. The communication terminal according to claim 69, wherein said sending means has a plurality of musical note pattern data each of which represents the degree of urgency of a business matter to be sent or a feeling of a user of the communication terminal (FIG. 30), and comprising means (step SE2, SE3 in FIG. 31) for selecting any one from the plurality of musical tone pattern data in accordance with a user's operation and for adding the selected musical tone pattern data to the call setup message.

73. The communication terminal according to claim 69, wherein said sending means has a plurality of musical note pattern data each of which represents the degree of urgency of a business matter to be sent or a feeling of a user of the first-mentioned communication terminal (FIG. 30), and comprising means (step SE2, SE3 in FIG. 31) for specifying and editing any one of the plurality of musical tone data in accordance with a user's operation.

74. A communication system in which sender and receiver terminals are connected to a communication network for communicating purposes, wherein
the sender terminal adds data and a code for identify a type of the data to a call setup signal, and sends a resulting call setup signal to the receiver terminal (FIGS. 34, 35); and
the receiver terminal receives the sent call setup signal, converts the added data to second data on the basis of the added code, and outputs the second data (FIGS. 36, 37).

75. The communication system according to claim 74, wherein the data and code added to the call setup signal are added to a subaddress specifying at least the sender or receiver terminal (step SG46 in FIG. 35).

76. The communication system according to claim 74, wherein the data comprises at least one of a sender number (step SG12, SG14 in FIG. 34), a numeral message (step SG22 in FIG. 34), a free word message (step SG26 in FIG. 34), a fixed message (step SG34 in FIG. 35), and a pictograph message (step SG42 in FIG. 35).

77. A digital communication terminal comprising:
input means (30 in FIG. 33) for entering a message to be sent to a receiver terminal;
call setup signal producing means (27 in FIG. 33) for adding to a call setup signal the message entered by said input means, and a code to identify a type of the message;
call specifying means (20 or 30 in FIG. 33) for specifying a call to the receiver terminal; and
call means (27 in FIG. 33) responsive to said call specifying means specifying the call for sending the receiver terminal the call setup signal produced by said call setup signal producing means.

78. A digital communication terminal comprising:
receiving means (27 in FIG. 33) for receiving from a sender terminal a call setup signal to which a message and a code to identify a type of the message are added; and
message reproducing means (16, 17, 18 in FIG. 33) for reproducing the message on the basis of the code to identify the type of the message received by said receiving means.

79. The communication system according to claim 77, wherein the data comprises at least one of a sender number (step SG64 in FIG. 36), a numeral message (step SG60 in FIG. 36), a free word message (step SG70 in FIG. 36), a fixed message (step SG70 in FIG. 36), and a pictograph message (step SG70 in FIG. 36).

80. The communication system according to claim 78, wherein the data comprises at least one of a sender number (step SG64 in FIG. 36), a numeral message (step SG60 in FIG. 36), a free word message (step SG70 in FIG. 36), a fixed message (step SG70 in FIG. 36), and a pictograph message (step SG70 in FIG. 36).

81. The digital communication terminal according to claim 78, further comprising a database which contains a plurality of at least sender numbers and their corresponding names; and
check means responsive to the message received by said receiving means being a sender number for checking this sender number for the sender numbers contained in said database,
said message reproducing means reproduces the received sender number and the corresponding sender name on the basis of the result of the checking by said check means.

82. A communication terminal comprising:
positional information getting means (27 in FIG. 39) for getting positional information for a second communication terminal before the first-mentioned communication terminal starts communication with the second communication terminal;
communication charge information getting means (27 in FIG. 39) for getting information on a communication charge costing for communication with the second communication terminal on the basis of the positional information gotten by said positional information getting means; and
reporting means (27 in FIG. 39) for recognizably reporting the communication charge gotten by said communication charge getting means to a user of the first-mentioned communication terminal.

83. The communication terminal according to claim 82, wherein the positional information comprises an inherent identification number allocated to a base station in which an area where the second communication terminal moves is recorded (CS-ID in FIG. 38).

84. The communication terminal according to claim 83, further comprising distance information getting means (step SH18 in FIG. 44) for getting information on the distance between the first-mentioned and second communication terminals on the basis of the positional information gotten by said positional information getting means; and
said reporting means reports the distance between the first-mentioned and second communication terminals to the user of the first-mentioned communication terminal (step SH20 in FIG. 44).

85. The communication terminal according to claim 82, further comprising seat name getting means (step SH18 in FIG. 44) for getting the name of the seat of the second communication terminal on the basis of the positional information gotten by said positional information getting means; and wherein
said reporting means reports the communication charge and the seat name of the second communication terminal to the user of the first-mentioned communication terminal (step SH20 in FIG. 44).

86. The communication terminal according to claim 82, wherein the second communication terminal comprises a sender communication terminal (14(PS1) in FIG. 38).

87. The communication terminal according to claim 83, wherein the second communication terminal comprises a sender communication terminal (14(PS1) in FIG. 38).

88. The communication terminal according to claim 84, wherein the second communication terminal comprises a sender communication terminal (14(PS1) in FIG. 38).

89. The communication terminal according to claim 85, wherein the second communication terminal comprises a sender communication terminal (14(PS1) in FIG. 38).

90. The communication terminal according to claim 82, wherein the second communication terminal comprises a receiver communication terminal (14(PS2) in FIG. 38).

91. The communication terminal according to claim 83, wherein the second communication terminal comprises a receiver communication terminal (14(PS2) in FIG. 38).

92. The communication terminal according to claim 84, wherein the second communication terminal comprises a receiver communication terminal (14(PS2) in FIG. 38).

93. The communication terminal according to claim 85, wherein the second communication terminal comprises a receiver communication terminal (14(PS2) in FIG. 38).

94. A communication system in which a sender communication terminal and a receiver communication terminal are connected to a communication network, wherein
the sender communication terminal adds a positional information request to a receiver number of the receiver communication terminal and sends a resulting call signal to the communication network (step SH104 in FIG. 49);
the receiver communication terminal is responsive to receiving the positional information request via the communication network to send back to the communication network positional information representing the position of the receiver communication terminal (step SH106 in FIG. 49); and
the sender communication terminal calculates a communication charge costing for communication with the receiver communication terminal on the basis of the positional information of the receiver communication terminal and recognizably reports to the user of the sender communication terminal of the communication charge (step SH108 in FIG. 49).

95. The communication system according to claim 94, wherein the sender communication terminal displays the communication charge (step SH110 in FIG. 49).

96. The communication system according to claim 94, wherein the positional information request is included in one of a subaddress of a call setup message and a facility message (step SH104 in FIG. 49).

97. A communication system comprising a sender communication terminal and a receiver communication terminal connected to a communication network, wherein
the sender communication terminal sends to the communication network a call signal including a receiver number of the receiver communication terminal (step SH140 in FIG. 50);
the receiver communication terminal is responsive to a call signal incoming from the communication network to send a positional information request to the sender communication terminal (step SH162 in FIG. 50);
the sender communication terminal is responsive to the positional information request received via the communication network to send back positional information representing the position of the sender communication terminal to the receiver communication terminal (step SH146 in FIG. 50); and
said receiver communication terminal calculates a communication charge costing for communication with the sender communication terminal on the basis of the positional information for the sender communication terminal and reports the calculated communication charge recognizably to the sender communication terminal (step SH166 in FIG. 50).

98. The communication system according to claim 97, wherein the receiver communication terminal displays the communication charge (step SH168 in FIG. 50).

99. The communication system according to claim 97, wherein the positional information request is contained in a facility message (step SH162 in FIG. 50).

100. A communication method between communication terminals connected to a communication network, comprising the steps:
getting positional information for a second communication terminal before a communication terminal starts communication with a second communication terminal (step SH106 in FIG. 49 and step SH164 in FIG. 50); and
recognizably reporting information on a communication charge costing for communication with the second communication terminal on the basis of the gotten positional information gotten (step SH110 in FIG. 49 and step SH168 in FIG. 50).

101. A communication system comprising a network control device which controls a communication network, and a sender communication terminal and a receiver communication terminal connected to the communication network, wherein
the sender communication terminal sends the communication network a call signal which includes a receiver number of the receiver communication terminal and a positional information request added to the receiver number (step SH104 in FIG. 49);
the network control device is responsive to the call signal from the sender communication terminal to retrieve positional information representing the position of the receiver communication terminal on the basis of an identification number which identifies the receiver communication terminal, and sends back the retrieved positional information to the sender communication terminal (step SH124, SH126 in FIG.49); and
the sender communication terminal calculates a communication charge costing for communication with the receiver communication terminal on the basis of the positional information representing the position of the receiver communication terminal from the network control device, and reports the calculated communication charge recognizably to the user of the sender communication terminal (step SH108, SH110 in FIG.49).

102. A communication system comprising a network control device which controls a communication network, and a sender communication terminal and a receiver communication terminal connected to the communication network, wherein
the sender communication terminal sends the communication network a call signal which includes a receiver number of the receiver communication terminal (step SH140 in FIG. 50);
the receiver communication terminal is responsive to a call signal from the network to send a positional information request to the network control device (step SH162 in FIG. 50);
the network control device is responsive to the positional information request from the receiver communication terminal to retrieve positional information representing the position of the sender communication terminal on the basis of an identification number which identifies the sender communication terminal, and sends back the retrieved positional information to the receiver communication terminal (step SH144, SH146 in FIG. 50); and
the receiver communication terminal calculates a communication charge costing for communication with the sender communication terminal on the basis of the positional information representing the position of the sender communication terminal from the network control device, and reports the calculated communication charge recognizably to the user of the receiver communication terminal (step SH166, SH168 in FIG. 50).

103. A communication system comprising a sender communication terminal (14(PS1) in FIG. 52) and a receiver communication terminal (14(PS2) in FIG. 52) connected to a communication network (11 in FIG. 52), a network control device (1 in FIG. 52) for controlling information about the sender and receiver communication terminals, and base stations (13 in FIG. 52) which connect the sender and receiver communication terminals to the communication network, the communication system providing a service whose communication charge varies depending on a time zone, wherein
the sender communication terminal sends the communication network a call signal containing a charge information request added to a receiver number of the receiver communication terminal (step SH184 in FIG. 54);
the base station is responsive to the call signal from the sender communication terminal to send an identification number to identify the sender communication terminal to the network control device (step SH204 in FIG. 54);
the network control device searches contract information representing the contents of a service for which the network control device has contracted with a user of the sender communication terminal, on the basis of the identification number of the sender communication terminal, to thereby get information on a communication charge costing for a service which is available for the sender communication terminal in the present time zone, and sends back information on the communication charge to the base station (FIG. 55);
the base station selects ringing tone data corresponding to information on the communication charge sent back by the network control station, and sends the ringing tone data to the sender communication terminal (step SH208 in FIG. 54); and
the sender communication terminal produces a ringing tone on the basis of the ringing tone data from the base station, and waits for a response of the receiver communication terminal (step SH186 in FIG. 54).

104. The communication system according to claim 103, wherein the sender communication terminal holds contract information representing the contents of the service for which the sender communication terminal has contracted with the network control device, searches the contract information in a regular calling process to get information on a communication charge costing for a service available in the present time zone, produces a ringing tone depending on the communication charge, and waits for a response of the receiver communication terminal (FIG. 56).

105. The communication system according to claim 104, wherein the regular calling operation is performed excluding directly after making a new contract or renewal of the contract (step SH188 in FIG. 54).

106. The communication system according to claim 104, wherein when the calling operation of the sender communication terminal is performed directly after making a new contract or renewal of the contract, the network control device searches contract information representing the contents of the service for which the network control device has contracted with the user of the communication terminal, on the basis of the identification number of the sender communication terminal, to get the contract information for the sender communication terminal, and sends back the gotten contract information to the base station; and
the sender communication terminal renews the contract information which the sender communication terminal holds on the basis of the contract information received via the base station.

107. A program recording medium having computer readable program codes which are used to extract a desired record from a plurality of stored records, comprising:
a computer readable program codes means for sending the communication network a call signal for requesting connection to the different terminal (step 301 in FIG. 3);
a computer readable program codes means for entering to the call signal a transceiver information which communicate peer-to-peer with the different terminal (step 306, 308, 309 in FIG. 3); and
a computer readable program codes means for entering to the call signal a control information which records the transceiver information (step 308, 309 in FIG. 3).

108. A program recording medium having computer readable program codes which are used to extract a desired record from a plurality of stored records, comprising:
a computer readable program codes means for sending the communication network a call signal for requesting connection to the different terminal (step 301 in FIG. 3);
a computer readable program codes means for entering to the call signal a data to be displayed on the display means of the different terminal ; and
a computer readable program codes means for entering to the call signal a control information which controls the data to be displayed or not (step 311 in FIG. 3).

109. A program recording medium having computer readable program codes which are used to extract a desired record from a plurality of stored records, comprising:
a computer readable program codes means for sending the communication network a call signal for requesting connection to the different terminal (step 301 in FIG. 3);
a computer readable program codes means for entering to the call signal a data which identifies caller ; and
a computer readable program codes means for entering to the call signal a control information which transforms the data to a ring tone (step 313 in FIG. 3).

110. A program recording medium having computer readable program codes which are used to extract a desired record from a plurality of stored records, comprising:
a computer readable program codes means for sending the communication network a call signal for requesting connection to the different terminal (step 301 in FIG. 3);
a computer readable program codes means for entering to the call signal a data ; and
a computer readable program codes means for entering to the call signal a control information which records the data in a predetermined memory area (step 314 in FIG. 3).

111. A program recording medium having computer readable program codes which are used to extract a desired record from a plurality of stored records, comprising:
a computer readable program codes means for sending the communication network a call signal for requesting connection to the different terminal;
a computer readable program codes means for entering to the call signal a control information which controls a answertelphone function to be operated of not (FIG. 8).

112. A program recording medium having computer readable program codes which are used to extract a desired record from a plurality of stored records, comprising:
a computer readable program codes means for sending the communication network a call signal for requesting connection to the different terminal (step SE4 in FIG. 31);
a computer readable program codes means for entering to the call signal a musical note data (step SE3 in FIG. 31); and
a computer readable program codes means for entering to the call signal a control information which changes the musical note data into a ring tone (step SE3 in FIG. 31).

113. A program recording medium having computer readable program codes which are used to extract a desired record from a plurality of stored records, comprising:
a computer readable program codes means for sending the communication network a call signal for requesting connection to the different terminal (FIGS. 34, 35);
a computer readable program codes means for entering to the call signal the data indicating a message (step SG14, SG26, SG34, SG42); and
a computer readable program codes means for entering to the call signal a control information indicating a form to transform the data into a message (step SG16, SG28, SG36, SG44).

114. A program recording medium having computer readable program codes which are used to extract a desired record from a plurality of stored records, comprising:
a computer readable program codes means for receiving a call signal for requesting connection to the different terminal from communication network (step 401 in FIG. 4);
a computer readable program codes means, when the control information indicating 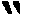 transceiver entry*"* is extracted from the call signal, for recording the data as a transceiver information which communicate peer-to-peer with different terminal (FIG. 6).

115. A program recording medium having computer readable program codes which are used to extract a desired record from a plurality of stored records, comprising:
a computer readable program codes means for receiving a call signal for requesting connection to the different terminal from communication network (step 401 in FIG. 4);
a computer readable program codes means, when the control information indicating 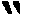 ringing tone change*"* is extracted from the call signal, for converting the data to a musical tone to output a ringing tone (step 411, 412 in FIG. 4).

116. A program recording medium having computer readable program codes which are used to extract a desired record from a plurality of stored records, comprising:
a computer readable program codes means for receiving a call signal for requesting connection to the different terminal from communication network (step 401 in FIG. 4);
a computer readable program codes means, when the control information indicating 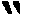 data storing*"* is extracted from the call signal, for storing the data in the predetermined area (step 406, 407 in FIG. 4).

117. A program recording medium having computer readable program codes which are used to extract a desired record from a plurality of stored records, comprising:
a computer readable program codes means for receiving a call signal for requesting connection to the different terminal from communication network (step 401 in FIG. 4);
a computer readable program codes means, when the control information indicating 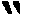 information cover*"* is extracted from the call signal, for not displaying the data on the display means (step 408, 409 in FIG. 4).

118. A program recording medium having computer readable program codes which are used to extract a desired record from a plurality of stored records, comprising:
a computer readable program codes means for receiving a call signal for requesting connection to the different terminal from communication network (FIG. 12);
a computer readable program codes means, when the control information indicating 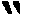 receipt notice*"* is extracted from the call signal, for outputting receipt notice to the sender terminal (step 1205, 1208 in FIG. 12).

119. A program recording medium having computer readable program codes which are used to extract a desired record from a plurality of stored records, comprising:
a computer readable program codes means for receiving a call signal for requesting connection to the different terminal from communication network (FIG. 10);
a computer readable program codes means, when the control information indicating 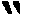 automatic response control*"* is extracted from the call signal, for controlling automatic response function (step 1006, 1009 in FIG. 10).

120. A program recording medium having computer readable program codes which are used to extract a desired record from a plurality of stored records, comprising:
a computer readable program codes means for receiving a call signal for requesting connection to the different terminal from communication network (FIG. 19);
a computer readable program codes means, when a public number of the terminal itself is found among subaddress in the call signal, for calling only the corresponding terminal (step S34, S36 in FIG. 19).

121. A program recording medium having computer readable program codes which are used to extract a desired record from a plurality of stored records, comprising:
a computer readable program codes means for receiving a call signal for requesting connection to the different terminal from communication network (FIG. 32);
a computer readable program codes means, when a musical note data is extracted from the call signal, for outputting musical note as a ringing tone (step SF2 in FIG. 32).

122. A program recording medium having computer readable program codes which are used to extract a desired record from a plurality of stored records, comprising:
a computer readable program codes means for receiving a call signal for requesting connection to the different terminal from communication network (FIG. 36);
a computer readable program codes means, when the control information indicating 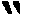 character converting method*"* is extracted from the call signal, for converting and outputting the data by means of the corresponding converting method (step SG66, SG72 in FIGS.36, 37).

123. A program recording medium having computer readable program codes which are used to extract a desired record from a plurality of stored records, comprising:
a computer readable program codes means for receiving a call signal for requesting connection to the different terminal from communication network (FIG. 4);
a computer readable program codes means for extracting and storing sender information, control information and the data as receipt record (step 404, 405 in FIG. 4).

124. A program recording medium having computer readable program codes which are used to extract a desired record from a plurality of stored records, comprising:
a computer readable program codes means for sending the communication network a call signal for requesting connection to the different terminal (step SH12 in FIG. 44);
a computer readable program codes means for entering a request information for requesting a positional information of the different terminal (step SH14 in FIG. 44);
a computer readable program codes means for receiving the positional information which is sending in response to the request information (step SH16 in FIG. 44);
a computer readable program codes means for obtaining a positional information of terminal itself (step SH18 in FIG. 44);
a computer readable program codes means for performing operation to obtain distance from the positional information of itself and the positional information of the different terminal (step SH18 in FIG. 44); and
a computer readable program codes means for supplying the obtained distance to display unit (step SH20 in FIG. 44).

125. A program recording medium having computer readable program codes which are used to extract a desired record from a plurality of stored records, comprising:
a computer readable program codes means for sending the communication network a call signal for requesting connection to the different terminal (step SA3 in FIG. 27);
a computer readable program codes means for sending the message data by means of control signal before the communication terminal goes off the hook (step SA5 in FIG. 27);
a computer readable program codes means for receiving the message data by means of control signal before the communication terminal goes off the hook (step SA6 in FIG. 27);
a computer readable program codes means for outputting the sent and/or received message data into the display unit (step SA7 in FIG.27).

126. A program recording medium having computer readable program codes which are used to extract a desired record from a plurality of stored records, comprising:
a computer readable program codes means for sending the communication network a call signal for requesting connection to the different terminal (step SC3 in FIG. 28);
a computer readable program codes means for receiving the response message data by means of control signal before the communication terminal goes off the hook (step SC4 in FIG. 28);
a computer readable program codes means for outputting the received response message data into the display unit (step SC5 in FIG. 28);
a computer readable program codes means for inputting the message data responding to the response message (step SC6 in FIG. 28); and
a computer readable program codes means for sending the message data which was input before the communication terminal goes off the hook, by means of control signal (step SC7 in FIG. 28).

127. A program recording medium having computer readable program codes which are used to extract a desired record from a plurality of stored records, comprising:
a computer readable program codes means, when receiving while the automatic response is setup, for sending the response message data by means of control signal before the communication terminal goes off the hook (step SD4 in FIG. 28);
a computer readable program codes means for receiving message data which was sent responding to the response message data before the communication terminal goes off the hook step SD5 in FIG. 28); and
a computer readable program codes means for storing the received message data before the communication terminal goes off the hook (step SD6 in FIG. 28).

128. A program recording medium having computer readable program codes which are used to extract a desired record from a plurality of stored records, comprising:
a computer readable program codes means for sending the communication network a call signal for requesting connection to the different terminal (step SH182 in FIG. 54);
a computer readable program codes means for receiving a ringing tone which corresponds to the information on the communication charge (step SH186 in FIG. 54);
a computer readable program codes means for outputting the ringing tone which corresponds to the received information on the communication charge into the speaker unit (step SH186 in FIG. 54).

129. A program recording medium having computer readable program codes which are used to extract a desired record from a plurality of stored records, comprising:
a computer readable program codes means for sending and/or receiving the communication network a call signal for requesting connection to the different terminal (step SH232 in FIG. 60);
a computer readable program codes means for receiving the information on the communication charge (step SH234 in FIG. 60);
a computer readable program codes means for selecting tone data on the basis of the received information on the communication charge (step SH240 in FIG. 60); and
a computer readable program codes means for outputting into the informing device the data corresponding to the selected tone data on the basis of the information on the communication charge (step 242 in FIG. 60).
